(19) Europäisches Patentamt
European Patent Office
Office européen des brevets

(11) **EP 4 644 462 A1**

(12) **EUROPEAN PATENT APPLICATION**
published in accordance with Art. 153(4) EPC

(43) Date of publication:
**05.11.2025 Bulletin 2025/45**

(21) Application number: **23912322.7**

(22) Date of filing: **28.12.2023**

(51) International Patent Classification (IPC):
***C08G 64/02*** *(2006.01)* ***C08G 18/00*** *(2006.01)*
***C08G 18/44*** *(2006.01)* ***D06N 3/14*** *(2006.01)*

(52) Cooperative Patent Classification (CPC):
**C08G 18/00; C08G 18/44; C08G 64/02; D06N 3/14**

(86) International application number:
**PCT/JP2023/047292**

(87) International publication number:
**WO 2024/143545 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211751**

(71) Applicant: **Asahi Kasei Kabushiki Kaisha**
**Tokyo 1000006 (JP)**

(72) Inventors:
- **HOSHINO, Eriko**
**Tokyo 100-0006 (JP)**
- **SENDA, Kosuke**
**Tokyo 100-0006 (JP)**

(74) Representative: **Strehl & Partner mbB**
**Maximilianstrasse 54**
**80538 München (DE)**

(54) **OXYALKYLENE-STRUCTURE-CONTAINING POLYCARBONATE POLYOL COMPOSITION**

(57) An oxyalkylene structure-containing polycarbonate polyol composition comprising a structural unit represented by the following formula (A), a structural unit represented by the following formula (B), and a structural unit represented by the following formula (C), wherein the oxyalkylene structure-containing polycarbonate polyol composition comprises 0.01 to 10% by mass of a compound represented by the following formula (D), and a mass proportion ((D)/(A)) of the compound represented by the following formula (D) to the structural unit represented by the following formula (A) is 0.01 to 20%:

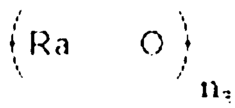
・・・(A)

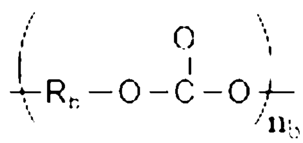
・・・(B)

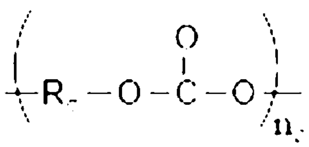
・・・(C)

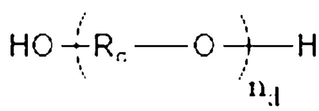
・・・(D)

EP 4 644 462 A1

## Description

### Technical Field

The present invention relates to an oxyalkylene structure-containing polycarbonate polyol composition.

### Background Art

Polyurethane resins have heretofore been used in a wide range of fields such as synthetic leather, artificial leather, adhesives, coating materials for furniture, and coating materials for automobiles. Of starting materials of the polyurethane resins, polyether, polyester, and polycarbonate are used as polyol components to be reacted with isocyanate. However, in recent years, there has been a growing demand for the resistance, such as heat resistance, weather resistance, hydrolysis resistance, solvent resistance, sunscreen resistance, or scratch resistance, of polyurethane resins.

According to Non-Patent Document 1, in general, polyether polyol as a polyol component has low viscosity.

Polytetramethylene ether glycol (hereinafter, also abbreviated to "PTMG"), which is polyether polyol, has high crystallinity. Hence, polyurethane obtained through the reaction of PTMG with isocyanates exerts excellent abrasion resistance, hydrolysis resistance, and tear resistance. By exploiting such characteristics, for example, Patent Document 1 discloses polyether polycarbonate diol comprising polytetramethylene ether glycol bonded to a carbonate group. For example, Patent Document 2 discloses polyether polycarbonate diol comprising polytetramethylene ether glycol and a long-chain dihydroxy compound linked through a carbonate group.

### List of Prior Art Documents

### Patent Document

Patent Document 1: Japanese Patent Laid-Open No. 2002-256069

Patent Document 2: Japanese Patent Laid-Open No. 2022-120570

### Non-Patent Document

Non-Patent Document 1: "Case Studies of Polyurethane Material Selection, Structure Control and Modification" published by Technical Information Institute Co., Ltd., 1st edition issued in December 2014, pp. 51-62

### Summary of Invention

### Problems to be Solved by Invention

In recent years, environment-responsive polyurethane has been proposed, and reduction in amounts of organic solvents used has been demanded. In general, lower polyol viscosity tends to decrease viscosity when the polyol is made into polyurethane. The viscosity of a prepolymer in a method for producing polyurethane, called prepolymer method, is considered to have large influence without a solvent or under conditions of reduction in amounts of organic solvents. Particularly, synthetic leathers for automotive purposes are required to be environment-responsive and also to have high durability.

As described in Non-Patent Document 1, since polyether polyol has low viscosity, polyurethane obtained using polyether polyol is reportedly excellent in flexibility and hydrolysis resistance but inferior in heat resistance or weather resistance. Polyurethane obtained using polyester polyol is inferior in hydrolysis resistance, though heat resistance and weather resistance are improved. By contrast, polyurethane obtained using polycarbonate polyol has the best tough grade in terms of durability such as heat resistance, chemical resistance, and hydrolysis resistance but has a high viscosity and is susceptible to improvement in handleability. Polyether polycarbonate diol disclosed in Patent Document 1 or 2 tends to have lower viscosity but is still susceptible to improvement in durability.

Accordingly, a first object of the present invention is to provide an oxyalkylene structure-containing polycarbonate polyol composition that suppresses elevation in prepolymer viscosity at the time of polyurethane production and is excellent in balance between flexibility and durability. A second object of the present invention is to provide an oxyalkylene structure-containing polycarbonate polyol composition that suppresses elevation in prepolymer viscosity at the time of

polyurethane production, is excellent in balance between flexibility and durability, and further, is excellent in quality stability of long-term storage.

**Means for Solving Problems**

The present inventors have conducted diligent studies to attain the objects and consequently completed the present invention by finding that polycarbonate polyol having a specific structure is characterized by suppressing elevation in prepolymer viscosity at the time of polyurethane production and being excellent in balance between flexibility and durability, and by finding that polycarbonate polyol having another specific structure is characterized by suppressing elevation in prepolymer viscosity at the time of polyurethane production, being excellent in balance between flexibility and durability, and further, being excellent in quality stability of long-term storage.

Specifically, the present invention relates to the following.

[1] An oxyalkylene structure-containing polycarbonate polyol composition comprising a structural unit represented by the following formula (A), a structural unit represented by the following formula (B), and a structural unit represented by the following formula (C), wherein

the oxyalkylene structure-containing polycarbonate polyol composition comprises 0.01 to 10% by mass of a compound represented by the following formula (D), and

a mass proportion ((D)/(A)) of the compound represented by the following formula (D) to the structural unit represented by the following formula (A) is 0.01 to 20%:

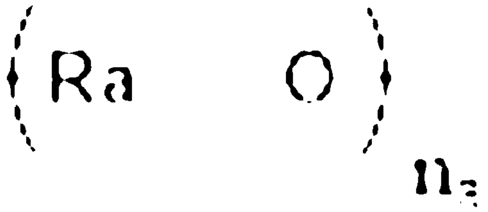

• • • (A)

wherein $R_a$ represents a divalent hydrocarbon group having 2 to 20 carbon atoms, the hydrocarbon group optionally having a hetero atom, $n_a$ is an integer of 2 to 40, and $R_a$ in plural are the same as or different from each other,

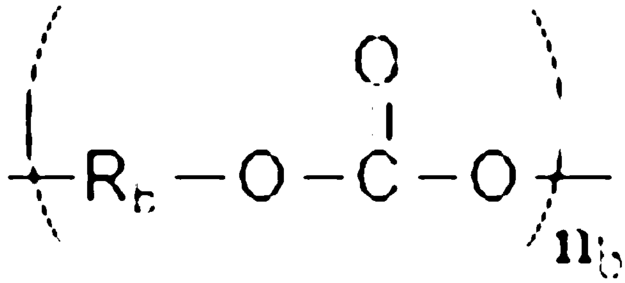

• • • (B)

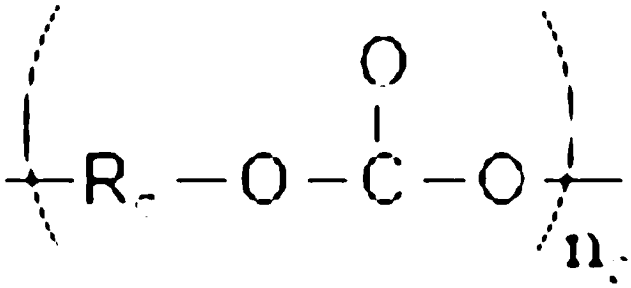

• • • (C)

wherein in the formula (B), $R_b$ represents a divalent hydrocarbon group having 2 to 20 carbon atoms, $n_b$ is any integer, and $R_b$ in plural are the same as or different from each other; and in the formula (C), $R_c$ is different from $R_b$ and represents a divalent hydrocarbon group having 3 to 20 carbon atoms or represents a divalent hydrocarbon group having 3 to 20 carbon atoms and having an alicyclic structure or a heterocyclic structure, the hydrocarbon group optionally having a hetero atom, $n_c$ is an integer of 0 to 50, and $R_c$ in plural are the same as or different from each other,

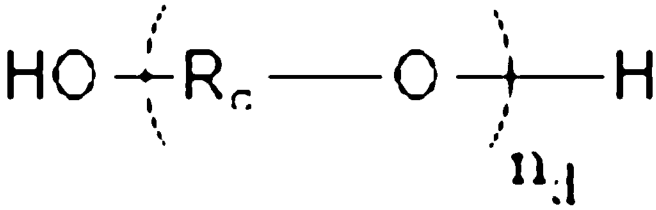

• • • (D)

wherein $R_d$ represents a divalent hydrocarbon group having 2 to 20 carbon atoms, the hydrocarbon group optionally having a hetero atom, $n_d$ is an integer of 2 to 40, and $R_d$ in plural are the same as or different from each other.

[2] The oxyalkylene structure-containing polycarbonate polyol composition according to [1], wherein the structural unit represented by the formula (A) comprises a structural unit comprising at least a divalent hydrocarbon group having 3 carbon atoms.

[3] The oxyalkylene structure-containing polycarbonate polyol composition according to [1] or [2], wherein a molar ratio of $R_b/R_c$ is 1/99 to 99/1.

[4] The oxyalkylene structure-containing polycarbonate polyol composition according to any of [1] to [3], wherein a number-average molecular weight of a polyvalent hydroxy compound having an oxyalkylene structure obtained by hydrolysis of the oxyalkylene structure-containing polycarbonate polyol composition is 200 to 2,500.

[5] The oxyalkylene structure-containing polycarbonate polyol composition according to any of [1] to [4], wherein $R_a$ is a divalent linear aliphatic hydrocarbon group having 3 carbon atoms.

[6] The oxyalkylene structure-containing polycarbonate polyol composition according to any of [1] to [5], wherein a number-average molecular weight of the oxyalkylene structure-containing polycarbonate polyol composition is 200 to 5,000.

[7] An oxyalkylene structure-containing polycarbonate polyol composition comprising an oxyalkylene structure-containing polycarbonate polyol comprising a structural unit represented by the following formula (1) and a structural unit represented by the following formula (2), wherein the oxyalkylene structure-containing polycarbonate polyol composition has a molecular weight distribution (Mw/Mn) of 1.60 to 2.70 and a number-average molecular weight of 850 to 10,000:

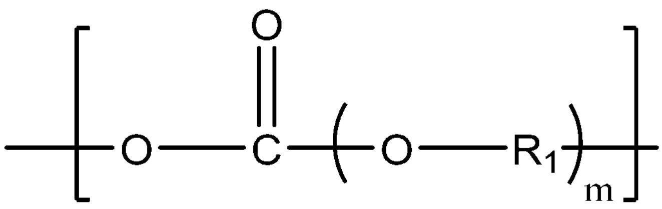

・・・(1)

wherein $R_1$ is a divalent linear, branched or cyclic aliphatic hydrocarbon group, or aromatic hydrocarbon group having 2 or more and 20 or less carbon atoms, $R_1$ in plural are the same as or different from each other, and m is any integer,

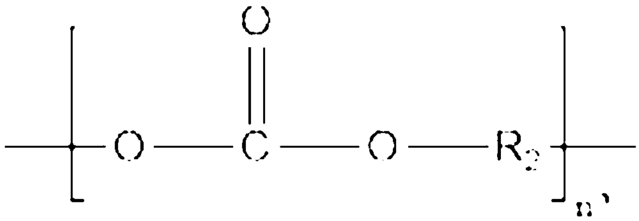

・・・(2)

wherein $R_2$ is a divalent linear, branched or cyclic aliphatic hydrocarbon group, or aromatic hydrocarbon group having 2 or more and 20 or less carbon atoms, the hydrocarbon group optionally having a hetero atom, $R_2$ in plural are the same as or different from each other, and n2 is an integer of 0 to 50.

[8] The oxyalkylene structure-containing polycarbonate polyol composition according to [7], wherein a mass proportion of a structural unit represented by the following formula (3) in the oxyalkylene structure-containing polycarbonate polyol composition is 0.01% by mass or more and 5.0% by mass or less:

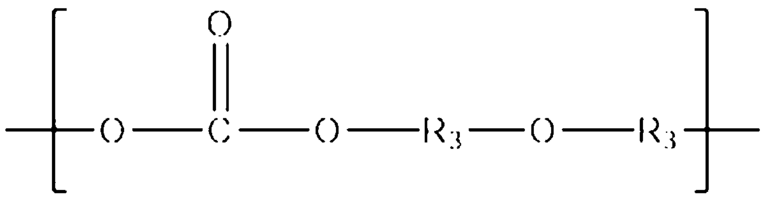

・・・(3)

wherein $R_3$ is a divalent linear hydrocarbon group having 2 carbon atoms.

[9] The oxyalkylene structure-containing polycarbonate polyol composition according to [7] or [8], wherein a number-average molecular weight of a polyvalent hydroxy compound having an oxyalkylene structure obtained by hydrolysis of the oxyalkylene structure-containing polycarbonate polyol composition is 200 to 2000.

[10] The oxyalkylene structure-containing polycarbonate polyol composition according to any of [7] to [9], wherein a mass proportion of the structural unit represented by the formula (2) in the oxyalkylene structure-containing polycarbonate polyol composition is 44% by mass or more and 90% by mass or less.

[11] The oxyalkylene structure-containing polycarbonate polyol composition according to any of [7] to [10], wherein a ratio (Mn1/Mn0) of number-average molecular weight Mn1 of a polyvalent hydroxy compound having an oxyalkylene structure obtained by hydrolysis of the oxyalkylene structure-containing polycarbonate polyol composition to number-average molecular weight Mn0 of the oxyalkylene structure-containing polycarbonate polyol composition is 0.03 to 1.0.

[12] The oxyalkylene structure-containing polycarbonate polyol composition according to any of [7] to [11], wherein a polyvalent hydroxy compound (except for a polyvalent hydroxy compound having an oxyalkylene structure) obtained by hydrolysis of the oxyalkylene structure-containing polycarbonate polyol comprises at least two or more polyvalent hydroxy compounds selected from the group consisting of divalent linear and branched aliphatic hydrocarbon groups having 2 or more and 15 or less carbon atoms.

[13] The oxyalkylene structure-containing polycarbonate polyol composition according to any of [7] to [12], wherein $R_1$ is a linear aliphatic hydrocarbon group having 3 or more and 6 or less carbon atoms.

[14] The oxyalkylene structure-containing polycarbonate polyol composition according to any of [7] to [13], wherein an average number of carbon atoms in a polyvalent hydroxy compound (except for a polyvalent hydroxy compound having an oxyalkylene structure) obtained by hydrolysis of the oxyalkylene structure-containing polycarbonate polyol composition is 2.0 or more and 15.0 or less.

[15] The oxyalkylene structure-containing polycarbonate polyol composition according to any of [7] to [14], wherein starting materials of the structural unit represented by the formula (1) and the structural unit represented by the formula (2) are bio-based materials.

[16] The oxyalkylene structure-containing polycarbonate polyol composition according to any of [7] to [15], wherein the oxyalkylene structure-containing polycarbonate polyol composition comprises a polyvalent hydroxy compound having an oxyalkylene structure obtained by hydrolysis, and/or a polycarbonate polyol composed of the structural unit represented by the formula (2).

[17] The oxyalkylene structure-containing polycarbonate polyol composition according to any of [7] to [16], wherein a ratio of an integral value (B) of signals at 3.3 to 3.6 ppm to an integral value (A) of signals at 3.90 to 4.45 ppm (integral value (B)/integral value (A)) in $^1$H-NMR measured using deuterated chloroform as a solvent and tetramethylsilane as a reference substance is 0.3 to 2.2, and the oxyalkylene structure-containing polycarbonate polyol composition is liquid at ordinary temperature.

[18] A polyurethane obtained using the oxyalkylene structure-containing polycarbonate polyol composition according to any of [1] to [17].

[19] An aqueous polyurethane obtained using the oxyalkylene structure-containing polycarbonate polyol composition according to any of [1] to [17].

[20] A synthetic leather comprising the polyurethane according to [18].

[21] An artificial leather comprising the polyurethane according to [18].

[22] A synthetic leather comprising the aqueous polyurethane according to [19].

[23] An artificial leather comprising the aqueous polyurethane according to [19].

## Advantages of Invention

The present invention can provide a first oxyalkylene structure-containing polycarbonate polyol composition that suppresses elevation in prepolymer viscosity at the time of polyurethane production and is excellent in balance between flexibility and durability. The present invention can also provide a second oxyalkylene structure-containing polycarbonate polyol composition that suppresses elevation in prepolymer viscosity at the time of polyurethane production, is excellent in balance between flexibility and durability, and further, is excellent in quality stability of long-term storage.

## Mode for Carrying Out Invention

Hereinafter, the mode for carrying out the present invention (hereinafter, referred to as the "present embodiment") will be described in detail. The present invention is not limited by the description below and can be carried out with various modification or changes made therein without departing from the spirit of the present invention.

<<First embodiment>>

[First oxyalkylene structure-containing polycarbonate polyol composition]

A first oxyalkylene structure-containing polycarbonate polyol composition of the present embodiment is an oxyalkylene structure-containing polycarbonate polyol composition comprising an oxyalkylene structure-containing polycarbonate polyol comprising a structural unit represented by the following formula (1) (hereinafter, also referred to

as "structural unit (1)") and a structural unit represented by the following formula (2) (hereinafter, also referred to as "structural unit (2)"), wherein the oxyalkylene structure-containing polycarbonate polyol composition has a molecular weight distribution (Mw/Mn) of 1.60 to 2.70 and a number-average molecular weight of 850 to 10,000:

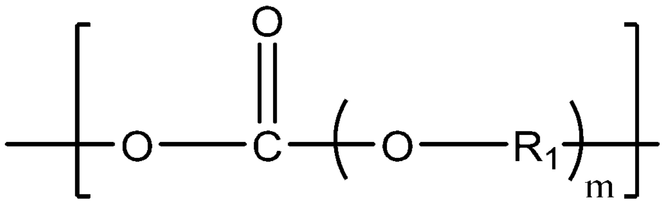

・・・(1)

wherein $R_1$ is a divalent linear, branched or cyclic aliphatic hydrocarbon group, or aromatic hydrocarbon group having 2 or more and 20 or less carbon atoms, $R_1$ in plural are the same as or different from each other, and m is any integer,

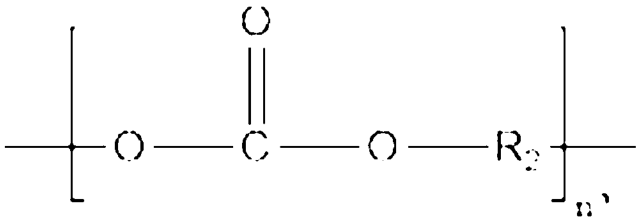

・・・(2)

wherein $R_2$ is a divalent linear, branched or cyclic aliphatic hydrocarbon group, or aromatic hydrocarbon group having 2 or more and 20 or less carbon atoms, the hydrocarbon group optionally having a hetero atom, $R_2$ in plural are the same as or different from each other, and n2 is an integer of 0 to 50.

As having the configuration described above, the first oxyalkylene structure-containing polycarbonate polyol composition of the present embodiment has both favorable flexibility and durability when the composition is made into polyurethane, and can suppress elevation in viscosity of a prepolymer at the time of polyurethane production.

<Number-average molecular weight>

The lower limit of the number-average molecular weight of the first oxyalkylene structure-containing polycarbonate polyol composition of the present embodiment is preferably 850 or higher, more preferably 900 or higher. The upper limit of the number-average molecular weight of the oxyalkylene structure-containing polycarbonate polyol of the present embodiment is preferably 10000 or lower, more preferably 8000 or lower, further preferably 5000 or lower, still further preferably 4500 or lower, particularly preferably 4000 or lower, more particularly preferably 3800 or lower, extremely preferably 3500 or lower, more extremely preferably 3200 or lower.

When the number-average molecular weight falls within the range described above, the oxyalkylene structure-containing polycarbonate polyol composition of the present embodiment tends to be excellent in balance between flexibility and durability.

Examples of a method for controlling the number-average molecular weight of the first oxyalkylene structure-containing polycarbonate polyol composition of the present embodiment in the range include, but are not particularly limited to, a method of reacting polyoxyalkylene polyol serving as a starting material of the structural unit (1), a polyvalent hydroxy compound, and a carbonate compound, a method of feeding a starting material polycarbonate polyol and polyoxyalkylene polyol serving as a starting material of the structural unit (1) at the time of production of the oxyalkylene structure-containing polycarbonate polyol such that the number-average molecular weight falls within the range, and a control method of adding and/or extracting a polyvalent hydroxy compound at the time of production of the oxyalkylene structure-containing polycarbonate polyol.

In the present embodiment, the number-average molecular weight can be calculated from a hydroxy value as described in Examples mentioned later.

<Molecular weight distribution (Mw/Mn)>

The lower limit of the molecular weight distribution (Mw/Mn) of the first oxyalkylene structure-containing polycarbonate polyol composition of the present embodiment is preferably 1.60 or more, more preferably 1.70 or more, further preferably 1.80 or more, still further preferably 1.90 or more. The upper limit of the molecular weight distribution

(Mw/Mn) is preferably 2.70 or less, more preferably 2.60 or less, further preferably 2.50 or less. When the molecular weight distribution (Mw/Mn) of the oxyalkylene structure-containing polycarbonate polyol composition of the present embodiment is equal to or less than the upper limit described above, increase in amount of a high-molecular-weight form and increase in viscosity are suppressed and a high-molecular-weight form is also inhibited. Therefore, elevation in viscosity is also suppressed when the composition is made into polyurethane, and handleability is excellent. In addition, various polyurethane physical properties such as tensile strength tend to be also favorable.

Examples of a method for controlling the molecular weight distribution (Mw/Mn) of the first oxyalkylene structure-containing polycarbonate polyol composition of the present embodiment in the range include, but are not particularly limited to, a method of using low-molecular-weight products as a starting material polycarbonate polyol and polyoxyalkylene polyol serving as a starting material of the structural unit (1) at the time of production of the oxyalkylene structure-containing polycarbonate polyol composition, and controlling a molecular weight by extracting a polyvalent hydroxy compound, a method of reacting a polyvalent hydroxy compound with a carbonate compound, a method of feeding a starting material polycarbonate polyol and polyoxyalkylene polyol serving as a starting material of the structural unit (1) at the time of production of the oxyalkylene structure-containing polycarbonate polyol composition such that the number-average molecular weight (Mn) falls within the range, and a control method of adding and/or extracting a polyvalent hydroxy compound at the time of production of the oxyalkylene structure-containing polycarbonate polyol composition.

In the present embodiment, the molecular weight distribution (Mw/Mn) of the oxyalkylene structure-containing polycarbonate polyol composition can be calculated by gel permeation chromatography (GPC) measurement described in Examples mentioned later. The molecular weight distribution (Mw/Mn) can be determined from the calculated number-average molecular weight (Mn) and weight-average molecular weight (Mw) according to the following expression (I):

Molecular weight distribution (Mw/Mn) = Weight-average molecular weight (Mw)/Number-average molecular weight (Mn) (I)

<Hydroxy value>

The lower limit of the hydroxy value of the first oxyalkylene structure-containing polycarbonate polyol composition of the present embodiment is preferably 11 mg-KOH/g, more preferably 20 mg-KOH/g, further preferably 22.4 mg-KOH/g, still further preferably 28 mg-KOH/g, particularly preferably 37.4 mg-KOH/g. The upper limit thereof is preferably 135 mg-KOH/g, more preferably 124.7 mg-KOH/g, further preferably 118.1 mg-KOH/g, still further preferably 112 mg-KOH. When the hydroxy value of the oxyalkylene structure-containing polycarbonate polyol composition of the present embodiment is equal to or more than the lower limit described above, the composition tends to be easy to handle, without having too high viscosity, when made into polyurethane. When the hydroxy value is equal to or less than the upper limit described above, the resulting polyurethane tends to have favorable flexibility.

<Structure>

The first oxyalkylene structure-containing polycarbonate polyol composition of the present embodiment is not particularly limited by its production method and may be a copolymer of the structural unit (1) and the structural unit (2), or these structural units may exist each independently.

[Structural unit (1)]

<Number-average molecular weight of polyvalent hydroxy compound having oxyalkylene structure>

The lower limit of the number-average molecular weight Mn1 of a polyvalent hydroxy compound having an oxyalkylene structure obtained by the hydrolysis of the first oxyalkylene structure-containing polycarbonate polyol composition of the present embodiment is preferably 200 or higher, more preferably 220 or higher, further preferably 250 or higher. The upper limit thereof is preferably 2000 or lower, more preferably 1800 or lower, further preferably 1500 or lower, particularly preferably 1100 or lower.

When the number-average molecular weight Mn1 of a polyvalent hydroxy compound having an oxyalkylene structure obtained by the hydrolysis of the first oxyalkylene structure-containing polycarbonate polyol composition of the present embodiment is equal to or higher than the lower limit described above, the resulting polyurethane tends to have favorable flexibility. On the other hand, when the number-average molecular weight Mn1 is equal to or lower than the upper limit described above, a molecular weight distribution can be decreased, elevation in viscosity is suppressed when the composition is made into polyurethane, and handling tends to be easy.

Examples of a method for controlling the number-average molecular weight Mn1 of the polyvalent hydroxy compound having an oxyalkylene structure in the range include, but are not particularly limited to, a method of controlling

the amount of an initiator, a reaction temperature, or a reaction time at the time of production.

In the present embodiment, the number-average molecular weight Mn1 of the polyvalent hydroxy compound having an oxyalkylene structure can be measured by a method described in Examples mentioned later.

<$R_1$ in structural unit (1)>

$R_1$ in the structural unit (1) in the first oxyalkylene structure-containing polycarbonate polyol composition of the present embodiment is a divalent linear, branched or cyclic aliphatic hydrocarbon group, or aromatic hydrocarbon group having 2 or more and 20 or less carbon atoms, and $R_1$ when present in plural are the same as or different from each other.

The divalent linear aliphatic hydrocarbon group represented by $R_1$ has preferably 3 or more and 15 or less, more preferably 3 or more and 12 or less, further preferably 3 or more and 10 or less carbon atoms.

Specific examples of the divalent linear aliphatic hydrocarbon group represented by $R_1$ include, but are not particularly limited to, a trimethylene group, a tetramethylene group, a pentamethylene group, a hexamethylene group, a heptylene group, and an octylene group. A trimethylene group, a butylene group, a pentylene group, a hexylene group, or a decamethylene group is preferred from the viewpoint of versatility

The divalent branched aliphatic hydrocarbon group represented by $R_1$ has preferably 3 or more and 15 or less, more preferably 3 or more and 12 or less, further preferably 3 or more and 10 or less carbon atoms.

Specific examples of the divalent branched aliphatic hydrocarbon group represented by $R_1$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group, or an isohexylene group is preferred from the viewpoint of versatility.

The divalent cyclic aliphatic hydrocarbon group represented by $R_1$ has preferably 3 or more and 15 or less, more preferably 6 or more and 15 or less, further preferably 6 or more and 10 or less carbon atoms.

Specific examples of the divalent cyclic aliphatic hydrocarbon group represented by $R_1$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R_1$ has preferably 6 or more and 15 or less, more preferably 6 or more and 12 or less, further preferably 6 or more and 10 or less carbon atoms.

Specific examples of the divalent aromatic hydrocarbon group represented by $R_1$ include, but are not particularly limited to, a phenylene group and a naphthylene group.

Among others, $R_1$ is preferably a divalent linear aliphatic hydrocarbon group having 3 or more and 10 or less carbon atoms or a divalent branched aliphatic hydrocarbon group having 3 or more and 10 or less carbon atoms, more preferably a divalent linear aliphatic hydrocarbon group having 3 or more and 6 or less carbon atoms, still more preferably a trimethylene group, a butylene group, a pentylene group and a hexylene group as a divalent linear aliphatic hydrocarbon group, particularly preferably a trimethylene group and a butylene group as a divalent linear aliphatic hydrocarbon group, particularly more preferably a trimethylene group as a divalent linear aliphatic hydrocarbon group.

<m in formula (1)>

In the formula (1), m is any integer, and the average value of m is preferably in the range of 2 or larger and 35 or smaller, more preferably in the range of 3 or larger and 31 or smaller, further preferably in the range of 3 or larger and 26 or smaller, particularly preferably in the range of 3 or larger and 21 or smaller.

In the present embodiment, the average value of m can be measured by a method described in Examples mentioned later.

[Structural unit (2)]

<$R_2$ in structural unit (2)>

$R_2$ in the structural unit (2) in the first oxyalkylene structure-containing polycarbonate polyol composition of the present embodiment is a divalent linear, branched or cyclic aliphatic hydrocarbon group, or aromatic hydrocarbon group having 2 or more and 20 or less carbon atoms, the hydrocarbon group optionally having a hetero atom. $R_2$ when present in plural are the same as or different from each other.

The divalent linear aliphatic hydrocarbon group represented by $R_2$ has preferably 2 or more and 15 or less, more preferably 3 or more and 12 or less, further preferably 3 or more and 10 or less carbon atoms.

Specific examples of the divalent linear aliphatic hydrocarbon group represented by $R_2$ include, but are not particularly limited to, an ethylene group, a trimethylene group, a tetramethylene group, a pentamethylene group, a hexamethylene group, a heptylene group, and an octylene group. A trimethylene group, a butylene group, a pentylene

group, a hexylene group, or a decamethylene group is preferred from the viewpoint of versatility

The divalent branched aliphatic hydrocarbon group represented by $R_2$ has preferably 3 or more and 15 or less, more preferably 3 or more and 12 or less, further preferably 3 or more and 10 or less carbon atoms.

Specific examples of the divalent branched aliphatic hydrocarbon group represented by $R_2$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group, or an isohexylene group is preferred from the viewpoint of versatility.

The divalent cyclic aliphatic hydrocarbon group represented by $R_2$ has preferably 3 or more and 15 or less, more preferably 6 or more and 15 or less, further preferably 6 or more and 10 or less carbon atoms.

Specific examples of the divalent cyclic aliphatic hydrocarbon group represented by $R_2$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R_2$ has preferably 6 or more and 15 or less, more preferably 6 or more and 12 or less, further preferably 6 or more and 10 or less carbon atoms.

Specific examples of the divalent aromatic hydrocarbon group represented by $R_2$ include, but are not particularly limited to, a phenylene group and a naphthylene group.

Specific examples of the hetero atom in $R_2$ include, but are not particularly limited to, boron, oxygen, nitrogen, phosphorus, and sulfur. A five-membered heterocyclic structure such as furan, tetrahydrofuran, oxolane, thiolane, or azolidine, or a six-membered heterocyclic structure such as oxane or pyridine may be included.

<Average number of carbon atoms in $R_2$ in structural unit (2)>

The lower limit of the average number of carbon atoms in a polyvalent hydroxy compound (except for a polyvalent hydroxy compound having an oxyalkylene structure (corresponding to $R_2$ in the structural unit (2))) obtained by the hydrolysis of the first oxyalkylene structure-containing polycarbonate polyol composition of the present embodiment is preferably 2.0 or more, more preferably 2.5 or more, further preferably 3.0 or more. The upper limit thereof is preferably 15.0 or less, more preferably 12.0 or less, further preferably 10.0 or less, still further preferably 8.0 or less, particularly preferably 6.5 or less, more particularly preferably 6.0 or less, extremely preferably 5.5 or less.

When the average number of carbon atoms in the polyvalent hydroxy compound (except for a polyvalent hydroxy compound having an oxyalkylene structure) obtained by the hydrolysis falls within the range described above, the oxyalkylene structure-containing polycarbonate polyol composition of the present embodiment tends to be excellent in balance between flexibility and durability when made into polyurethane.

Examples of a method for controlling the average number of carbon atoms in the polyvalent hydroxy compound (except for a polyvalent hydroxy compound having an oxyalkylene structure) obtained by the hydrolysis in the range include, but are not particularly limited to, a method of selecting an appropriate type of the polyvalent hydroxy compound used, or selecting a plurality of polyvalent hydroxy compounds and adjusting their ratio to the optimum one.

In the present embodiment, the average number of carbon atoms in the polyvalent hydroxy compound (except for a polyvalent hydroxy compound having an oxyalkylene structure) obtained by the hydrolysis can be measured by a method described in Examples mentioned later.

The polyvalent hydroxy compound (except for a polyvalent hydroxy compound having an oxyalkylene structure) obtained by the hydrolysis of the first oxyalkylene structure-containing polycarbonate polyol composition of the present embodiment preferably comprises at least two or more polyvalent hydroxy compounds selected from the group consisting of divalent linear and branched aliphatic hydrocarbon groups having 2 or more and 15 or less carbon atoms. As comprising such two or more polyvalent hydroxy compounds, the oxyalkylene structure-containing polycarbonate polyol composition is liquid at ordinary temperature and tends to have favorable flexibility.

<Mass proportion of structural unit (2)>

The lower limit of the mass proportion of the structural unit (2) in the first oxyalkylene structure-containing polycarbonate polyol composition of the present embodiment is preferably 44% by mass or more, more preferably 50% by mass or more, further preferably 55% by mass or more. The upper limit of the mass proportion of the structural unit (2) in the oxyalkylene structure-containing polycarbonate polyol composition of the present embodiment is preferably 90% by mass or less, preferably 85% by mass or less, more preferably 80% by mass or less.

When the mass proportion of the structural unit (2) falls within the range described above, the first oxyalkylene structure-containing polycarbonate polyol composition of the present embodiment tends to be excellent in balance between low-temperature flexibility and durability when made into polyurethane.

In the present embodiment, the mass proportion of the structural unit (2) can be measured by a method described in Examples mentioned later.

<n2 in formula (2)>

In the formula (2), n2 is an integer of 0 to 50, and the average value of n2 is preferably in the range of 0 or larger and 40 or smaller, more preferably in the range of 1 or larger and 40 or smaller, further preferably in the range of 2 or larger and 30 or smaller, particularly preferably in the range of 3 or larger and 20 or smaller.

In the present embodiment, the average value of n2 can be measured by the gas chromatography (GC) of a polyvalent hydroxy compound (except for a polyvalent hydroxy compound having an oxyalkylene structure) obtained by the hydrolysis of the oxyalkylene structure-containing polycarbonate polyol composition.

[Structural unit (3)]

<$R_3$ in structural unit (3)>

In the first oxyalkylene structure-containing polycarbonate polyol composition of the present embodiment, the mass proportion of a structural unit represented by the following formula (3) (hereinafter, also referred to as "structural unit (3)") in the oxyalkylene structure-containing polycarbonate polyol composition is preferably 0.01% by mass or more and 5.0% by mass or less:

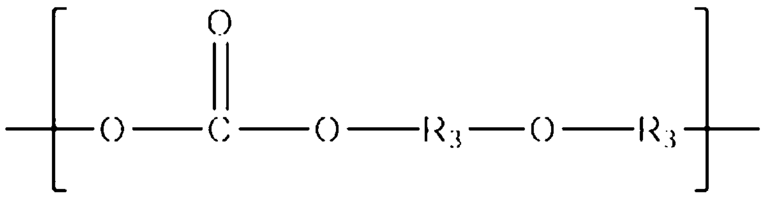

・・・(3)

wherein $R_3$ is a divalent linear hydrocarbon group having 2 carbon atoms.

$R_3$ in the structural unit (3) in the first oxyalkylene structure-containing polycarbonate polyol composition of the present embodiment is a divalent linear hydrocarbon group having 2 carbon atoms.

<Mass proportion of structural unit (3)>

The lower limit of the mass proportion of the structural unit (3) in the first oxyalkylene structure-containing polycarbonate polyol composition of the present embodiment is preferably 0.01% by mass or more, more preferably 0.05% by mass or more, further preferably 0.1% by mass or more. The upper limit of the mass proportion of the structural unit (3) in the oxyalkylene structure-containing polycarbonate polyol composition of the present embodiment is preferably 5.0% by mass or less, more preferably 4.0% by mass or less, further preferably 3.0% by mass or less.

When the mass proportion of the structural unit (3) in the first oxyalkylene structure-containing polycarbonate polyol composition of the present embodiment falls within the range described above, moist heat resistance can be maintained, which is preferred.

A method for controlling the mass proportion of the structural unit (3) in the first oxyalkylene structure-containing polycarbonate polyol composition of the present embodiment is not particularly limited. The structural unit (3) may be formed, for example, through the reaction of diethylene glycol derived from a byproduct of ethylene carbonate which is a carbonate compound. Accordingly, examples of the control method include a method of appropriately selecting the carbonate compound used, a method of controlling a temperature at the time of production of the oxyalkylene structure-containing polycarbonate polyol composition, and a method of adding diethylene glycol.

<APHA>

The value of the Hazen color number of the first oxyalkylene structure-containing polycarbonate polyol composition of the present embodiment (hereinafter, also referred to as "APHA") (APHA value: in accordance with JIS K0071-1 (2017)) is preferably 100 or less, more preferably 60 or less, further preferably 50 or less. The lower the APHA value, the better the oxyalkylene structure-containing polycarbonate polyol composition itself and also the color tone of polyurethane obtained using this oxyalkylene structure-containing polycarbonate polyol composition tend to be. The lower limit of the APHA value is not particularly limited and is, for example, 0.

Examples of a method for obtaining the oxyalkylene structure-containing polycarbonate polyol composition satisfying such an APHA value include, but are not particularly limited to, a method of comprehensively controlling the selection of the type or amount of a catalyst at the time of production of, heat history, the amount of a residual monomer, and

the like. The selection of a starting material is also important, and a starting material containing an antioxidant may be used.

<Terminal hydroxy group purity>

A portion of the terminal hydroxy groups may be converted to an alkyl group, an aryl group or the like unreactive with an isocyanate group due to impurities in various starting materials for use in the production of the first oxyalkylene structure-containing polycarbonate polyol of the present embodiment, a terminal structure that is secondarily produced during the production of the polycarbonate polyol composition, etc., or in order to control a urethanization reaction rate or state for the purpose of using the oxyalkylene structure-containing polycarbonate polyol. In the present embodiment, in consideration of such a case, the terminal groups of the oxyalkylene structure-containing polycarbonate polyol also encompass the case where 100% by mol of groups at both ends is not strictly a hydroxy group. From such a viewpoint, in the present embodiment, the primary hydroxy group purity (ratio of the hydroxy groups to the total molar quantity of terminal groups) of the oxyalkylene structure-containing polycarbonate polyol is preferably 90% by mol or more, more preferably 95% by mol or more. The structures at both ends can be confirmed in accordance with, for example, a method for measuring a primary terminal OH ratio, described in Japanese Patent No. 3874664 (Reference 1). Ethanol as well as a solvent such as tetrahydrofuran, acetone, or methanol can be used as a solvent recovering fractions.

<Mn1/Mn0>

In the present embodiment, the lower limit of the ratio (Mn1/Mn0) of the number-average molecular weight Mn1 of a polyvalent hydroxy compound having an oxyalkylene structure obtained by the hydrolysis of the oxyalkylene structure-containing polycarbonate polyol composition to the number-average molecular weight Mn0 of the oxyalkylene structure-containing polycarbonate polyol composition is preferably 0.03 or more, more preferably 0.04 or more, further preferably 0.05 or more. The upper limit thereof is preferably 1.0 or less, more preferably 0.8 or less, further preferably 0.5 or less.

When the ratio (Mn1/Mn0) falls within the range described above, the first oxyalkylene structure-containing polycarbonate polyol composition of the present embodiment has all of favorable flexibility, low-temperature characteristics, and hydrolysis resistance when made into polyurethane, and tends to be able to suppress elevation in viscosity.

Examples of a method for controlling the ratio (Mn1/Mn0) in the range include, but are not particularly limited to, a method of producing the oxyalkylene structure-containing polycarbonate polyol by appropriately selecting the molecular weight of a starting material oxyalkylene polyol or polycarbonate polyol, and a control method of adding and/or extracting a polyvalent hydroxy compound at the time of production of the oxyalkylene structure-containing polycarbonate polyol.

In the present embodiment, the ratio (Mn1/Mn0) can be measured by a method described in Examples mentioned later.

The first oxyalkylene structure-containing polycarbonate polyol composition of the present embodiment may comprise a polyvalent hydroxy compound having an oxyalkylene structure obtained by hydrolysis, and/or a polycarbonate polyol composed of the structural unit represented by the formula (2).

<NMR>

In the first oxyalkylene structure-containing polycarbonate polyol composition of the present embodiment, the ratio of an integral value (B) of signals at 3.3 to 3.6 ppm to an integral value (A) of signals at 3.90 to 4.45 ppm (integral value (B)/integral value (A)) in $^1$H-NMR measured using deuterated chloroform as a solvent and tetramethylsilane as a reference substance is preferably 0.3 to 2.2, more preferably 0.4 to 2.0, further preferably 0.4 to 0.8. The signals at 3.90 to 4.45 ppm are from a methylene proton adjacent to the carbonate group, and the signals at 3.3 to 3.6 ppm are from a methylene proton adjacent to the ether group.

In the structural unit (1), the proton of the methylene group in $R_1$ adjacent to the carbonate group appears as signals of (A). The larger the value of m, the larger the signals of (B). In short, the larger the oxyalkylene structure unit, the larger the value of m. This increases integral value (B)/integral value (A). Also, integral value (B)/integral value (A) varies depending on the ratio between the structural unit (1) and the structural unit (2) and their structures. Thus, when the integral value (B)/integral value (A) falls within the range described above, the oxyalkylene structure-containing polycarbonate polyol composition of the present embodiment produces polyurethane excellent in balance between flexibility and durability.

Examples of a method for controlling the ratio (integral value (B)/integral value (A)) in the range include, but are not particularly limited to, a method of appropriately selecting the structure, molecular weight, and ratio of a starting material oxyalkylene polyol, and incorporating them into the oxyalkylene structure-containing polycarbonate polyol, and a control method of adding and/or extracting a polyvalent hydroxy compound at the time of production of the oxyalkylene structure-containing polycarbonate polyol.

In the present embodiment, the ratio (integral value (B)/integral value (A)) can be measured by a method

described in Examples mentioned later.

<Properties>

The properties at 23°C of the first oxyalkylene structure-containing polycarbonate polyol composition of the present embodiment are preferably liquid and transparent. As being liquid and transparent at 23°C which is ordinary temperature, the oxyalkylene structure-containing polycarbonate polyol composition of the present embodiment is less likely to be cloudy for use as a constituent for polyurethane or coating materials and is therefore less likely to be limited by its purpose.

Examples of a method for obtaining the oxyalkylene structure-containing polycarbonate polyol composition whose properties at 23°C are liquid and transparent include, but are not particularly limited to, a method of appropriately selecting the type and amount of a starting material of the oxyalkylene structure-containing polycarbonate polyol composition. The evaluation of transparency is not particularly limited, and the transparency can be measured using, for example, a turbidimeter by an integrating sphere photoelectronic photometry.

[Method for producing oxyalkylene structure-containing polycarbonate polyol composition]

A method for producing the first oxyalkylene structure-containing polycarbonate polyol composition of the present embodiment is not particularly limited as long as the oxyalkylene structure-containing polycarbonate polyol composition of interest can be obtained. Examples thereof include a method of reacting oxyalkylene polyol represented by the general formula (I-1) given below (hereinafter, also referred to as "oxyalkylene polyol (I-1)") with polycarbonate polyol represented by the general formula (II-1) given below (hereinafter, also referred to as "polycarbonate polyol (II-1)") in the presence of a transesterification reaction catalyst, and a method of polycondensing oxyalkylene polyol (I-1), a polyvalent hydroxy compound and a carbonate compound through transesterification reaction. A method of subjecting oxyalkylene polyol (I-1) and polycarbonate polyol (II-1) to transesterification reaction is preferred from the viewpoint that heat history against the oxyalkylene polyol (I-1) can be reduced.

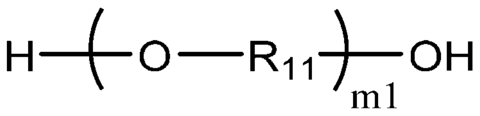

• • • (I − 1)

wherein $R_{11}$ and m1 are respectively the same as $R_1$ and m described above,

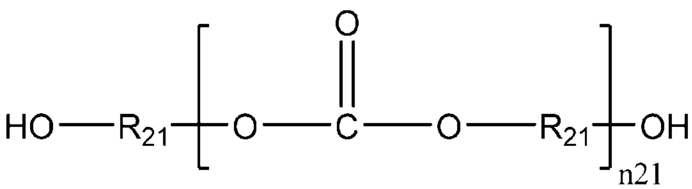

• • • (I I − 1)

wherein $R_{21}$ is the same as $R_2$ described above, and n21 is any integer.

If too large an amount of the catalyst remains in the oxyalkylene structure-containing polycarbonate polyol composition, the oxyalkylene structure-containing polycarbonate polyol may become cloudy or may be easily colored by heating. Such a catalyst may inhibit reaction in producing polyurethane or may accelerate the reaction too much. Too small an amount of the catalyst tends to slow the progression of the reaction, which is not preferred.

Thus, the amount of the catalyst remaining in the first oxyalkylene structure-containing polycarbonate polyol composition of the present embodiment is not particularly limited, and the lower limit of its content based on a catalyst metal is preferably 0.00001% by mass or more, more preferably 0.00005% by mass or more, further preferably 0.0001% by mass or more, still further preferably 0.0005% by mass or more. The amount of the catalyst remaining in the oxyalkylene structure-containing polycarbonate polyol composition of the present embodiment is not particularly limited, and the upper limit of its content based on a catalyst metal is preferably 0.1% by mass or less, more preferably 0.05% by mass or less, further preferably 0.03% by mass or less, still further preferably 0.02% by mass or less, particularly preferably 0.015% by mass or less, more particularly preferably 0.01% by mass or less, extremely preferably 0.005% by mass or less.

The chromaticity (APHA) of a starting material for use in producing the first oxyalkylene structure-containing polycarbonate polyol composition of the present embodiment is preferably 100 or less, more preferably 80 or less, further preferably 50 or less, still further preferably 30 or less, particularly preferably 20 or less. When the APHA of the starting

material is equal to or less than the value described above, the resulting oxyalkylene structure-containing polycarbonate polyol composition tends to be excellent in APHA.

Examples of a method for determining the endpoint of transesterification reaction include, but are not particularly limited to, a cloud point titration method. In this approach, the oxyalkylene structure-containing polycarbonate polyol composition of the present embodiment is dissolved in a good solvent (e.g., acetone or butyl acetate). A poor solvent (e.g., water or hexane) is added dropwise to the obtained solution for titration, and the amount titrated is determined when the solution began to be cloudy.

Since transesterification reaction is equilibrium reaction, the oxyalkylene polyol (I-1) and/or the polycarbonate polyol (II-1) may become a reaction residual substance. Therefore, the oxyalkylene polyol (I-1) and/or the polycarbonate polyol (II-1) may exist independently or may be added. The presence of the oxyalkylene polyol (I-1) improves compatibility with other polyols, which is preferred. The presence of the polycarbonate polyol (II-1) improves durability when the composition is made into polyurethane, which is preferred.

<Ratio between starting materials used>

In the production of the first oxyalkylene structure-containing polycarbonate polyol composition of the present embodiment, the ratio between the oxyalkylene polyol (I-1) and the polycarbonate polyol (II-1) for production through transesterification reaction is not particularly limited, and the % by mass of (I-1)/(II-1) is preferably 10/90 to 90/10% by mass, more preferably 20/80 to 80/20% by mass, further preferably 25/75 to 70/30% by mass, particularly preferably 25/75 to 65/35% by mass, further particularly preferably 25/75 to 58/42% by mass.

When the % by mass of (I-1)/(II-1) falls within the range described above, the composition tends to be excellent in balance between low-temperature flexibility and durability when made into polyurethane.

[Production conditions for oxyalkylene structure-containing polycarbonate polyol composition]

In the production of the first oxyalkylene structure-containing polycarbonate polyol composition of the present embodiment, a transesterification reaction catalyst can be used. The catalyst can be selected from usual transesterification reaction catalysts.

Examples of the transesterification reaction catalyst include, but are not particularly limited to, alkali metals and alkaline earth metals, and alcoholates thereof, hydrides thereof, oxides thereof, amides thereof, hydroxides thereof and salts thereof.

Examples of the salts of the alkali metal and the alkaline earth metal include, but are not particularly limited to, carbonate, nitrogen-containing borate, and basic salts with organic acids.

Examples of the alkali metal include, but are not particularly limited to, lithium, sodium, and potassium.

Examples of the alkaline earth metal include, but are not particularly limited to, magnesium, calcium, strontium, and barium.

Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.

Specific examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.

One of these transesterification catalysts can be used singly, or two or more thereof can be used in combination.

Among others, the transesterification reaction catalyst is preferably at least one metal selected from the group consisting of lithium, sodium, potassium, magnesium, calcium, titanium, zirconium, tin, lead, manganese and ytterbium, or a salt thereof, an alkoxide thereof, or an organic compound containing the metal, more preferably at least one metal selected from the group consisting of lithium, magnesium, calcium, titanium, manganese, ytterbium, tin, zinc and zirconium, further preferably at least one metal selected from the group consisting of lithium, magnesium, calcium, titanium, manganese and ytterbium, still further preferably at least one metal selected from the group consisting of lithium, magnesium, calcium, titanium and manganese, particularly preferably at least one metal selected from the group consisting of lithium, magnesium, calcium, titanium and manganese, more particularly preferably at least one metal selected from the group consisting of lithium, magnesium, titanium and manganese, more particularly preferably at least one metal selected from the group consisting of titanium, magnesium and manganese, because transesterification reaction to obtain the oxyalkylene structure-containing polycarbonate polyol composition is more favorably performed, and use of the resulting oxyalkylene structure-containing polycarbonate polyol composition has less influence on urethane reaction.

Specific examples of the preferred transesterification catalyst include, but are not particularly limited to, organic

compounds of magnesium, organic compounds of lead, organic compounds of titanium, and organic compounds of manganese.

Examples of the organic compound of magnesium include, but are not particularly limited to, magnesium acetate tetrahydrate and magnesium acetate anhydride.

Examples of the organic compound of lead include, but are not particularly limited to, lead acetate trihydrate, tetraphenyl lead, and lead stearate.

Examples of the organic compound of titanium include, but are not particularly limited to, titanium tetra-n-butoxide, titanium tetra-n-propoxide, and titanium tetraisopropoxide.

Examples of the organic compound of manganese include, but are not particularly limited to, manganese(II) acetate and manganese(II) acetylacetonate.

The amount of the transesterification reaction catalyst used is preferably 0.00001% by mass or more and 0.1 % by mass or less, more preferably 0.0001% by mass or more and 0.05% by mass or less, based on the total mass of the starting materials.

Specifically, the transesterification reaction can be carried out by mixing starting materials, and stirring the mixture under heating.

The temperature of the transesterification reaction is not particularly limited. The lower limit is preferably 120°C or higher, more preferably 140°C or higher, and the upper limit is preferably 250°C or lower, more preferably 200°C or lower.

When the reaction temperature is equal to or higher than the lower limit value described above, the transesterification reaction can be performed in a shorter time, and the cost efficiency tends to be excellent. When the reaction temperature is equal to or lower than the upper limit value described above, the acid value of the resulting oxyalkylene structure-containing polycarbonate polyol composition tends to be able to be controlled, and coloring tends to be able to be more effectively prevented.

The reaction pressure of the transesterification reaction is not particularly limited. Examples thereof include a method of performing transesterification reaction under a condition of ordinary pressure or higher and 1 MPa or lower, and then performing reaction under reduced pressure for molecular weight adjustment by removing a polyvalent hydroxy compound in another step, and a method of performing reaction under reduced pressure in order to simultaneously perform transesterification reaction and reaction for molecular weight adjustment by removing a polyvalent hydroxy compound.

[Oxyalkylene polyol (I-1)]

The oxyalkylene polyol (I-1) for use in the production of the first oxyalkylene structure-containing polycarbonate polyol composition of the present embodiment can be any compound having a structure represented by the general formula (I-1). Among others, the oxyalkylene polyol (I-1) is preferably polyoxyalkylene diol having primary hydroxy groups at both ends. Products having varying molecular weights are commercially available, and such a commercially available product may be used as the oxyalkylene polyol (I-1). Examples of the commercially available product of the oxyalkylene polyol (I-1) include, but are not particularly limited to, polyoxyalkylene diol such as "ECOTRION" series manufactured by SK Chemicals Co., Ltd., "Velvetol" series manufactured by Allessa GmbH, "UNIOL" series and "PLONON" series manufactured by NOF Corp., "PREMINOL" and "EXCENOL" series manufactured by AGC Inc., and "PTMG" series manufactured by Mitsubishi Chemical Corp., and polyether glycol such as PTXG manufactured by Asahi Kasei Corp.

The number-average molecular weight of the oxyalkylene polyol (I-1) is not particularly limited and is preferably 200 or higher and 2000 or lower, more preferably 220 or higher and 1800 or lower, further preferably 220 or higher and 1500 or lower, particularly preferably 250 or higher and 1100 or lower. When the number-average molecular weight of the oxyalkylene polyol (I-1) for use in the production is equal to or higher than the lower limit value described above, flexibility for use in polyurethane tends to be more improved. When the number-average molecular weight of the oxyalkylene polyol (I-1) is equal to or lower than the upper limit value described above, the crystallinity of the oxyalkylene structure-containing polycarbonate polyol composition of the present embodiment tends to be more suppressed.

Specific examples of the oxyalkylene polyol include, but are not particularly limited to, low-molecular-weight polyether polyol such as trimethylene glycol, tetramethylene glycol, and dipropylene glycol, polypropylene glycol having a number-average molecular weight of 100 or higher and 3000 or lower determined from a hydroxy group, copolymers of ethylene oxide and propylene oxide, polyalkylene ether glycol such as polytetramethylene ether glycol (PTMG), copolymers of tetrahydrofuran (THF) and 3-methyl-tetrahydrofuran, dipropylene glycol, and polyethylene glycol.

The oxyalkylene polyol is preferably polytetramethylene ether glycol (PTMG) or polytrimethylene glycol, particularly preferably polytrimethylene glycol, particularly, from the viewpoint of balance among physical properties such as low-temperature flexibility, flexibility, and mechanical strength.

[Polycarbonate polyol (II-1)]

The polycarbonate polyol (II-1) for use in the production of the first oxyalkylene structure-containing polycarbonate polyol composition of the present embodiment can be any compound having a structure represented by the general formula (II-1). A method for producing the polycarbonate polyol (II-1) is not particularly limited, and a method known in the art may be adopted. The polycarbonate polyol (II-1) can be obtained, for example, through the reaction of a carbonate compound with a polyvalent hydroxy compound in the presence of a transesterification catalyst.

(Carbonate compound)

Examples of the carbonate compound for use in the production of the polycarbonate polyol (II-1) include, but are not limited to, alkylene carbonate, dialkyl carbonate, and diaryl carbonate.
Examples of the alkylene carbonate include, but are not particularly limited to, ethylene carbonate, trimethylene carbonate, 1,2-propylene carbonate, 1,2-butylene carbonate, 1,3-butylene carbonate, and 1,2-pentylene carbonate.
Examples of the dialkyl carbonate include, but are not particularly limited to, dimethyl carbonate, diethyl carbonate, dipropyl carbonate, and dibutyl carbonate.
Examples of the diaryl carbonate include, but are not particularly limited to, diphenyl carbonate.
Among others, the carbonate compound for use in the production of the polycarbonate polyol (II-1) is preferably ethylene carbonate, dimethyl carbonate, diethyl carbonate, diphenyl carbonate, more preferably ethylene carbonate.

<Polyvalent hydroxy compound>

Examples of the polyvalent hydroxy compound for use in the production of the polycarbonate polyol (II-1) include, but are not limited to, linear polyvalent hydroxy compounds, branched polyvalent hydroxy compounds, cyclic polyvalent hydroxy compounds, polyvalent hydroxy compounds having an aromatic ring, and polyvalent hydroxy compounds having a heterocyclic ring containing a hetero atom.
Examples of the linear polyvalent hydroxy compound include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.
Examples of the branched polyvalent hydroxy compound include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.
Examples of the cyclic polyvalent hydroxy compound include, but are not particularly limited to, 1,3-cyclohexanediol, 1,4-cyclohexanediol, 1,4-cyclohexanedimethanol, and 2-bis(4-hydroxycyclohexyl)-propane isosorbide.
Examples of the polyvalent hydroxy compound having an aromatic ring include, but are not particularly limited to, p-xylenediol, p-tetrachloroxylenediol, 1,4-bis(hydroxyethoxy)benzene, 2,2-bis[(4-hydroxyethoxy)phenyl]propane.
Examples of the polyvalent hydroxy compound having a heterocyclic ring containing a hetero atom include, but are not particularly limited to, 2,5-furandimethanol and 2,5-tetrafurandimethanol.
Among others, linear or branched polyvalent hydroxy compound having 3 or more and 10 or less carbon atoms is preferred, 1,3-propanediol, 1,4-butanediol, 1,5-pentanediol or 1,6-hexanediol, 1,9-nonanediol, 1,10-decanediol, 2-methyl-1,3-propanediol, 3-methyl-1,5-pentanediol is preferred, and 1,4-butanediol, 1,5-pentanediol or 1,6-hexanediol is more preferred.

[Production conditions for polycarbonate polyol (II-1)]

Examples of the transesterification reaction catalyst include, but are not particularly limited to, alkali metals and alkaline earth metals, and alcoholates thereof, hydrides thereof, oxides thereof, amides thereof, hydroxides thereof and salts thereof.
Examples of the salts of the alkali metal and the alkaline earth metal include, but are not particularly limited to, carbonate, nitrogen-containing borate, and basic salts with organic acids.
Examples of the alkali metal include, but are not particularly limited to, lithium, sodium, and potassium.
Examples of the alkaline earth metal include, but are not particularly limited to, magnesium, calcium, strontium, and barium.
Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.
Specific examples of the metal other than alkali metals and alkaline earth metals include, but are not particularly limited to, aluminum, titanium, vanadium, chromium, manganese, iron, cobalt, nickel, copper, zinc, gallium, germanium,

zirconium, niobium, molybdenum, ruthenium, rhodium, palladium, silver, indium, tin, antimony, tungsten, rhenium, osmium, iridium, platinum, gold, thallium, lead, bismuth, and ytterbium.

One of these transesterification catalysts can be used singly, or two or more thereof can be used in combination.

Among others, the transesterification reaction catalyst is preferably at least one metal selected from the group consisting of lithium, sodium, potassium, magnesium, potassium, titanium, zirconium, tin, lead, manganese and ytterbium, or a salt thereof, an alkoxide thereof, or an organic compound containing the metal, more preferably at least one metal selected from the group consisting of lithium, magnesium, calcium, titanium, manganese, ytterbium, tin, zinc and zirconium, further preferably at least one metal selected from the group consisting of lithium, magnesium, calcium, titanium, manganese and ytterbium, still further preferably at least one metal selected from the group consisting of lithium, magnesium, calcium, titanium and manganese, particularly preferably at least one metal selected from the group consisting of lithium, magnesium, calcium, titanium and manganese, more particularly preferably at least one metal selected from the group consisting of lithium, magnesium, titanium and manganese, more particularly preferably at least one metal selected from the group consisting of titanium, magnesium and manganese, because transesterification reaction to obtain the oxyalkylene structure-containing polycarbonate polyol composition is more favorably performed, and use of the resulting oxyalkylene structure-containing polycarbonate polyol composition has less influence on urethane reaction.

Specific examples of the preferred transesterification catalyst include, but are not particularly limited to, organic compounds of magnesium, organic compounds of lead, organic compounds of titanium, and organic compounds of manganese.

Examples of the organic compound of magnesium include, but are not particularly limited to, magnesium acetate tetrahydrate and magnesium acetate anhydride.

Examples of the organic compound of lead include, but are not particularly limited to, lead acetate trihydrate, tetraphenyl lead, and lead stearate.

Examples of the organic compound of titanium include, but are not particularly limited to, titanium tetra-n-butoxide, titanium tetra-n-propoxide, and titanium tetraisopropoxide.

Examples of the organic compound of manganese include, but are not particularly limited to, manganese(II) acetate and manganese(II) acetylacetonate.

The amount of the transesterification reaction catalyst used is preferably 0.00001% by mass or more and 0.1 % by mass or less, more preferably 0.0001% by mass or more and 0.05% by mass or less, based on the total mass of the starting materials.

The transesterification catalyst used in transesterification reaction is not consumed by the transesterification reaction when heat treatment is performed subsequently to the production of the oxyalkylene structure-containing polycarbonate polyol. Therefore, its amount can be calculated on the basis of the amount of the transesterification reaction catalyst used. In the case of using, for example, commercially available polycarbonate polyol, the amount of a metal of the transesterification reaction catalyst contained in the polycarbonate polyol is determined by ICP (inductively coupled plasma) measurement.

The polycarbonate polyol used in the present embodiment may be produced through the transesterification reaction between polycarbonate polyol and a diol compound or two or more types of polycarbonate polyols.

The polycarbonate polyol (II-1) for use in the production of the first oxyalkylene structure-containing polycarbonate polyol composition of the present embodiment may be supplemented with a catalyst poison such as a phosphoric acid ester compound in order to deactivate the transesterification reaction catalyst used in the production thereof.

When the starting material polycarbonate polyol (II-1) contains a catalyst poison for the transesterification reaction catalyst, etc. used in the production thereof, the transesterification reaction of the oxyalkylene polyol (I-1) with the polycarbonate polyol (II-1) usually tends to be less likely to progress. Hence, for the production of the polycarbonate polyol composition of the present embodiment, the transesterification reaction catalyst described above can be newly added in a necessary amount.

On the other hand, when the starting material polycarbonate polyol (II-1) contains no catalyst poison for the transesterification reaction catalyst, the transesterification reaction according to the present embodiment usually tends to be more likely to progress. However, in the case of, for example, further lowering a reaction temperature or further shortening a reaction time in the process of producing the oxyalkylene structure-containing polycarbonate polyol composition of the present embodiment, the transesterification reaction catalyst can also be newly added in a necessary amount. In this case, the same transesterification reaction catalyst as that used in the production of the starting material polycarbonate polyol (II-1) can be adopted

The polycarbonate polyol (II-1) for use in the production of the first oxyalkylene structure-containing polycarbonate polyol composition of the present embodiment may be homo polycarbonate polyol obtained from one diol compound, or may be a copolymeric polycarbonate polyol obtained from two or more diol compounds.

Use of any of the above-listed polycarbonate polyol (II-1) can produce oxyalkylene structure-containing polycarbonate polyol composition through transesterification reaction.

However, for example, homo polycarbonate diol obtained using 1,6-hexanediol, which is widely used on the market, is usually a solid at ordinary temperature. Hence, a polycarbonate polyol composition obtained through the transesterification reaction of the homo polycarbonate diol tends to be also a solid at ordinary temperature

On the other hand, for example, copolymeric polycarbonate polyol obtained using any two types of 1,4-butanediol, 1,5-pentanediol and 1,6-hexane polyol is a liquid at ordinary temperature. Hence, an oxyalkylene structure-containing polycarbonate diol composition obtained through the transesterification reaction of the copolymeric polycarbonate polyol tends to be also a liquid at ordinary temperature

<n21>

In the general formula (1-1), n21 represents the number of repeats of the carbonate structure ($-R^{21}$-O-CO-O-). n21 is any integer, and the average value of n21 is preferably in the range of 1 or larger and 50 or smaller, more preferably in the range of 2 or larger and 50 or smaller, further preferably in the range of 3 or larger and 30 or smaller, particularly preferably in the range of 4 or larger and 20 or smaller.

The number-average molecular weight of the polycarbonate polyol (II-1) for use in the production of the first oxyalkylene structure-containing polycarbonate polyol composition of the present embodiment is not particularly limited and is preferably 500 or higher and 5000 or lower, more preferably 1000 or higher and 3000 or lower

When the number-average molecular weight of the polycarbonate polyol (II-1) is equal to or more than the lower limit value described above, performance expected for the polycarbonate polyol composition tends to be better. On the other hand, a number-average molecular weight of the polycarbonate polyol (II-1) equal to or less than the upper limit value described above is preferred in terms of handleability at the time of production of the oxyalkylene structure-containing polycarbonate polyol composition.

The starting materials of the structural unit (1) and the structural unit (2) contained in the first oxyalkylene structure-containing polycarbonate polyol composition of the present embodiment are preferably plant-derived from the viewpoint of reduction in environmental load. Examples of an applicable plant-derived compound serving as an origin of the structural unit (1) include, but are not particularly limited to, polytrimethylene glycol produced from plant-derived 1,3-propanediol, and PTMG produced from plant-derived tetrahydrofuran (THF). Examples of an applicable plant-derived compound serving as an origin of the structural unit (2) include, but are not particularly limited to, 1,3-propanediol, 1,2-butanediol, 1,4-butanediol, 1,5-propanediol, 2-methyl-1,3-propanediol, 2,2-dimethyl-1,3-propanediol, 1,9-nonanediol, 1,10-decanediol, 1,11-undecanediol, 1,12-dodecanediol, 1,13-tridecanediol, 1,18-octadecanediol, 1,20-eicosanediol, and dimer diol.

<<Second embodiment>>

[Second oxyalkylene structure-containing polycarbonate polyol composition]

The second oxyalkylene structure-containing polycarbonate polyol composition of the present embodiment is an oxyalkylene structure-containing polycarbonate polyol composition comprising a structural unit represented by the following formula (A) (hereinafter, also referred to as "structural unit (A)"), a structural unit represented by the following formula (B) (hereinafter, also referred to as "structural unit (B)"), and a structural unit represented by the following formula (C) (hereinafter, also referred to as "structural unit (C)"), wherein the oxyalkylene structure-containing polycarbonate polyol composition comprises 0.01 to 10% by mass of a compound represented by the following formula (D) (hereinafter, also referred to as "compound (D" or "dihydroxy compound (D)", and a mass proportion ((D)/(A)) of the compound represented by the following formula (D) to the structural unit represented by the following formula (A) is 0.01 to 20%:

$$\left( R_a \quad O \right)_{n_a} \qquad \cdots (A)$$

wherein $R_a$ represents a divalent hydrocarbon group having 2 to 20 carbon atoms, the hydrocarbon group optionally having a hetero atom, $n_a$ is an integer of 2 to 40, and $R_a$ in plural are the same as or different from each other,

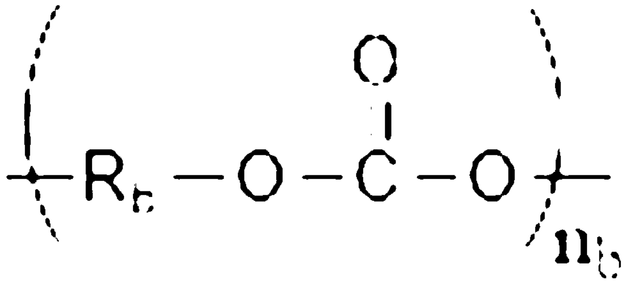

• • • (B)

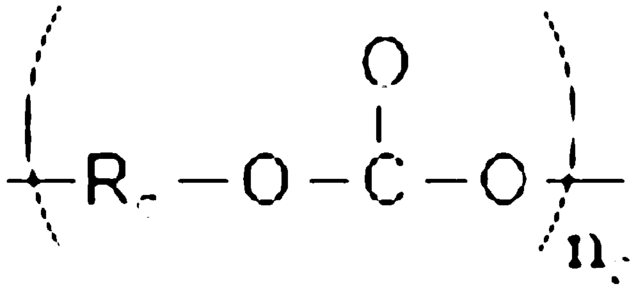

• • • (C)

wherein in the formula (B), $R_b$ represents a divalent hydrocarbon group having 2 to 20 carbon atoms, $n_b$ is any integer, and $R_b$ in plural are the same as or different from each other; and in the formula (C), $R_c$ is different from $R_b$ and represents a divalent hydrocarbon group having 3 to 20 carbon atoms or represents a divalent hydrocarbon group having 3 to 20 carbon atoms and having an alicyclic structure or a heterocyclic structure, the hydrocarbon group optionally having a hetero atom, $n_c$ is an integer of 0 to 50, and $R_c$ in plural are the same as or different from each other,

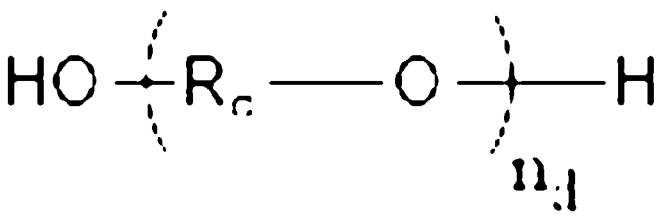

• • • (D)

wherein $R_d$ represents a divalent hydrocarbon group having 2 to 20 carbon atoms, the hydrocarbon group optionally having a hetero atom, $n_d$ is an integer of 2 to 40, and $R_d$ in plural are the same as or different from each other.

As having the configuration described above, the second oxyalkylene structure-containing polycarbonate polyol composition of the present embodiment has both favorable flexibility and durability when the composition is made into polyurethane, can suppress elevation in viscosity of a prepolymer at the time of polyurethane production, and further, is excellent in stability of quality even if stored for a long period.

Although the formula (A) partially has the same structure as that of the formula (D), the formula (A) and the formula (D) are different from each other. Specifically, the formula (A) includes all of the case where the oxyalkylene structure-containing polycarbonate polyol composition has a structure where terminal carbon is bonded to a carbonyl group via oxygen at one end or both ends of the structure of the formula (A), and the case where the oxyalkylene structure-containing polycarbonate polyol composition has hydroxy groups at both ends, while the formula (D) includes only the case where the composition has hydroxy groups at both ends.

In the second oxyalkylene structure-containing polycarbonate polyol composition of the present embodiment, the content of the compound represented by the formula (D) is preferably 0.01 to 10% by mass, more preferably 0.05 to 8.0% by mass, further preferably 0.1 to 6.0% by mass.

In the second oxyalkylene structure-containing polycarbonate polyol composition of the present embodiment, when the content of the compound represented by the formula (D) falls within the range described above, the oxyalkylene structure-containing polycarbonate polyol composition has stable quality when stored for a long period, and tends to be excellent in balance between flexibility and durability when made into polyurethane.

Examples of a method for controlling the content of the compound represented by the formula (D) in the second oxyalkylene structure-containing polycarbonate polyol composition of the present embodiment in the range include, but are not particularly limited to, a method of adjusting a reaction temperature or a reaction time at the time of production of the oxyalkylene structure-containing polycarbonate polyol composition, and a control method of adding and/or extracting a polyvalent hydroxy compound at the time of production thereof.

The mass proportion((D)/(A)) of the compound represented by the formula (D) to the structural unit represented by the formula (A) is preferably 0.01 to 20%, further preferably 0.1 to 18%, further preferably 1.0 to 18%, particularly preferably 5.0 to 15%.

When the mass proportion ((D)/(A)) of the compound represented by the formula (D) to the structural unit represented by the formula (A) falls within the range described above, the second oxyalkylene structure-containing polycarbonate polyol composition of the present embodiment can maintain the stabilization of quality as a homogeneous composition without causing separation or turbidity during long-term storage.

Examples of a method for controlling the mass proportion ((D)/(A)) of the compound represented by the formula (D) to the structural unit represented by the formula (A) in the second oxyalkylene structure-containing polycarbonate polyol composition of the present embodiment in the range include, but are not particularly limited to, a method of adjusting a reaction temperature or a reaction time at the time of production of the oxyalkylene structure-containing polycarbonate polyol composition, a method of adding the dihydroxy compound represented by the formula (D) in stages for production, and a control method of adding and/or extracting a polyvalent hydroxy compound at the time of production thereof.

In the present embodiment, the content of the compound represented by the formula (D) in the oxyalkylene structure-containing polycarbonate polyol composition, and the mass proportion ((D)/(A)) of the compound represented by the formula (D) to the structural unit represented by the formula (A) can be calculated by hydrolysis and LC/MS measurement described in Examples mentioned later.

<Hydroxy value>

The lower limit of the hydroxy value of the second oxyalkylene structure-containing polycarbonate polyol composition of the present embodiment is preferably 10 mg-KOH/g or more, more preferably 15 mg-KOH/g or more, further preferably 20 mg-KOH/g or more, still further preferably 25 mg-KOH/g or more, furthermore preferably 30 mg-KOH/g or more, particularly preferably 35 mg-KOH/g or more, extremely preferably 40 mg-KOH/g or more. The upper limit thereof is preferably 400 mg-KOH/g or less, more preferably 350 mg-KOH/g or less, further preferably 300 mg-KOH/g or less, still further preferably 275 mg-KOH/g or less, furthermore preferably 250 mg-KOH/g or less. The lower limit and the upper limit may be appropriately combined to define a numeric range. The range of the hydroxy value may be, for example, 10 to 400 mg-KOH/g, 15 to 350 mg-KOH/g, 20 to 300 mg-KOH/g, 25 to 275 mg-KOH/g, 30 to 250 mg-KOH/g, 35 to 250 mg-KOH/g, or 40 to 250 mg-KOH/g.

When the hydroxy value falls within the range described above, a coating material and/or polyurethane obtained using the second oxyalkylene structure-containing polycarbonate polyol composition of the present embodiment tends to be much superior in balance between flexibility and durability.

Examples of a method for controlling the hydroxy value of the second oxyalkylene structure-containing polycarbonate polyol composition of the present embodiment in the range include, but are not particularly limited to, a method of feeding a starting material polycarbonate polyol and a polyvalent hydroxy compound having a structure represented by the formula (D) at the time of production of the oxyalkylene structure-containing polycarbonate polyol composition such that the hydroxy value falls within the range, and a control method of adding and/or extracting a polyvalent hydroxy compound at the time of production of the oxyalkylene structure-containing polycarbonate polyol composition.

In the present embodiment, the hydroxy value can be calculated by use of a method described in Examples mentioned later.

<$R_a$ in structural unit (A)>

$R_a$ in the structural unit (A) in the second oxyalkylene structure-containing polycarbonate polyol composition of the present embodiment represents a divalent hydrocarbon group having 2 to 20 carbon atoms, the hydrocarbon group optionally having a hetero atom. In the formula (A), $R_a$ in plural are the same as or different from each other. In the formula (A), $R_a$ is preferably a divalent linear, branched or cyclic aliphatic hydrocarbon group, or aromatic hydrocarbon group having 2 or more and 20 or less carbon atoms.

The divalent linear aliphatic hydrocarbon group represented by $R_a$ has preferably 3 or more and 15 or less, more preferably 3 or more and 12 or less, further preferably 3 or more and 10 or less carbon atoms.

Specific examples of the divalent linear aliphatic hydrocarbon group represented by $R_a$ include, but are not particularly limited to, a trimethylene group, a tetramethylene group, a pentamethylene group, a hexamethylene group, a

heptylene group, and an octylene group. A trimethylene group, a butylene group, a pentylene group, a hexylene group, or a decamethylene group is preferred from the viewpoint of versatility

The divalent branched aliphatic hydrocarbon group represented by $R_a$ has preferably 3 or more and 15 or less, more preferably 3 or more and 12 or less, further preferably 3 or more and 10 or less carbon atoms.

Specific examples of the divalent branched aliphatic hydrocarbon group represented by $R_a$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group, or an isohexylene group is preferred from the viewpoint of versatility.

The divalent cyclic aliphatic hydrocarbon group represented by $R_a$ has preferably 3 or more and 15 or less, more preferably 6 or more and 15 or less, further preferably 6 or more and 10 or less carbon atoms.

Specific examples of the divalent cyclic aliphatic hydrocarbon group represented by $R_a$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R_a$ has preferably 6 or more and 15 or less, more preferably 6 or more and 12 or less, further preferably 6 or more and 10 or less carbon atoms.

Specific examples of the divalent aromatic hydrocarbon group represented by $R_a$ include, but are not particularly limited to, a phenylene group and a naphthylene group.

Among others, $R_a$ is preferably a divalent linear aliphatic hydrocarbon group having 3 or more and 10 or less carbon atoms, or a divalent branched aliphatic hydrocarbon group having 3 or more and 10 or less carbon atoms, more preferably a divalent linear aliphatic hydrocarbon group having 3 or more and 6 or less carbon atoms, or a divalent branched aliphatic hydrocarbon group having 3 or more and 6 or less carbon atoms.

The structural unit represented by the formula (A) preferably contains a structural unit comprising at least a divalent hydrocarbon group having 3 carbon atoms. Among others, $R_a$ still more preferably comprises at least a divalent linear aliphatic hydrocarbon group having 3 carbon atoms, or a divalent branched aliphatic hydrocarbon group having 3 carbon atoms, and particularly more preferably comprises at least a divalent linear aliphatic hydrocarbon group having 3 carbon atoms.

As a specific example, $R_a$ is preferably, for example, a trimethylene group, an isopropylene group, a butylene group, a pentylene group or a hexylene group, more preferably a trimethylene group or an isopropylene group, particularly preferably a trimethylene group.

<$n_a$ in structural unit (A)>

In the formula (A), $n_a$ is an integer of 2 to 40. The average value of $n_a$ is preferably in the range of 2 or larger and 35 or smaller, more preferably in the range of 3 or larger and 31 or smaller, further preferably in the range of 3 or larger and 26 or smaller, particularly preferably in the range of 3 or larger and 21 or smaller.

In the present embodiment, the average value of $n_a$ can be measured by a method described in Examples mentioned later.

<$R_b$ in structural unit (B) and $R_c$ in structural unit (C)>

$R_b$ in the structural unit (B) in the second oxyalkylene structure-containing polycarbonate polyol composition of the present embodiment represents a divalent hydrocarbon group having 2 to 20 carbon atoms. In the structural unit (B), $R_b$ in plural are the same as or different from each other.

$R_b$ is preferably a divalent linear, branched or cyclic aliphatic hydrocarbon group, or aromatic hydrocarbon group having 2 or more and 20 or less carbon atoms, the hydrocarbon group optionally having a hetero atom.

The divalent linear aliphatic hydrocarbon group represented by $R_b$ has preferably 2 or more and 15 or less, more preferably 3 or more and 12 or less, further preferably 3 or more and 10 or less carbon atoms.

Specific examples of the divalent linear aliphatic hydrocarbon group represented by $R_b$ include, but are not particularly limited to, an ethylene group, a trimethylene group, a tetramethylene group, a pentamethylene group, a hexamethylene group, a heptylene group, and an octylene group. A trimethylene group, a butylene group, a pentylene group, a hexylene group, or a decamethylene group is preferred from the viewpoint of versatility.

The divalent branched aliphatic hydrocarbon group represented by $R_b$ has preferably 3 or more and 15 or less, more preferably 3 or more and 12 or less, further preferably 3 or more and 10 or less carbon atoms.

Specific examples of the divalent branched aliphatic hydrocarbon group represented by $R_b$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group or an isohexylene group is preferred from the viewpoint of versatility.

The divalent cyclic aliphatic hydrocarbon group represented by $R_b$ has preferably 3 or more and 15 or less, more

preferably 6 or more and 15 or less, further preferably 6 or more and 10 or less carbon atoms.

Specific examples of the divalent cyclic aliphatic hydrocarbon group represented by $R_b$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R_b$ has preferably 3 or more and 15 or less, more preferably 6 or more and 12 or less, further preferably 6 or more and 10 or less carbon atoms.

Specific examples of the divalent aromatic hydrocarbon group represented by $R_b$ include, but are not particularly limited to, a phenylene group and a naphthylene group.

Specific examples of the hetero atom in $R_b$ include, but are not particularly limited to, boron, oxygen, nitrogen, phosphorus, and sulfur. A five-membered heterocyclic structure such as furan, tetrahydrofuran, oxolane, thiolane, or azolidine, or a six-membered heterocyclic structure such as oxane or pyridine may be included.

$R_c$ in the structural unit (C) in the second oxyalkylene structure-containing polycarbonate polyol composition of the present embodiment is different from $R_b$ and represents a divalent hydrocarbon group having 3 to 20 carbon atoms, or represents a divalent hydrocarbon group having 3 to 20 carbon atoms and having an alicyclic structure or a heterocyclic structure, the hydrocarbon group optionally having a hetero atom. In the structural unit (C), $R_c$ in plural are the same as or different from each other.

$R_c$ is preferably a divalent linear, branched or cyclic aliphatic hydrocarbon group, or aromatic hydrocarbon group having 3 or more and 20 or less carbon atoms, the hydrocarbon group optionally having a hetero atom.

The divalent linear aliphatic hydrocarbon group represented by $R_c$ has preferably 3 or more and 15 or less, more preferably 3 or more and 12 or less, further preferably 3 or more and 10 or less carbon atoms.

Specific examples of the divalent linear aliphatic hydrocarbon group represented by $R_c$ include, but are not particularly limited to, a trimethylene group, a tetramethylene group, a pentamethylene group, a hexamethylene group, a heptylene group, and an octylene group. A trimethylene group, a butylene group, a pentylene group, a hexylene group, or a decamethylene group is preferred from the viewpoint of versatility.

The divalent branched aliphatic hydrocarbon group represented by $R_c$ has preferably 3 or more and 15 or less, more preferably 3 or more and 12 or less, further preferably 3 or more and 10 or less carbon atoms.

Specific examples of the divalent branched aliphatic hydrocarbon group represented by $R_c$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group, or an isohexylene group is preferred from the viewpoint of versatility.

The divalent cyclic aliphatic hydrocarbon group represented by $R_c$ has preferably 3 or more and 15 or less, more preferably 6 or more and 15 or less, further preferably 6 or more and 10 or less carbon atoms.

Specific examples of the divalent cyclic aliphatic hydrocarbon group represented by $R_c$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R_c$ has preferably 6 or more and 15 or less, more preferably 6 or more and 12 or less, further preferably 6 or more and 10 or less carbon atoms.

Specific examples of the divalent aromatic hydrocarbon group represented by $R_c$ include, but are not particularly limited to, a phenylene group and a naphthylene group.

Specific examples of the hetero atom in $R_c$ include, but are not particularly limited to, boron, oxygen, nitrogen, phosphorus, and sulfur. A five-membered heterocyclic structure such as furan, tetrahydrofuran, oxolane, thiolane, or azolidine, or a six-membered heterocyclic structure such as oxane or pyridine may be included.

<$R_b/R_c$ ratio>

The molar ratio of $R_b/R_c$ of the structural unit (B) and the structural unit (C) in the second oxyalkylene structure-containing polycarbonate polyol composition of the present embodiment is preferably 100/0 to 1/99, more preferably 1/99 to 99/1, further preferably 95/5 to 5/95, still further preferably 90/10 to 10/90, particularly preferably 80/20 to 20/80. When the molar ratio of $R_b/R_c$ falls within the range described above, the second oxyalkylene structure-containing polycarbonate polyol composition of the present embodiment is liquid at ordinary temperature and tends to have favorable flexibility, which is preferred.

<$n_b$ in structural unit (B) and $n_c$ in structural unit (C)>

In the structural unit (B), $n_b$ is any integer, and the average value of $n_b$ is preferably in the range of 0 or larger and 50 or smaller, more preferably in the range of 0 or larger and 40 or smaller, further preferably in the range of 1 or larger and 40 or smaller, still further preferably in the range of 2 or larger and 30 or smaller, particularly preferably in the range of 3 or larger and 20 or smaller.

In the structural unit (C), $n_c$ is an integer of 0 to 50, and the average value of $n_c$ is preferably in the range of 0 or larger and 40 or smaller, more preferably in the range of 1 or larger and 40 or smaller, further preferably in the range of 2 or larger and 30 or smaller, particularly preferably in the range of 3 or larger and 20 or smaller.

In the present embodiment, the average values of $n_b$ and $n_c$ can be measured by the gas chromatography (GC) a polyvalent hydroxy compound (except for a polyvalent hydroxy compound having an oxyalkylene structure) obtained by the hydrolysis of the oxyalkylene structure-containing polycarbonate polyol composition.

<Compound (D)>

In the compound (D) in the second oxyalkylene structure-containing polycarbonate polyol composition of the present embodiment, $R_d$ represents a divalent hydrocarbon group having 2 to 20 carbon atoms, the hydrocarbon group optionally having a hetero atom. In the formula (D), $R_d$ in plural are the same as or different from each other. In the formula (D), $R_d$ is preferably a divalent linear, branched or cyclic aliphatic hydrocarbon group, or aromatic hydrocarbon group having 2 or more and 20 or less carbon atoms.

The divalent linear aliphatic hydrocarbon group represented by $R_d$ has preferably 3 or more and 15 or less, more preferably 3 or more and 12 or less, further preferably 3 or more and 10 or less carbon atoms.

Specific examples of the divalent linear aliphatic hydrocarbon group represented by $R_d$ include, but are not particularly limited to, a trimethylene group, a tetramethylene group, a pentamethylene group, a hexamethylene group, a heptylene group, and an octylene group. A trimethylene group, a butylene group, a pentylene group, a hexylene group, or a decamethylene group is preferred from the viewpoint of versatility.

The divalent branched aliphatic hydrocarbon group represented by $R_d$ has preferably 3 or more and 15 or less, more preferably 3 or more and 12 or less, further preferably 3 or more and 10 or less carbon atoms.

Specific examples of the divalent branched aliphatic hydrocarbon group represented by $R_d$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group, or an isohexylene group is preferred from the viewpoint of versatility.

The divalent cyclic aliphatic hydrocarbon group represented by $R_d$ has preferably 3 or more and 15 or less, more preferably 6 or more and 15 or less, further preferably 6 or more and 10 or less carbon atoms.

Specific examples of the divalent cyclic aliphatic hydrocarbon group represented by $R_d$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R_d$ has preferably 6 or more and 15 or less, more preferably 6 or more and 12 or less, further preferably 6 or more and 10 or less carbon atoms.

Specific examples of the divalent aromatic hydrocarbon group represented by $R_d$ include, but are not particularly limited to, a phenylene group and a naphthylene group.

Among others, $R_d$ is preferably a divalent linear aliphatic hydrocarbon group having 3 or more and 10 or less carbon atoms, or a divalent branched aliphatic hydrocarbon group having 3 or more and 10 or less carbon atoms, more preferably a divalent linear aliphatic hydrocarbon group having 3 or more and 6 or less carbon atoms, or a divalent branched aliphatic hydrocarbon group having 3 or more and 6 or less carbon atoms. Particularly, $R_d$ still more preferably comprises at least a divalent linear aliphatic hydrocarbon group having 3 carbon atoms, or a divalent branched aliphatic hydrocarbon group having 3 carbon atoms, and particularly more preferably comprises at least a divalent linear aliphatic hydrocarbon group having 3 carbon atoms.

As a specific example, $R_d$ is preferably, for example, a trimethylene group, an isopropylene group, a butylene group, a pentylene group or a hexylene group, more preferably a trimethylene group or an isopropylene group, particularly preferably a trimethylene group.

<$n_d$ in compound (D)>

In the compound (D), $n_d$ is an integer of 2 to 40. The average value of $n_d$ is preferably in the range of 2 or larger and 38 or smaller, more preferably in the range of 3 or larger and 36 or smaller.

In the present embodiment, the average value of $n_d$ can be measured by a method described in Examples mentioned later.

<APHA>

The value of the Hazen color number of the second oxyalkylene structure-containing polycarbonate polyol composition of the present embodiment (hereinafter, also referred to as "APHA") (APHA value: in accordance with JIS K0071-1 (2017)) is preferably 100 or less, more preferably 60 or less, further preferably 50 or less. The lower the APHA

value, the better the oxyalkylene structure-containing polycarbonate polyol composition itself and also the color tone of polyurethane obtained using this oxyalkylene structure-containing polycarbonate polyol composition tend to be. The lower limit of the APHA value is not particularly limited and is, for example, 0.

Examples of a method for obtaining the oxyalkylene structure-containing polycarbonate polyol composition satisfying such an APHA value include, but are not particularly limited to, a method of comprehensively controlling the selection of the type or amount of a catalyst at the time of production, heat history, the amount of a residual monomer, and the like. The selection of a starting material is also important, and a starting material containing an antioxidant may be used.

<Terminal hydroxy group purity>

A portion of the terminal hydroxy groups may be converted to an alkyl group, an aryl group or the like unreactive with an isocyanate group due to impurities in various starting materials for use in the production of the second oxyalkylene structure-containing polycarbonate polyol of the present embodiment, a terminal structure that is secondarily produced during the production of the polycarbonate polyol composition, etc., or in order to control a urethanization reaction rate or state for the purpose of using the oxyalkylene structure-containing polycarbonate polyol. In the present embodiment, in consideration of such a case, the terminal groups of the oxyalkylene structure-containing polycarbonate polyol also encompass the case where 100% by mol of groups at both ends is not strictly a hydroxy group. From such a viewpoint, in the present embodiment, the primary hydroxy group purity (ratio of the hydroxy groups to the total molar quantity of terminal groups) of the oxyalkylene structure-containing polycarbonate polyol is preferably 90% by mol or more, more preferably 95% by mol or more. The structures at both ends can be confirmed in accordance with, for example, a method for measuring a primary terminal OH ratio, described in Japanese Patent No. 3874664 (Reference 1). Ethanol as well as a solvent such as tetrahydrofuran, acetone, or methanol can be used as a solvent recovering fractions.

<Number-average molecular weight (Mn)>

The lower limit of the number-average molecular weight (Mn) of the second oxyalkylene structure-containing polycarbonate polyol composition of the present embodiment is preferably 300 or higher, more preferably 400 or higher, further preferably 500 or higher. The upper limit of the number-average molecular weight (Mn) of the second oxyalkylene structure-containing polycarbonate polyol composition of the present embodiment is preferably 10000 or lower, more preferably 8000 or lower, further preferably 5000 or lower, still further preferably 4500 or lower, particularly preferably 4000 or lower, more particularly preferably 3800 or lower, extremely preferably 3500 or lower, more extremely preferably 3200 or lower. The lower limit and the upper limit may be appropriately combined to define a numeric range. The range of the number-average molecular weight of the oxyalkylene structure-containing polycarbonate polyol composition may be, for example, 300 to 10000, 400 to 8000, 500 to 5000, 500 to 4500, 500 to 4000, 500 to 3800, 500 to 3500, or 500 to 3200.

When the number-average molecular weight (Mn) falls within the range described above, a coating material and/or polyurethane obtained using the second oxyalkylene structure-containing polycarbonate polyol composition of the present embodiment tends to be much superior in balance between flexibility and durability.

Examples of a method for controlling the number-average molecular weight (Mn) of the second oxyalkylene structure-containing polycarbonate polyol composition of the present embodiment in the range include, but are not particularly limited to, a method of feeding a starting material polycarbonate polyol and a polyvalent hydroxy compound having a structure represented by the formula (D) at the time of production of the oxyalkylene structure-containing polycarbonate polyol composition such that the number-average molecular weight (Mn) falls within the range, and a control method of adding and/or extracting a polyvalent hydroxy compound at the time of production of the oxyalkylene structure-containing polycarbonate polyol composition.

In the present embodiment, the number-average molecular weight (Mn) of the oxyalkylene structure-containing polycarbonate polyol composition can be calculated by GPC measurement described in Examples mentioned later.

<Molecular weight distribution (Mw/Mn)>

The lower limit of the molecular weight distribution (Mw/Mn) of the second oxyalkylene structure-containing polycarbonate polyol composition of the present embodiment is preferably 1.60 or more, more preferably 1.70 or more, further preferably 1.80 or more, still further preferably 1.90 or more. The upper limit of the molecular weight distribution (Mw/Mn) is preferably 2.70 or less, more preferably 2.60 or less, further preferably 2.50 or less. When the molecular weight distribution (Mw/Mn) of the second oxyalkylene structure-containing polycarbonate polyol composition of the present embodiment is equal to or less than the upper limit described above, increase in amount of a high-molecular-weight form and increase in viscosity are suppressed and a high-molecular-weight form is also inhibited. Therefore, elevation in viscosity is also suppressed when the composition is made into polyurethane, and handleability is excellent. In addition, various polyurethane physical properties such as tensile strength tend to be also favorable.

Examples of a method for controlling the molecular weight distribution (Mw/Mn) of the second oxyalkylene structure-containing polycarbonate polyol composition of the present embodiment in the range include, but are not particularly limited to, a method of using low-molecular-weight products as a starting material polycarbonate polyol and polyoxyalkylene polyol at the time of production of the oxyalkylene structure-containing polycarbonate polyol composition, and controlling a molecular weight by extracting a polyvalent hydroxy compound, a method of reacting a polyvalent hydroxy compound with a carbonate compound, a method of feeding a starting material polycarbonate polyol and polyoxyalkylene polyol at the time of production of the oxyalkylene structure-containing polycarbonate polyol composition such that the number-average molecular weight (Mn) falls within the range, and a control method of adding and/or extracting a polyvalent hydroxy compound at the time of production of the oxyalkylene structure-containing polycarbonate polyol composition.

In the present embodiment, the molecular weight distribution (Mw/Mn) of the oxyalkylene structure-containing polycarbonate polyol composition can be calculated by gel permeation chromatography (GPC) measurement described in Examples mentioned later. The molecular weight distribution (Mw/Mn) can be determined from the calculated number-average molecular weight (Mn) and weight-average molecular weight (Mw) according to the following expression (I):

Molecular weight distribution (Mw/Mn) = Weight-average molecular weight (Mw)/Number-average molecular weight (Mn) (I)

<Number-average molecular weight of polyvalent hydroxy compound having oxyalkylene structure>

The lower limit of the number-average molecular weight of a polyvalent hydroxy compound having an oxyalkylene structure obtained by the hydrolysis of the second oxyalkylene structure-containing polycarbonate polyol composition of the present embodiment is preferably 200 or higher, more preferably 220 or higher, further preferably 250 or higher. The upper limit thereof is preferably 2,500 or lower, more preferably 2,400 or lower, further preferably 2,200 or lower, still further preferably 2,150 or lower.

When the number-average molecular weight of a polyvalent hydroxy compound having an oxyalkylene structure obtained by the hydrolysis of the second oxyalkylene structure-containing polycarbonate polyol composition of the present embodiment is equal to or higher than the lower limit described above, the resulting polyurethane tends to have favorable flexibility. On the other hand, when the number-average molecular weight is equal to or lower than the upper limit described above, a molecular weight distribution can be decreased, elevation in viscosity is suppressed when the composition is made into polyurethane, and handling tends to be easy.

Examples of a method for controlling the number-average molecular weight of the polyvalent hydroxy compound having an oxyalkylene structure in the range include, but are not particularly limited to, a method of controlling the amount of an initiator, a reaction temperature, or a reaction time at the time of production.

In the present embodiment, the number-average molecular weight of the polyvalent hydroxy compound having an oxyalkylene structure can be measured by a method described in Examples mentioned later.

[Method for producing second oxyalkylene structure-containing polycarbonate polyol composition]

A method for producing the second oxyalkylene structure-containing polycarbonate polyol composition of the present embodiment is not particularly limited as long as the oxyalkylene structure-containing polycarbonate polyol composition of interest can be obtained. The oxyalkylene structure-containing polycarbonate polyol composition can be produced, for example, in accordance with the method for producing the first oxyalkylene structure-containing polycarbonate polyol composition mentioned above.

[Purpose]

The first and second oxyalkylene structure-containing polycarbonate polyol compositions of the present embodiment can be used as a starting material of a polyurethane for reaction with polyisocyanate. A polyurethane prepared using the first and second oxyalkylene structure-containing polycarbonate polyol compositions of the present embodiment is excellent in chemical resistance, heat resistance, and weather resistance and can therefore be widely used in foams, elastomers, coating materials, coating agents, pressure-sensitive adhesives, adhesives, artificial leather, synthetic leather, aqueous polyurethane coating materials, and the like. Further, the polyurethane can be used for a purpose such as a polyester or polyimide modifier.

[Polyurethane]

The polyurethane of the present embodiment is prepared using the oxyalkylene structure-containing polycarbonate polyol composition mentioned above.

The method for producing the polyurethane of the present embodiment usually employs polyurethanization reaction conditions known in the art for producing polyurethane and can be conducted with no solvent or in coexistence of a solvent.

Examples thereof include, but are not particularly limited to, a method of mixing the oxyalkylene structure-containing polycarbonate polyol composition mentioned above, other polyols, polyisocyanate and a chain extender in one lump for reaction (hereinafter, also referred to as a "one-shot method"), and a method of first reacting the oxyalkylene structure-containing polycarbonate polyol composition mentioned above, other polyols and polyisocyanate to prepare a prepolymer having isocyanate groups at both ends, and then reacting the prepolymer with a chain extender (hereinafter, also referred to as a "prepolymer method").

The isocyanate compound contained in the polyurethane of the present embodiment is not particularly limited as long as the compound works as a curing agent. A compound having two or more terminal isocyanate groups is used.

Examples of such an isocyanate compound include, but are not particularly limited to, chain aliphatic diisocyanate, cyclic aliphatic diisocyanate, aromatic diisocyanate, and isocyanate compounds having three or more isocyanate groups, and isocyanurate-modified products and biuret-modified products of these isocyanate compounds.

Examples of the chain aliphatic diisocyanate include, but are not particularly limited to, hexamethylene diisocyanate and trimethylhexamethylene diisocyanate.

Examples of the cyclic aliphatic diisocyanate include, but are not particularly limited to, isophorone diisocyanate, 1,4-cyclohexane diisocyanate, 1-methyl-2,4-cyclohexane diisocyanate, 1-methyl-2,6-cyclohexane diisocyanate, and 4,4'-dicyclohexylmethane diisocyanate.

Examples of the aromatic diisocyanate include, but are not particularly limited to, tolylene diisocyanate, 4,4'-diphenylmethane diisocyanate (hereinafter, also abbreviated to "MDI"), xylylene diisocyanate and naphthylene diisocyanate.

Examples of the isocyanate compound having three or more isocyanate groups include, but are not particularly limited to, triphenylmethane-4,4'-4"-triisocyanate, 1,3,5-triisocyanatobenzene, 2,4,6-triisocyanatotoluene and 4,4'-dimethyldiphenylmethane-2,2',5,5'-tetraisocyanate.

A commercially available product may be used as the isocyanate compound, or the isocyanate compound may be synthesized by use of a method known in the art.

The content of the isocyanate compound can be appropriately adjusted according to the molar quantity of a hydroxy group in the base agent polyol. Specifically, the molar ratio (NCO/OH) of an isocyanate group in the isocyanate compound to a hydroxy group in the polycarbonate polyol can be, for example, 0.2 or more and 5.0 or less, can be, for example, 0.4 or more and 3.0 or less, and can be, for example, 0.5 or more and 2.0 or less. When NCO/OH is equal to or more than the lower limit value described above, a stronger coating film tends to be obtained. On the other hand, when NCO/OH is equal to or less than the upper limit value described above, the smoothness of a coating film tends to be better.

Examples of the chain extender for use in producing the polyurethane of the present embodiment can usually include, but are not particularly limited to, polyol and polyamine.

Examples of the polyol include, but are not particularly limited to, linear diol, branched diol, cyclic diol, and diol having an aromatic ring.

Examples of the linear diol include, but are not particularly limited to, ethylene glycol, 1,3-propanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.

Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.

Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.

Examples of the diol having an aromatic ring include, but are not particularly limited to, p-xylenediol, p-tetrachloroxylenediol, 1,4-bis(hydroxyethoxy)benzene, and 2,2-bis[(4-hydroxyethoxy)phenyl]propane.

Examples of the polyamine include, but are not particularly limited to, hydroxyamines and polyamines.

Examples of the hydroxyamines include, but are not particularly limited to, N-methylethanolamine and N-ethylethanolamine.

Examples of the polyamines include, but are not particularly limited to, ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine.

These chain extenders may be used singly or may be used in combination of two or more thereof.

The aqueous polyurethane of the present embodiment is prepared using the oxyalkylene structure-containing

polycarbonate polyol composition mentioned above.

Examples of a method for obtaining the aqueous polyurethane of the present embodiment include, but are not particularly limited to, methods described in Examples of Japanese Patent Laid-Open No. 2017-71685.

[Synthetic leather]

The synthetic leather of the present embodiment comprises the polyurethane or the aqueous polyurethane mentioned above.

Examples of the synthetic leather of the present embodiment include, but are not particularly limited to, a synthetic leather comprising a base fabric, an adhesive layer and/or an intermediate layer and/or a surface skin layer and/or a surface treatment layer laminated in order. In such a synthetic leather, at least one selected from the group consisting of a base fabric, an adhesive layer, an intermediate layer, and a surface skin layer preferably contains the polyurethane mentioned above.

As the base fabric (base material), various materials can be used, and examples thereof include, but are not particularly limited to, fibrous base materials. Examples of the fibrous base material include, but are not particularly limited to, a fiber assembly obtained by making fiber into a non-woven fabric, woven fabric, or mesh cloth form, or a fiber assembly in which fibers are bonded with each other by an elastic polymer. Examples of fiber for use in the fiber assembly include, but are not particularly limited to, natural fibers such as cotton, hemp, and wool, regenerated or semi-synthetic fibers such as rayon and acetate, and synthetic fibers such as polyamide, polyester, polyacrylonitrile, polyvinyl alcohol, and polyolefin. These fibers may by single spun fibers or mixed spun fibers. Examples of other base materials include, but are not particularly limited to, paper, release paper, plastic films of polyester or polyolefin, metal plates such as aluminum, and glass plates.

In forming each layer in the synthetic leather of the present embodiment, a crosslinking agent, other resins, an antioxidant, an ultraviolet absorber, a hydrolysis inhibitor, a pigment, a dye, a colorant, a flame retardant, an organic solvent, and the like can be added as required.

The method for producing the synthetic leather of the present embodiment is not particularly limited as long as the polyurethane mentioned above is used, and a method for producing a synthetic leather known in the art can be used.

[Artificial leather]

The artificial leather of the present embodiment comprises the polyurethane or the aqueous polyurethane mentioned above.

[Coating material or coating agent composition]

The coating material or coating agent composition (coating material) of the present embodiment is prepared using the oxyalkylene structure-containing polycarbonate polyol composition mentioned above.

A production method known in the art is used as a method for producing the coating material or coating agent composition (coating material) using the oxyalkylene structure-containing polycarbonate polyol composition mentioned above. Examples of such a composition that can be produced include: a two-component solvent-based coating composition in which a coating material base agent obtained from the oxyalkylene structure-containing polycarbonate polyol composition mentioned above is mixed with a curing agent made of polyisocyanate immediately before coating; a one-component solvent-based coating composition consisting of a urethane polymer having a terminal isocyanate group obtained by reacting the oxyalkylene structure-containing polycarbonate polyol composition mentioned above with polyisocyanate; and a one-component solvent-based coating composition consisting of a polyurethane resin obtained by reacting the oxyalkylene structure-containing polycarbonate polyol composition mentioned above, organic polyisocyanate and a chain extender.

The coating material or coating agent composition (coating material) of the present embodiment can be supplemented with other additives, for example, a curing accelerator (catalyst), a leveling agent, a filler, a dispersant, a flame retardant, a dye, an organic or inorganic pigment, a mold release agent, a rheology modifier, a plasticizer, an antioxidant, an ultraviolet absorber, a light stabilizer, an antifoaming agent, a colorant, and a solvent, according to various purposes. A coating material composition differing in nature, such as a soft-feel coating material and a clear coating material, can be obtained by appropriately containing these other additives.

Examples of the curing accelerator (catalyst) include, but are not particularly limited to, those generally used such as monoamine, diamine, triamine, cyclic amine, alcohol amine, ether amine, and metal catalysts.

Examples of the monoamine include, but are not particularly limited to, triethylamine and N,N-dimethylcyclohexylamine. Examples of the diamine include, but are not particularly limited to, tetramethylethylenediamine.

Examples of the alcohol amine include, but are not particularly limited to, dimethylethanolamine.

Examples of the metal catalyst include, but are not particularly limited to, potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zinc neodecanoate, phosphine, and phosphorine.
Specific examples of the organic solvent include, but are not particularly limited to, amide solvents, sulfoxide solvents, ketone solvents, ether solvents, ester solvents, carbonic acid ester solvents, and aromatic hydrocarbon solvents.
These organic solvents may be used singly or may be used as a mixed solvent of two or more thereof.

## Examples

Hereinafter, the present embodiment will be described in more detail with reference to Examples and Comparative Examples. However, the present embodiment is not limited by these Examples and Comparative Examples by any means.
Various physical property values, analysis methods, and measurement conditions of oxyalkylene structure-containing polycarbonate polyol compositions obtained in Examples and Comparative Examples mentioned later will be described below. For numeric values, such as chemical shift values of $^1$H-NMR, which vary depending on measurement objects, it is desirable to use a suitable value for each measurement object.

<<First Examples>>

[Physical property 1] Measurement of hydroxy value (OHV)

The hydroxy value was measured by the following method.
A volumetric flask was used, and pyridine was added to 12.5 g of acetic anhydride so as to bring the amount to 50 mL, to prepare an acetylation reagent. In a 100 mL eggplant-shaped flask, 1.0 to 10.0 g of a sample was weighed and placed. To the eggplant-shaped flask, 5 mL of the acetylation reagent and 10 mL of toluene were added with a whole pipette to obtain a solution. Then, a condenser was attached to the eggplant-shaped flask, and the solution was stirred and heated at 100°C for 1 hour. To the eggplant-shaped flask, 2.5 mL of distilled water was added with a whole pipette, and the obtained solution was further heated and stirred for 10 minutes. After cooling of the solution for 2 to 3 minutes, to the eggplant-shaped flask, 12.5 mL of ethanol was added, and 2 to 3 drops of phenolphthalein were added as an indicator, followed by titration with 0.5 mol/L ethanolic potassium hydroxide. In a 100 mL eggplant-shaped flask, 5 mL of the acetylation reagent, 10 mL of toluene and 2.5 mL of distilled water were placed, and the solution was heated and stirred for 10 minutes, followed by titration of the obtained solution in the same way as above (blank test). On the basis of the results, the hydroxy value (OHV) was calculated according to the following expression (i):

$$\text{Hydroxy value (mg-KOH/g)} = \{(b - a) \times 28.05 \times f\} / e \ \ldots \text{(i)}$$

In the expression (i), a represents the amount of the sample titrated (mL); b represents the amount titrated (mL) in the blank test; e represents the amount of the sample (g); and f represents the factor of the titration solution.

[Physical property 2] Number-average molecular weight

The number-average molecular weight was calculated from the hydroxy value determined in [Physical property 1] using the following expression (ii):

$$\text{Number-average molecular weight (A)} = n / (H \times 10^{-3} / 56.11) \ \ldots \text{(ii)}$$

In the expression (ii), n represents an average number of functional groups, and H represents the hydroxy value (mg-KOH/g).
The average number of functional groups (n) was determined as 2 as to polycarbonate polyol synthesized using only a divalent hydroxy compound as a starting material, polycarbonate polyol synthesized using only divalent oxyalkylene polyol and/or a divalent hydroxy compound, and/or an oxyalkylene structure-containing polycarbonate polyol composition synthesized using only a divalent hydroxy compound.
When a polyfunctional monomer was included as a starting material or when the average number of functional groups was unknown, the average number of functional groups was determined as follows: the average number of functional groups (n) per molecule was determined from a number-average molecular weight (Mn) based on standard polystyrene determined by the method of Physical property 3 mentioned later and a separately analyzed hydroxy value

determined by the method of Physical property 1 mentioned above using the following expression (iii):

$$\text{Average number of functional groups (n)} = (\text{Mn}) \times ([\text{OHV}] \times 10^{-3} / 56.1) \ldots \text{(iii)}$$

The average number of carbon atoms in polycarbonate polyol is the same as the "average number of carbon atoms in a polyvalent hydroxy compound after hydrolysis" calculated by the method of Physical property 6 mentioned later.

[Physical property 3] GPC measurement

The number-average molecular weight (Mn) and weight-average molecular weight (Mw) of the oxyalkylene structure-containing polycarbonate polyol composition were measured by gel permeation chromatography (GPC) in accordance with the following method.

The oxyalkylene structure-containing polycarbonate polyol composition obtained in each of Examples and Comparative Examples mentioned later was used as a sample. The concentration of the measurement sample was adjusted to 0.5% by mass with tetrahydrofuran (hereinafter, also referred to as "THF"). The number-average molecular weight (Mn) and weight-average molecular weight (Mw) based on standard polystyrene were measured using a GPC apparatus given below.

The molecular weight distribution (Mw/Mn) was calculated from peaks at 22.0 to 36.5 min under conditions given below.

GPC apparatus: HLC-8320 manufactured by Tosoh Corp.

Analytical column:

One column of TSKgel G4000H

One column of G3000H

Two columns of G2000H

Guard column: TSKgel guard column $H_{XL}$-L

Reference column: TSKgel SuperH-RC

Eluent: Tetrahydrofuran (THF)

Flow rate: 1.0 mL/min

Column temperature: 40°C

RI detector: RI (apparatus: built-in HLC-8320)

Calibration curve: Standard polystyrene (manufactured by Tosoh Corp.)

F-20 (molecular weight: $1.90 \times 10^5$)

F-10 (molecular weight: $9.64 \times 10^4$)

F-4 (molecular weight: $3.79 \times 10^4$)

F-2 (molecular weight: $1.81 \times 10^4$)

F-1 (molecular weight: $1.02 \times 10^4$)

A-5000 (molecular weight: $5.97 \times 10^3$)

A-2500 (molecular weight: $2.63 \times 10^3$)

A-500

A-1000

The molecular weights of a dimer to a decamer were calculated from A-500 and A-1000.

Dimer (molecular weight: 266)

Trimer (molecular weight: 370)

Tetramer (molecular weight: 474)

Pentamer (molecular weight: 578)

Hexamer (molecular weight: 682)

Heptamer (molecular weight: 786)

Octamer (molecular weight: 890)

Nonamer (molecular weight: 994)

Decamer (molecular weight: 1098)

Calibration curve expression: Cubic polynomial

[Physical property 4] Measurement of hydrolysis

The oxyalkylene structure-containing polycarbonate polyol composition obtained in each of Examples and Comparative Examples mentioned later was hydrolyzed by the following method.

In a 100 mL eggplant-shaped flask, 1 g of a sample was collected, and further, 30 g of ethanol and 4 g of potassium hydroxide were placed, followed by reaction at 100°C for 1 hour. After cooling to room temperature, to the eggplant-shaped flask, 2 to 3 drops of phenolphthalein were added as an indicator, and the mixture was neutralized with hydrochloric acid. The eggplant-shaped flask was cooled for 1 hour or longer in a refrigerator. Then, a precipitated salt was filtered off to obtain a filtrate.

[Physical property 5] Molar ratio of polyvalent hydroxy compound (except for polyvalent hydroxy compound having oxyalkylene structure) after hydrolysis

The molar ratio of a polyvalent hydroxy compound (except for a polyvalent hydroxy compound having an oxyethylene structure) after hydrolysis was measured by the following method.

The filtrate obtained by hydrolysis was analyzed by gas chromatography. The concentration of each polyvalent hydroxy compound was determined by preparing in advance a calibration curve from each known polyvalent hydroxy compound as a standard substance, and calculating % by weight from an area ratio obtained by gas chromatography (GC). The analysis was performed using Gas chromatography GC-2014 (manufactured by Shimadzu Corp.) equipped with DB-WAX (manufactured by J&W Scientific Inc.) as a column and using a hydrogen flame ionization detector (FID) as a detector. For the temperature rise profile of the column, the temperature was maintained at 60°C for 5 minutes and then raised up to 250°C at 10°C/min. The molar ratio of a polyvalent hydroxy compound (except for a polyvalent hydroxy compound having an oxyethylene structure) was calculated from % by weight obtained by the gas chromatography and the molecular weight of each polyvalent hydroxy compound

[Physical property 6] Average number of carbon atoms

The average number of carbon atoms was calculated from the molar ratio of a polyvalent hydroxy compound (except for a polyvalent hydroxy compound having an oxyalkylene structure) after hydrolysis using the following expression (iv):

Average number of carbon atoms in a polyvalent hydroxy compound after hydrolysis = Σ[The number of carbon atoms in a polyvalent hydroxy compound (except for a polyvalent hydroxy compound having an oxyalkylene structure) × Molar fraction of the polyvalent hydroxy compound] (iv)

[Physical property 7] Mass proportion derived from structural unit (2)

The mass proportion derived from a structural unit represented by the following formula (2) (structural unit (2)) was calculated on the basis of a mass calculated from an area ratio as to a polyvalent hydroxy compound (except for a polyvalent hydroxy compound having an oxyalkylene structure) after hydrolysis using the following expression (v):

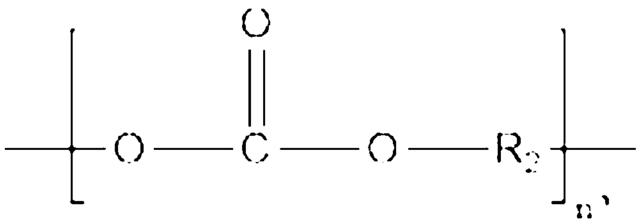

・・・(2)

wherein $R_2$ is a divalent linear, branched or cyclic aliphatic hydrocarbon group, or aromatic hydrocarbon group having 2 or more and 20 or less carbon atoms, the hydrocarbon group optionally having a hetero atom, $R_2$ in plural are the same as or different from each other, and n2 is an integer of 0 to 50.

Mass proportion (% by mass) derived from the structural unit (2) = Σ[(A7) × (60 + 14 × B7)/(C7 × Amount of the sample at the time of hydrolysis)] (v)

A7: Mass (g) of the polyvalent hydroxy compound (except for a polyvalent hydroxy compound having an oxyalkylene structure)

B7: The number of carbon atoms in the polyvalent hydroxy compound (except for a polyvalent hydroxy compound having an oxyalkylene structure)

C7: Molecular weight of the polyvalent hydroxy compound (except for a polyvalent hydroxy compound having an oxyalkylene structure)

[Physical property 8] Mass proportion derived from structural unit (3)

The mass proportion derived from a structural unit represented by the following formula (3) (structural unit (3)) was calculated on the basis of a mass calculated from an area ratio as to diethylene glycol after hydrolysis using the following expression (vi):

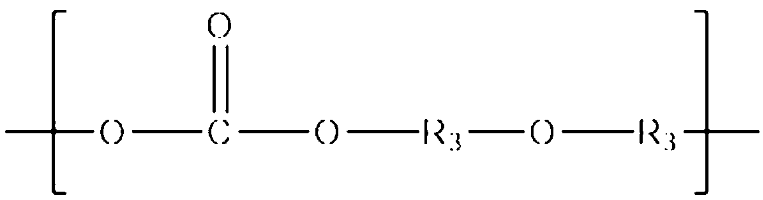

・・・(3)

wherein $R_3$ is a divalent linear hydrocarbon group having 2 carbon atoms.

Mass proportion (% by mass) derived from the structural unit (3) = (A8) × 132 /(106 × Amount of the sample at the time of hydrolysis)] (vi)

A8: Mass (g) of diethylene glycol

[Physical property 9] Number-average molecular weight (Mn1) and structure of polyvalent hydroxy compound having oxyalkylene structure after hydrolysis

The number-average molecular weight (Mn1) of a polyvalent hydroxy compound having an oxyalkylene structure after hydrolysis was determined by distilling off ethanol from the filtrate obtained by hydrolysis, and using the same method as in GPC described above. The ratio (Mn1/Mn0) of the number-average molecular weight (Mn1) of the polyvalent hydroxy compound having an oxyalkylene structure after hydrolysis to the number-average molecular weight (Mn0) of the oxyalkylene structure-containing polycarbonate polyol composition determined in [Physical property 3] described above was calculated.

The structure of the polyvalent hydroxy compound having an oxyalkylene structure after hydrolysis was determined by the following method 1), 2) and/or 3)

1) Determined from the structures of the starting materials used.

2) Confirmed by identifying a structure from various spectra obtained by the mass spectrometry, FT-IR measurement, $^{1}$H-NMR measurement and/or $^{13}$C-NMR of a sample.
The analysis method and the identification were performed with reference to a method known in the art and/or Spectrometric Identification of Organic Compounds (7th ed) (Tokyo Kagaku Dojin).

3) Determined by pyrolysis GC/MS and/or liquid chromatography-mass spectrometry (LC-MS). Specific examples of the analysis method include the following.

<Pyrolysis GC/MS>

Apparatus: Agilent Technology 6890GC/5973MSD

Column: HP-5MS (L: 30 m, I.D.: 0.25 mm, film thickness: 0.25 μm)

Carrier: Helium

Ionization method: EI

Mass range: m/z 10-800

Oven temperature: 40°C (5 min hold) → (10°C/min) → 320°C (16 min hold)

Injection port temperature: 320°C

Transfer temperature: 320°C

Split ratio: Split 1/50

Amount of sample: 0.1 mg

Pyrolysis temperature: 600°C

Interface temperature: 320°C

<LC-MS>

1. Ethanol is distilled off from the filtrate obtained by hydrolysis.
2. 4.5 mg of the resultant of 1 is weighed, and the volume is made up to 10 mL using acetonitrile, followed by filtration and subsequent LC-MS measurement using an apparatus and conditions given below.
3. The same measurement as in 2 is performed using a polyvalent hydroxy compound having an oxyalkylene structure with a molecular weight similar to the results of 2 to confirm that the analysis results are consistent with the results of 2.

Apparatus: Thermo Fisher Ultimate 3000/LTQ orbitrap XL
Column: Waters Xbridge C18 5 μm 4.6 mm in diameter × 150 mm in length
Flow rate: 0.2 mL/min
Ionization method: ESI-positive
Injection volume: 1.0 μL
Eluent conditions:

[Table I]

| Time (min) | Flow rate (mL/min) | A (water) | B (acetonitrile) |
|---|---|---|---|
| 0 | 0.2 | 20 | 80 |
| 14 | 0.2 | 20 | 80 |

[Physical property 10] Integral value (B)/integral value (A)

The $^1$H-NMR of the oxyalkylene structure-containing polycarbonate polyol composition was measured using deuterated chloroform as a solvent and tetramethylsilane as a reference substance. The ratio of the integral value (B) of signals at 3.3 to 3.6 ppm to the integral value (A) of signals at 3.90 to 4.45 ppm (integral value (B)/integral value (A)) in the obtained $^1$H-NMR was calculated.
Each integral value was measured by nuclear magnetic resonance (NMR) as follows.

NMR apparatus: JEOL-ECZ500

Observation nucleus: $^1$H

Waiting time: 5 sec

Scan: 128 times

Solvent: CDCl3

Measurement temperature: Room temperature

Chemical shift reference: TMS 0.00 ppm

[Evaluation 1] Tensile test at ordinary temperature

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). A tensile test was conducted as to the prepared test specimen at a temperature of 23°C (relative humidity: 55%) at a distance between chucks of 20 mm and a pulling rate of 100 mm/min using a tensile tester (manufactured by Orientec Co., Ltd., product name "Tensilon, model RTE-1210"). Stress when the test specimen was stretched by 100% (100% modulus) was measured. A lower 100% modulus was evaluated as better flexibility at ordinary temperature.

[Evaluation 2] Tensile test at low temperature

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). The prepared test specimen was loaded at a distance between chucks of 20 mm in a tensile tester (manufactured by Orientec Co., Ltd., product name "Tensilon, model RTE-1210") with a thermostat bath (manufactured by Orientec Co., Ltd., "model TLF-R3T-E-W"). Subsequently, the test specimen was left standing at -20°C for 5 minutes. Then, the tensile test of the test specimen was conducted at a pulling rate of 100 mm/min. Stress when the test specimen was stretched by 100% (100% modulus) was measured. A lower 100% modulus was evaluated as better flexibility at low temperature.

[Evaluation 3] Evaluation of moist heat resistance (durability)

A strip of a sample having a width of 10 mm, a length of 100 mm, and a thickness of approximately 100 μm was prepared from a polyurethane film obtained in each of Application Examples and Application Comparative Examples mentioned later. The prepared sample was heated under conditions involving a temperature of 85°C and a humidity of 85% for 10 days in a thermo-hygrostat manufactured by ESPEC Corp. under product name of "PL-1J". The breaking strength of the sample thus heated was measured in the same manner as in <Tensile test at ordinary temperature> described above, and the retention (%) of the breaking strength was determined by the following expression (vii).

$$\text{Retention (\%)} = \text{Breaking strength after heating/Breaking strength before heating} \times 100 \quad \text{(vii)}$$

Higher retention (%) of breaking strength was evaluated as better durability.

[Evaluation 4] Acid resistance

A polyurethane film obtained in each of Application Examples and Application Comparative Examples mentioned later was placed on a glass plate, and 0.1 cc of a 0.1 mol/L aqueous sulfuric acid solution was added dropwise to the coating film. In order to prevent the volatilization of water, the liquid droplets were covered, and the plate was left standing at 50°C for 24 hours. After a lapse of a predetermined time, sulfuric acid attached to the coated plate was washed with water and dried on a horizontal table at 23°C in a 50% RH atmosphere. The appearance of the obtained coating film was visually observed.

[Evaluation criteria]

O: No change in the appearance of the coating film

△: The liquid droplets left remnants on the coating film, or the coating film was slightly cloudy.

×: The liquid droplet portion of the coating film swelled, or the coating film was cloudy.

[Evaluation 5] Prepolymer viscosity

50 g of the oxyalkylene structure-containing polycarbonate polyol composition obtained in each of Examples and Comparative Examples mentioned later was weighed and warmed in an oil bath of 60°C. Approximately 8 to 10 g of MDI (NCO/OH ratio = 1.5) dissolved at 60°C was added thereto, and the mixture was stirred at 200 rpm for 5 minutes with a screw blade and then sampled. The obtained prepolymer was subjected to viscosity measurement using an apparatus given below. The viscosity of the obtained prepolymer was evaluated according to criteria given below.
Apparatus: manufactured by Anton Paar
Modular Compact Rheometer MCR102

[Evaluation criteria]

O: The viscosity at 100°C after 80 minutes from the start of measurement was 100,000 mPa.s or less.

×: The viscosity at 100°C after 80 minutes from the start of measurement exceeded 100,000 mPa.s.

[Evaluation 6] Coatability of base fabric

For simulated evaluation toward synthetic leather production, the prepolymer prepared in [Evaluation 5] described above was applied with a thickness of 50 μm onto release paper having a striped pattern (manufactured by LINTEC Corp., R-8). The workability of coating and the appearance of the coating film were visually evaluated.

[Evaluation criteria]

O: The sample was able to be applied onto the release paper without problems, and the coating film surface was smooth.

×: The film had an uneven film thickness or grains and had no surface smoothness.

[Synthesis Example 1] Production of polycarbonate polyol P-1

A 1 L glass flask (hereinafter, also referred to as a "reactor") equipped with a rectifying column packed with a regular packing material, and a stirring apparatus was charged with 230 g of 1,5-pentanediol, 250 g of 1,6-hexanediol, and 400 g of ethylene carbonate. Then, 0.0468 g of titanium tetra-n-butoxide was placed therein as a catalyst. While the reactor was dipped in an oil bath of 165 to 175°C and a portion of the distillate was extracted, the mixture was reacted for 12 hours. Subsequently, the reactor was connected directly to a condenser. The temperature of the oil bath was raised to 180 to 190°C. Then, the pressure was gradually lowered, and the reaction was further performed for 3 hours to obtain polycarbonate polyol P-1 (466 g) which was liquid at ordinary temperature. The hydroxy value of the obtained polycarbonate polyol P-1 was 55.2 mg-KOH/g, and the average number of carbon atoms thereof was 5.5.

[Synthesis Example 2] Production of polycarbonate polyol P-2

A 2 L glass flask (reactor) equipped with a rectifying column packed with a regular packing material, and a stirring apparatus was charged with 832 g of 1,3-propanediol, 5 g of 1,6-hexanediol, and 967 g of ethylene carbonate. Then, 0.100 g of titanium tetra-n-butoxide was placed therein as a catalyst. While a portion of the distillate was extracted, the mixture was reacted at a reaction temperature of 160 to 165°C for 24 hours. Subsequently, the reactor was connected directly to a condenser. The reaction temperature was set to 165 to 175°C. Then, the pressure was gradually lowered, and the reaction was further performed to obtain polycarbonate polyol P-2 (559 g). The hydroxy value of the obtained polycarbonate polyol P-2 was 56.2 mg-KOH/g, and the average number of carbon atoms thereof was 3.03.

[Synthesis Example 3] Production of polycarbonate polyol P-3

A 1 L glass flask (hereinafter, also referred to as a "reactor") equipped with a rectifying column packed with a regular packing material, and a stirring apparatus was charged with 270 g of 1,6-hexanediol, 250 g of 1,4-butanediol, and 445 g of ethylene carbonate. Then, 0.0960 g of titanium tetra-n-butoxide was placed therein as a catalyst. While the reactor was dipped in an oil bath of 140 to 160°C and a portion of the distillate was extracted, the mixture was reacted at a reaction temperature of 90 to 160°C for 20 hours. Subsequently, the reactor was connected directly to a condenser. The temperature of the oil bath was raised to 180°C. Then, the pressure was gradually lowered, and the reaction was further performed for 8 hours to obtain polycarbonate polyol P-3 (462 g) which was liquid at ordinary temperature. The hydroxy value of the obtained polycarbonate polyol P-3 was 56.1 mg-KOH/g, and the average number of carbon atoms thereof was 5.0.

[Synthesis Example 4] Production of polycarbonate polyol P-4

A 2 L glass flask equipped with a rectifying column packed with a regular packing material, and a stirring apparatus was charged with 458 g of 1,5-pentanediol, 500 g of 1,6-hexanediol, and 760 g of ethylene carbonate. Then, 0.086 g of titanium tetra-n-butoxide was placed therein as a catalyst. While the reactor was dipped in an oil bath of 165 to 175°C and a portion of the distillate was extracted, the mixture was reacted for 12 hours. Subsequently, the reactor was connected directly to a condenser. The temperature of the oil bath was raised to 180 to 190°C. Then, the pressure was gradually lowered, and the reaction was further performed for 3 hours to obtain polycarbonate polyol P-4 (860 g) which was liquid at ordinary temperature. The hydroxy value of the obtained polycarbonate polyol P-4 was 110.0 mg-KOH/g, and the average number of carbon atoms thereof was 5.5.

[Example 1] Production of oxyalkylene structure-containing polycarbonate polyol composition SA-1

A 1 L glass flask (hereinafter, also referred to as a "reactor") equipped with a stirring apparatus was charged with 73.3 parts by mass (493 g) of the polycarbonate polyol P-1 obtained in Synthesis Example 1, and 26.7 parts by mass (180 g) of polyoxypropylene glycol (manufactured by Allessa GmbH, "Velvetol H250" (trade name), number-average molecular

weight: approximately 250) as starting materials. Subsequently, in the reactor, the pressure was reduced to 0.1 kPa.s or lower using a vacuum pump, and stirring was conducted at 120°C for 10 minutes. Thereafter, nitrogen substitution was conducted. While the nitrogen flow rate was maintained at 1 L/min, the mixture was heated and stirred at an inside temperature of the reactor of approximately 145°C for 12 hours. The reaction solution was subjected to cloud point titration over time, and when it was confirmed that no change in the amount of cloud point titration had been observed. Then, the pressure was gradually lowered, and a hydroxy value was measured over time. After the hydroxy value reached the target value, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition SA-1. The hydroxy value of the obtained oxyalkylene structure-containing polycarbonate polyol composition SA-1 was 55.3 mg-KOH/g. The average number of functional groups was 2, and the number-average molecular weight was 1982.

Various physical properties of the oxyalkylene structure-containing polycarbonate polyol composition SA-1 were measured by the methods described above. The measurement results are shown in Table 1.

[Example 2] Production of oxyalkylene structure-containing polycarbonate polyol composition SA-2

Oxyalkylene structure-containing polycarbonate polyol composition SA-2 was obtained through the same reaction as in Example 1 using the same apparatus as in Example 1 except that the starting materials were changed to 71.0 parts by mass (442 g) of the polycarbonate polyol P-1 obtained in Synthesis Example 1, and 29.0 parts by mass (180 g) of polyoxytetramethylene glycol (manufactured by Mitsubishi Chemical Corp., "BioPTMG650" (trade name), number-average molecular weight: approximately 650). The average number of functional groups of the obtained oxyalkylene structure-containing polycarbonate polyol composition SA-2 was 2, and various physical properties thereof were measured by the methods described above. The measurement results are shown in Table 1.

[Example 3] Production of oxyalkylene structure-containing polycarbonate polyol composition SA-3

Oxyalkylene structure-containing polycarbonate polyol composition SA-3 was obtained through the same reaction as in Example 1 using the same apparatus as in Example 1 except that the starting materials were changed to 52.8 parts by mass (336 g) of the polycarbonate polyol P-1 obtained in Synthesis Example 1, and 47.2 parts by mass (300 g) of polyoxytetramethylene glycol (manufactured by Mitsubishi Chemical Corp., "BioPTMG650" (trade name), number-average molecular weight: approximately 650). The average number of functional groups of the obtained oxyalkylene structure-containing polycarbonate polyol composition SA-3 was 2, and various physical properties thereof were measured by the methods described above. The measurement results are shown in Table 1.

[Example 4] Production of oxyalkylene structure-containing polycarbonate polyol composition SA-4

Oxyalkylene structure-containing polycarbonate polyol composition SA-4 was obtained through the same reaction as in Example 1 using the same apparatus as in Example 1 except that the starting materials were changed to 70.3 parts by mass (431 g) of the polycarbonate polyol P-2 obtained in Synthesis Example 2, 29.3 parts by mass (180 g) of polyoxypropylene glycol (manufactured by Allessa GmbH, "Velvetol H1000" (trade name), number-average molecular weight: approximately 1000), and 0.4 parts by mass (2.2 g) of diethylene glycol. The average number of functional groups of the obtained oxyalkylene structure-containing polycarbonate polyol composition SA-4 was 2, and various physical properties thereof were measured by the methods described above. The measurement results are shown in Table 1.

[Example 5] Production of oxyalkylene structure-containing polycarbonate polyol composition SA-5

The same apparatus as in Example 1 was used and charged with 73.3 parts by mass (494 g) of the polycarbonate polyol P-2 obtained in Synthesis Example 2, and 29.5 parts by mass (180 g) of polyoxypropylene glycol (manufactured by Allessa GmbH, "Velvetol H250" (trade name), number-average molecular weight: approximately 250) as starting materials. Subsequently, in the reactor, while the pressure was gradually reduced using a vacuum pump, the mixture was heated and stirred at an inside temperature of the reactor of approximately 145°C for 10 hours. The hydroxy value of the reaction solution was measured over time. After the hydroxy value reached the target value, the reaction was further continued under an ordinary pressure condition. The reaction solution was subjected to cloud point titration over time, and when it was confirmed that no change in the amount of cloud point titration had been observed. Then, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition SA-5. The average number of functional groups of the obtained oxyalkylene structure-containing polycarbonate polyol composition SA-5 was 2, and various physical properties thereof were measured by the methods

described above. The measurement results are shown in Table 1.

[Example 6] Production of oxyalkylene structure-containing polycarbonate polyol composition SA-6

The same apparatus as in Example 1 was used and charged with 53.5 parts by mass (288 g) of the polycarbonate polyol P-3 obtained in Synthesis Example 3, and 46.5 parts by mass (250 g) of polyoxypropylene glycol (manufactured by Allessa GmbH, "Velvetol H500" (trade name), number-average molecular weight: approximately 500) as starting materials. Subsequently, in the reactor, while the pressure was gradually reduced using a vacuum pump, the mixture was heated and stirred at an inside temperature of the reactor of approximately 145°C for 10 hours. The hydroxy value of the reaction solution was measured over time. After the hydroxy value reached the target value, the reaction was further continued under an ordinary pressure condition. The reaction solution was subjected to cloud point titration over time, and when it was confirmed that no change in the amount of cloud point titration had been observed. Then, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition SA-6. The average number of functional groups of the obtained oxyalkylene structure-containing polycarbonate polyol composition SA-6 was 2, and various physical properties thereof were measured by the methods described above. The measurement results are shown in Table 1.

[Example 7] Production of oxyalkylene structure-containing polycarbonate polyol composition SA-7

A 1 L glass flask equipped with a rectifying column packed with a regular packing material, and a stirring apparatus was charged with 361 g (4.1 mol) of ethylene carbonate (hereinafter, referred to as "EC"), 130 g (1.4 mol) of 1,4-butanediol, 14.3 g (0.12 mol) of 1,6-hexanediol, and 328 g (1.4 mol) of polyoxypropylene glycol (manufactured by Allessa GmbH, "Velvetol H250" (trade name), number-average molecular weight: approximately 250) as starting materials. To the flask, 0.2 g of titanium tetrabutoxide was added as a catalyst, and the mixture in the flask was stirred and heated at ordinary pressure. Then, while the pressure was reduced and ethylene glycol and EC were removed to the outside of the system, polymerization was performed at a reaction temperature of 145 to 150°C at a pressure of 5 to 1 kPa for 17 hours. During the polymerization, 49.2 g of EC was further added thereto to obtain a polymer. Then, the pressure was further reduced to 0.1 kPa, and polymerization was performed for 1 hour. Subsequently, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition SA-7. The average number of functional groups of the obtained oxyalkylene structure-containing polycarbonate polyol composition SA-7 was 2, and various physical properties thereof were measured by the methods described above. The measurement results are shown in Table 1.

[Example 8] Production of oxyalkylene structure-containing polycarbonate polyol composition SA-8

Oxyalkylene structure-containing polycarbonate polyol composition SA-8 was obtained through the same reaction as in Example 7 except that a 1 L glass flask equipped with a rectifying column packed with a regular packing material, and a stirring apparatus was charged with 217 g (2.4 mol) of EC, and 558 g (2.4 mol) of polyoxypropylene glycol (manufactured by Allessa GmbH, "Velvetol H250" (trade name), number-average molecular weight: approximately 250) used as starting materials; and the amount of EC to be added during polymerization was 81.5 g. The average number of functional groups of the obtained oxyalkylene structure-containing polycarbonate polyol composition SA-8 was 2, and various physical properties thereof were measured by the methods described above. The measurement results are shown in Table 1.

[Example 9] Production of oxyalkylene structure-containing polycarbonate polyol composition SA-9

Oxyalkylene structure-containing polycarbonate polyol composition SA-9 was obtained through the same reaction as in Example 1 using the same apparatus as in Example 1 except that the starting materials were changed to 71.0 parts by mass (442 g) of polycarbonate polyol (trade name "DURANOL T6002", manufactured by Asahi Kasei Corp., number-average molecular weight: approximately 2000, diol composition: 1,6-hexanediol (hereinafter, also referred to as "1,6-HDO") = 100 mol%), and 29.0 parts by mass (180 g) of polyoxytetramethylene glycol (manufactured by Mitsubishi Chemical Corp., "BioPTMG650" (trade name), number-average molecular weight: approximately 650). The average number of functional groups of the obtained oxyalkylene structure-containing polycarbonate polyol composition SA-9 was 2, and various physical properties thereof were measured by the methods described above. The measurement results are shown in Table 1.

[Comparative Example 1]

A 0.5 L glass flask (hereinafter, also referred to as a "reactor") equipped with a stirring apparatus was charged with 69.8 parts by mass (209 g) of the polycarbonate polyol P-2 obtained in Synthesis Example 2, 30.1 parts by mass (90.1 g) of polyoxypropylene glycol (manufactured by Allessa GmbH, "Velvetol H2700" (trade name), number-average molecular weight: approximately 2700), 0.65 g of 1,5-pentanediol, and 0.72 g of 1,6-hexanediol as starting materials. Subsequently, in the reactor, the pressure was reduced to 0.1 kPa.s or lower using a vacuum pump, and stirring was conducted at 120°C for 10 minutes. Thereafter, nitrogen substitution was conducted. While the nitrogen flow rate was maintained at 1 L/min, the mixture was heated and stirred at an inside temperature of the reactor of approximately 145°C for 16 hours. The reaction solution was subjected to cloud point titration over time, and when it was confirmed that no change in the amount of cloud point titration had been observed. Then, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition SB-1. The average number of functional groups of the obtained oxyalkylene structure-containing polycarbonate polyol composition SB-1 was 2, and various physical properties thereof were measured by the methods described above. The measurement results are shown in Table 2.

[Comparative Example 2]

Oxyalkylene structure-containing polycarbonate polyol composition SB-2 was obtained through the same reaction as in Comparative Example 1 using the same apparatus as in Comparative Example 1 except that the starting materials used were changed to 74.7 parts by mass (225 g) of the polycarbonate polyol P-3 obtained in Synthesis Example 3, 24.9 parts by mass (75 g) of polytetramethylene glycol (manufactured by Mitsubishi Chemical Corp., "PTMG2000" (trade name), number-average molecular weight: approximately 2000), and 0.4 parts by mass (1.2 g) of diethylene glycol; and the reaction conditions were changed to approximately 165°C and 16 hours. The average number of functional groups of the obtained oxyalkylene structure-containing polycarbonate polyol composition SB-2 was 2, and various physical properties thereof were measured by the methods described above. The measurement results are shown in Table 2.

[Comparative Example 3]

To 300 g of the polycarbonate polyol P-3 obtained in Synthesis Example 3, dibutyl phosphate was added in an amount of 1.3 times the mass ratio of titanium tetra-n-butoxide, and the mixture was heat-treated at 110°C in terms of the inside temperature of the reactor for 3 hours to obtain polycarbonate polyol SB-3. Various physical properties of the obtained oxyalkylene structure-containing polycarbonate polyol SB-3 were measured by the methods described above. The measurement results are shown in Table 2.

[Comparative Example 4]

Oxyalkylene structure-containing polycarbonate polyol composition SB-4 was obtained through the same reaction as in Comparative Example 1 using the same apparatus as in Comparative Example 1 except that the starting materials used were changed to 60.0 parts by mass (180 g) of the polycarbonate polyol P-4 obtained in Synthesis Example 4, and 40.0 parts by mass (75 g) of polyethylene glycol (manufactured by Shanyo Chemical Industries, Ltd., "PEG1000" (trade name), number-average molecular weight: approximately 1000); and the reaction conditions were changed to approximately 145°C and 10 hours. The average number of functional groups of the obtained oxyalkylene structure-containing polycarbonate polyol composition SB-4 was 2, and various physical properties thereof were measured by the methods described above. The measurement results are shown in Table 2.

[Comparative Example 5]

Oxyalkylene structure-containing polycarbonate polyol composition SB-5 was obtained through the same reaction as in Comparative Example 1 using the same apparatus as in Comparative Example 1 except that the starting materials used were changed to 79.1 parts by mass (197 g) of the polycarbonate polyol P-1 obtained in Synthesis Example 1, and 20.9 parts by mass (52 g) of polytetramethylene glycol (manufactured by BASF SE, "PolyTHF250" (trade name), number-average molecular weight: approximately 250); and the reaction conditions were changed to approximately 145°C and 10 hours. The average number of functional groups of the obtained oxyalkylene structure-containing polycarbonate polyol composition SB-5 was 2, and various physical properties thereof were measured by the methods described above. The measurement results are shown in Table 2.

[Example 10] Production of oxyalkylene structure-containing polycarbonate polyol composition SA-10

Oxyalkylene structure-containing polycarbonate polyol composition SA-10 was obtained through the same reaction as in Example 1 using the same apparatus as in Example 1 except that the starting materials were changed to 70.3 parts by mass (431 g) of the polycarbonate polyol P-2 obtained in Synthesis Example 2, 29.3 parts by mass (180 g) of polytetramethylene glycol (manufactured by Mitsubishi Chemical Corp., "PTMG1000" (trade name), number-average molecular weight: approximately 1000), and 0.4 parts by mass (2.2 g) of diethylene glycol. The average number of functional groups of the obtained oxyalkylene structure-containing polycarbonate polyol composition SA-10 was 2, and various physical properties thereof were measured by the methods described above. The measurement results are shown in Table 1.

[Example 11]

In a 2 L glass separable flask equipped with a stirrer, a distillate trap, a pressure adjustment apparatus, a distillation column packed with a 30 mmϕ regular packing material, and a fractionator, 350 g of polytetramethylene ether glycol (PTMG) (molecular weight: 220), 248 g of neopentyl glycol, 450 g of EC, and 345 mg of magnesium(II) acetylacetonate (hereinafter, also referred to as "Mg(acac)2") were placed, followed by nitrogen gas substitution.

The inside temperature was elevated to 150°C with stirring, and the contents were dissolved by heating. Then, while the pressure was reduced and ethylene glycol and EC were removed to the outside of the system, polymerization was performed at a reaction temperature of 150°C to 160°C at a pressure of 6 kPa to 1 kPa for 20 hours. During the polymerization, 153 g of EC was further added thereto to obtain a polymer.

Subsequently, to the obtained polymer, 1.5 g of a solution containing 8.5% by mass of phosphoric acid in 1,4-butanediol (hereinafter, also referred to as "BG solution") was added to deactivate the catalyst. Then, the distillation column was detached therefrom, and residual monomers were removed at 170°C at 0.5 kPa. The obtained product was sent to a thin-film distillation apparatus at a flow rate of 20 g/min and subjected to thin-film distillation (temperature: 210°C, pressure: 53 Pa) to obtain oxyalkylene structure-containing polycarbonate polyol composition SA-11. The thin-film distillation apparatus used was a molecular distillation apparatus model MS-300 manufactured by Shibata Scientific Technology Ltd. with an internal condenser having a diameter of 50 mm, a height of 200 mm, and an area of 0.0314 $m^2$, and a jacket.

The average number of functional groups of the obtained oxyalkylene structure-containing polycarbonate polyol composition SA-11 was 2, and various physical properties thereof were measured by the methods described above. The measurement results are shown in Table 1.

[Table 1]

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| $R_1$ in formula (1) | $C_3H_6$ | $C_4H_8$ | $C_4H_8$ | $C_3H_6$ | $C_3H_6$ | $C_3H_6$ | $C_3H_6$ | $C_3H_6$ | $C_4H_8$ | $C_4H_8$ | $C_4H_8$ |
| Average value of m in formula (1) | 4 | 8.8 | 8.8 | 16.9 | 4 | 8.3 | 4 | 4 | 8.8 | 13.6 | 2.8 |
| Number-average molecular weight Mn1 of polyvalent hydroxy compound after hydrolysis | 250 | 650 | 650 | 1000 | 250 | 500 | 250 | 250 | 650 | 1000 | 220 |
| Average number of carbon atoms in polyvalent hydroxy compound (except for polyvalent hydroxy compound having oxyalkylene structure) after hydrolysis | 5.5 | 5.5 | 5.5 | 3.0 | 3.0 | 5.0 | 4.2 | - | 6.0 | 3.0 | 5.0 |
| % by mass of structural unit (2) | 70% by mass | 70% by mass | 50% by mass | 70% by mass | 70% by mass | 50% by mass | 44% by mass | 0% by mass | 70% by mass | 70% by mass | 43% by mass |
| % by mass of structural unit (3) | 0.5% by mass | 1.2% by mass | 1.6% by mass | 5.0% by mass | 0.7% by mass | 1.8% by mass | 2.6% by mass | 3.1% by mass | 0.9% by mass | 5.0% by mass | 0.7% by mass |
| OHV | 55.3 | 57.0 | 53.9 | 53.7 | 59.4 | 56.1 | 53.4 | 59.7 | 54.0 | 53.5 | 57.5 |
| Mn(Mn0) | 2030 | 1970 | 2080 | 2090 | 1890 | 2001 | 2100 | 1880 | 2078 | 2097 | 1951 |
| Mw/Mn | 2.28 | 2.28 | 2.28 | 2.39 | 2.23 | 2.60 | 2.49 | 1.80 | 2.60 | 2.39 | 2.39 |
| Mn1/Mn0 | 0.1 | 0.3 | 0.3 | 0.5 | 0.1 | 0.2 | 0.1 | 0.1 | 0.3 | 0.5 | 0.1 |
| (B)/(A) | 0.7 | 0.8 | 0.9 | 0.7 | 0.6 | 0.9 | 0.8 | 2.3 | 0.9 | 0.7 | 0.7 |

[Table 2]

| | Comparative Example 1 | Comparative Example 2 | Comparative Example 3 | Comparative Example 4 | Comparative Example 5 |
|---|---|---|---|---|---|
| $R_1$ in formula (1) | $C_3H_6$ | $C_4H_8$ | | $C_2H_4$ | $C_4H_8$ |
| Average value of m in formula (1) | 46.2 | 27 | | 22.3 | 4 |
| Number-average molecular weight Mn1 of polyvalent hydroxy compound after hydrolysis | 2700 | 2000 | | 1000 | 253 |
| Average number of carbon atoms in polyvalent hydroxy compound (except for polyvalent hydroxy compound having oxyalkylene structure) after hydrolysis | 5.5 | 5.5 | 6.0 | 5.5 | 5.0 |
| % by mass of structural unit (2) | 70% by mass | 75% by mass | 100% by mass | 60% by mass | 79% by mass |
| % by mass of structural unit (3) | 2.1% by mass | 6.1% by mass | 0.3% by mass | 2.2% by mass | 1.9% by mass |
| OHV | 54.2 | 53.2 | 55.8 | 111.3 | 134.9 |
| Mn(Mn0) | 2070 | 2109 | 2011 | 1008 | 832 |
| Mw/Mn | 2.95 | 2.80 | 2.20 | 1.58 | 2.00 |
| Mn1/Mn0 | 1.3 | 1.0 | | 1.0 | 0.3 |
| (B)/(A) | 0.4 | 0.5 | | 1.2 | 0.4 |

[Application Example 1] Synthesis of polyurethane film PA-1

In a 500 mL separable flask in which a thermocouple and a condenser were installed, 38 g of the oxyalkylene structure-containing polycarbonate polyol composition SA-1 produced in Example 1, 224 g of dimethylformamide (hereinafter, also abbreviated to "DMF"), and 0.26 g of a 1% solution of dibutyltin dilaurate in toluene (50 ppm based on the total mass of MDI and the oxyalkylene structure-containing polycarbonate polyol composition) were placed, and warmed in an oil bath of 40°C. While the solution in the flask was stirred at 100 rpm under a nitrogen atmosphere in the flask, 14.8 g of MDI (3.09 times [mol] based on OH [mol] of the polycarbonate polyol composition) was added dropwise thereto. The solution in the flask was further stirred for approximately 1.5 hours. The consumption of a theoretical amount was confirmed by the analysis of an isocyanate group concentration to obtain a prepolymer. Subsequently, a necessary amount (3.2 g) of 1,4-butanediol (1,4-BD) calculated from residual isocyanate was added in divided portions into the flask. The solution in the flask was stirred for approximately 1 hour. Then, approximately 1 g of ethanol was added thereto, and the solution in the flask was further stirred for 30 minutes to obtain a solution of polyurethane having a number-average molecular weight of 74000.

The obtained polyurethane was added dropwise to the upper part of a glass plate (JIS R3202, 2 mm × 100 mm × 150 mm), which was then coated using a 0.8 mm thick applicator such that a dry film thickness was 50 to 150 μm. The coating was dried for 2 hours on a hot plate having a surface temperature of 60°C and subsequently for 12 hours in an oven of 80°C. The coating was further left standing under constant temperature and humidity conditions of 23°C and 55% RH for 12 hours or longer to obtain polyurethane film PA-1. The obtained polyurethane film PA-1 was subjected to the evaluation of each physical property by the method described above. The evaluation results are shown in Table 3.

[Application Examples 2 to 11]

Polyurethane films PA-2 to PA-11 were obtained through reaction under the same conditions as in Application Example 1 except that in the production of the polyurethane film of Application Example 1, the oxyalkylene structure-containing polycarbonate polyol composition used was changed to the polycarbonate polyol compositions SA-2 to SA-11 produced in Examples 2 to 11. The obtained polyurethane films PA-2 to PA-11 were subjected to the evaluation of each

physical property by the method described above. The evaluation results are shown in Table 3.

[Application Comparative Examples 1 to 5]

Polyurethane films PB-1 to PB-4 were obtained through reaction under the same conditions as in Application Example 1 except that in the production of the polyurethane film of Application Example 1, the oxyalkylene structure-containing polycarbonate polyol composition, etc. used was changed to the oxyalkylene structure-containing polycarbonate polyol compositions, etc. SB-1 to SB-5 produced in Comparative Examples 1 to 5. The obtained polyurethane films PB-1 to PB-5 were subjected to the evaluation of each physical property by the method described above. The evaluation results are shown in Table 4.

[Table 3]

| | Application Example 1 | Application Example 2 | Application Example 3 | Application Example 4 | Application Example 5 | Application Example 6 | Application Example 7 | Application Example 8 | Application Example 9 | Application Example 10 | Application Example 11 |
|---|---|---|---|---|---|---|---|---|---|---|---|
| Type of oxyalkylene structure-containing polycarbonate polyol composition | SA-1 | SA-2 | SA-3 | SA-4 | SA-5 | SA-6 | SA-7 | SA-8 | SA-9 | SA-10 | SA-11 |
| 100% stress (MPa)/23°C | 4.9 | 4.1 | 3.8 | 4.2 | 4.5 | 4 | 4.2 | 3.5 | 4.5 | 4.5 | 5.5 |
| 100% stress (MPa)/- 20°C | 16.2 | 10 | 7.5 | 15.2 | 23.2 | 8.2 | 7.9 | 5.6 | 13.4 | 16.5 | 17.0 |
| Moist heat resistance test - retention | 78% | 81% | 85% | 81% | 78% | 80% | 65% | 48% | 70% | 80% | 50% |
| Prepolymer viscosity | ○ | ○ | ○ | ○ | ○ | ○ | ○ | ○ | ○ | ○ | ○ |
| Acid resistance | ○ | Δ | Δ | ○ | ○ | ○ | Δ | Δ | Δ | Δ | × |
| Coatability | ○ | ○ | ○ | ○ | ○ | ○ | ○ | ○ | × | ○ | ○ |

[Table 4]

| | Application Comparative Example 1 | Application Comparative Example 2 | Application Comparative Example 3 | Application Comparative Example 4 | Application Comparative Example 5 |
|---|---|---|---|---|---|
| Type of oxyalkylene structure-containing polycarbonate polyol composition | SB-1 | SB-2 | SB-3 | SB-4 | SB-5 |
| 100% stress (MPa)/23°C | 4.7 | 4.6 | 5.7 | 12.0 | 15.0 |
| 100% stress (MPa)/-20°C | 16.5 | 19.2 | 31.1 | 39.0 | 42.0 |
| Moist heat resistance test - retention | 50% | 77% | 92% | 38% | 52% |
| Prepolymer viscosity | × | × | × | ○ | ○ |
| Acid resistance | × | × | × | ○ | ○ |
| Coatability | × | × | × | ○ | ○ |

<<Second Examples>>

[Physical property 2-1] Measurement of hydroxy value (OHV)

The hydroxy value was measured by the following method.

A volumetric flask was used, and pyridine was added to 12.5 g of acetic anhydride so as to bring the amount to 50 mL, to prepare an acetylation reagent. In a 100 mL eggplant-shaped flask, 1.0 to 10.0 g of a sample was weighed and placed. To the eggplant-shaped flask, 5 mL of the acetylation reagent and 10 mL of toluene were added with a whole pipette to obtain a solution. Then, a condenser was attached to the eggplant-shaped flask, and the solution was stirred and heated at 100°C for 1 hour. To the eggplant-shaped flask, 2.5 mL of distilled water was added with a whole pipette, and the obtained solution was further heated and stirred for 10 minutes. After cooling of the solution for 2 to 3 minutes, to the eggplant-shaped flask, 12.5 mL of ethanol was added, and 2 to 3 drops of phenolphthalein were added as an indicator, followed by titration with 0.5 mol/L ethanolic potassium hydroxide. In a 100 mL eggplant-shaped flask, 5 mL of the acetylation reagent, 10 mL of toluene and 2.5 mL of distilled water were placed, and the solution was heated and stirred for 10 minutes, followed by titration of the obtained solution in the same way as above (blank test). On the basis of the results, the hydroxy value (OHV) was calculated according to the following expression (i):

$$\text{Hydroxy value (mg-KOH/g)} = \{(b - a) \times 28.05 \times f\} / e \ \ldots \ (i)$$

In the expression (i), a represents the amount of the sample titrated (mL); b represents the amount titrated (mL) in the blank test; e represents the amount of the sample (g); and f represents the factor of the titration solution.

[Physical property 2-2] Number-average molecular weight

The number-average molecular weight was calculated from the hydroxy value determined in [Physical property 2-1] using the following expression (ii):

$$\text{Number-average molecular weight (A)} = n / (H \times 10^{-3} / 56.11) \ \ldots \ (ii)$$

In the expression (ii), n represents an average number of functional groups, and H represents the hydroxy value (mg-KOH/g).

The average number of functional groups (n) was determined as 2 as to polycarbonate polyol synthesized using only a divalent hydroxy compound as a starting material, polycarbonate polyol synthesized using only divalent oxyalkylene polyol and/or a divalent hydroxy compound, and/or an oxyalkylene structure-containing polycarbonate polyol composition synthesized using only a divalent hydroxy compound.

When a polyfunctional monomer was included as a starting material or when the average number of functional groups was unknown, the average number of functional groups was determined as follows: the average number of functional groups (n) per molecule was determined from a number-average molecular weight (Mn) based on standard

polystyrene determined by the method of Physical property 2-3 mentioned later and a separately analyzed hydroxy value determined by the method of Physical property 2-1 mentioned above using the following expression (iii):

$$\text{Average number of functional groups (n)} = (\text{Mn}) \times ([\text{OHV}] \times 10^{-3} / 56.1) \ldots \text{(iii)}$$

[Physical property 2-3] GPC measurement

The number-average molecular weight (Mn) and weight-average molecular weight (Mw) of the oxyalkylene structure-containing polycarbonate polyol composition were measured by gel permeation chromatography (GPC) in accordance with the following method.

The oxyalkylene structure-containing polycarbonate polyol composition obtained in each of Examples and Comparative Examples mentioned later was used as a sample. The concentration of the measurement sample was adjusted to 0.5% by mass with tetrahydrofuran (hereinafter, also referred to as "THF"). The number-average molecular weight (Mn) and weight-average molecular weight (Mw) based on standard polystyrene were measured using a GPC apparatus given below.

The molecular weight distribution (Mw/Mn) was calculated from peaks at 22.0 to 36.5 min under conditions given below.

GPC apparatus: HLC-8320 manufactured by Tosoh Corp.

Analytical column: One column of TSKgel G4000H

One column of G3000H

Two columns of G2000H

Guard column: TSKgel guardcolumn $H_{XL}$-L

Reference column: TSKgel SuperH-RC

Eluent: Tetrahydrofuran (THF)

Flow rate: 1.0 mL/min

Column temperature: 40°C

RI detector: RI (apparatus: built-in HLC-8320)

Calibration curve: Standard polystyrene (manufactured by Tosoh Corp.)

F-20 (molecular weight: $1.90 \times 10^5$)

F-10 (molecular weight: $9.64 \times 10^4$)

F-4 (molecular weight: $3.79 \times 10^4$)

F-2 (molecular weight: $1.81 \times 10^4$)

F-1 (molecular weight: $1.02 \times 10^4$)

A-5000 (molecular weight: $5.97 \times 10^3$)

A-2500 (molecular weight: $2.63 \times 10^3$)

A-500

A-1000

The molecular weights of a dimer to a decamer were calculated from A-500 and A-1000.

Dimer (molecular weight: 266)

Trimer (molecular weight: 370)

Tetramer (molecular weight: 474)

Pentamer (molecular weight: 578)

Hexamer (molecular weight: 682)

Heptamer (molecular weight: 786)

Octamer (molecular weight: 890)

Nonamer (molecular weight: 994)

Decamer (molecular weight: 1098)

Calibration curve expression: Cubic polynomial

[Physical property 2-4] Measurement of hydrolysis

The oxyalkylene structure-containing polycarbonate polyol composition obtained in each of Examples and Comparative Examples mentioned later was hydrolyzed by the following method.

In a 100 mL eggplant-shaped flask, 1 g of a sample was collected, and further, 30 g of ethanol and 4 g of potassium hydroxide were placed, followed by reaction at 100°C for 1 hour. After cooling to room temperature, to the eggplant-shaped flask, 2 to 3 drops of phenolphthalein were added as an indicator, and the mixture was neutralized with hydrochloric acid. The eggplant-shaped flask was cooled for 1 hour or longer in a refrigerator. Then, a precipitated salt was filtered off to obtain a filtrate.

[Physical property 2-5] Molar ratio of $R_b/R_c$

The molar ratio of $R_b/R_c$ was determined from the molar ratio of a polyvalent hydroxy compound (except for a polyvalent hydroxy compound having an oxyalkylene structure) after hydrolysis.

The molar ratio of a polyvalent hydroxy compound (except for a polyvalent hydroxy compound having an oxyalkylene structure) after hydrolysis was measured by the following method.

The filtrate obtained by hydrolysis was analyzed by gas chromatography. The concentration of each polyvalent hydroxy compound was determined by preparing in advance a calibration curve from each known polyvalent hydroxy compound as a standard substance, and calculating % by mass from an area ratio obtained by gas chromatography (GC). The analysis was performed using Gas chromatography GC-2014 (manufactured by Shimadzu Corp.) equipped with DB-WAX (manufactured by J&W Scientific Inc.) as a column and using a hydrogen flame ionization detector (FID) as a detector. For the temperature rise profile of the column, the temperature was maintained at 60°C for 5 minutes and then raised up to 250°C at 10°C/min. The molar ratio of a polyvalent hydroxy compound (except for a polyvalent hydroxy compound having an oxyethylene structure) was calculated from % by mass obtained by the gas chromatography and the molecular weight of each polyvalent hydroxy compound.

[Physical property 2-6] Number-average molecular weights and structures of structural unit (A) and dihydroxy compound (D)

The number-average molecular weights and structures of the structural unit (A) and the dihydroxy compound (D) were identified from a polyvalent hydroxy compound having an oxyalkylene structure after hydrolysis.

The number-average molecular weight of a polyvalent hydroxy compound having an oxyalkylene structure after hydrolysis was determined by distilling off ethanol from the filtrate obtained by hydrolysis, and using the same method as in GPC described above.

The structure of the polyvalent hydroxy compound having an oxyalkylene structure after hydrolysis was determined by the following method 1), 2) and/or 3)

1) Determined from the structures of the starting materials used.

2) Confirmed by identifying a structure from various spectra obtained by the mass spectrometry, FT-IR measurement, $^{1}H$-NMR measurement and/or $^{13}C$-NMR of a sample.
The analysis method and the identification were performed with reference to a method known in the art and/or Spectrometric Identification of Organic Compounds (7th ed) (Tokyo Kagaku Dojin).

3) Determined by pyrolysis GC/MS and/or liquid chromatography-mass spectrometry (LC-MS). Specific examples of the analysis method include the following.

<Pyrolysis GC/MS>

Apparatus: Agilent Technology 6890GC/5973MSD

Column: HP-5MS (L: 30 m, I.D.: 0.25 mm, film thickness: 0.25 μm)

Carrier: Helium

Ionization method: EI

Mass range: m/z 10-800

Oven temperature: 40°C (5 min hold) → (10°C/min) → 320°C (16 min hold)

Injection port temperature: 320°C

Transfer temperature: 320°C

Split ratio: Split 1/50

Amount of sample: 0.1 mg

Pyrolysis temperature: 600°C

Interface temperature: 320°C

<LC-MS>

1. Ethanol is distilled off from the filtrate obtained by hydrolysis.
2. 4.5 mg of the resultant of 1 is weighed, and the volume is made up to 10 mL using acetonitrile, followed by filtration and subsequent LC-MS measurement using an apparatus and conditions given below.
3. The same measurement as in 2 is performed using a polyvalent hydroxy compound having an oxyalkylene structure with a molecular weight similar to the results of 2 to confirm that the analysis results are consistent with the results of 2.
Apparatus: Thermo Fisher Ultimate 3000/LTQ orbitrap XL
Column: Waters Xbridge C18 5 um 4.6 mm in diameter × 150 mm in length
Flow rate: 0.2 mL/min
Ionization method: ESI-positive
Injection volume: 1.0 uL
Eluent conditions:

[Table 2-I]

| Time (min) | Flow rate (mL/min) | A (water) | B (acetonitrile) |
|---|---|---|---|
| 0 | 0.2 | 20 | 80 |

(continued)

| Time (min) | Flow rate (mL/min) | A (water) | B (acetonitrile) |
|---|---|---|---|
| 14 | 0.2 | 20 | 80 |

[Physical property 2-7] % by mass of dihydroxy compound (D)

1. The oxyalkylene structure-containing polycarbonate polyol composition obtained in each of Examples and Comparative Examples mentioned later was adjusted to a sample solution having a concentration of 0.5 mg/mL using acetonitrile, followed by filtration and subsequent LC-MS measurement using an apparatus and conditions given below.

2. The same measurement as in 1 was performed using a polyvalent hydroxy compound having an oxyalkylene structure with a molecular weight similar to the results of [Physical property 2-6] described above to prepare a calibration curve.

3. The content (% by mass) of a free dihydroxy compound (D) (compound represented by the formula (D)) having an oxyalkylene structure in the oxyalkylene structure-containing polycarbonate polyol composition obtained in each of Examples and Comparative Examples mentioned later was determined from the results of 1 and 2.

[LC-MS measurement]

LC
Apparatus: Waters, UPLC
Column: Imtakt, Unison UK-C1 MF (2 mm I.D. × 30 mm, 3 μm)
Column temperature: 40°C, flow rate: 0.3 mL/min
Mobile phase A = 10 mM aqueous ammonium acetate solution
B = Acetonitrile

[Table 2-II]

| Gradient: | | |
|---|---|---|
| Time (min) | A% | B% |
| 0 | 98 | 2 |
| 10 | 0 | 100 |
| 13 | 0 | 100 |
| 13.1 | 98 | 2 |
| 20 | 98 | 2 |

Injection volume: 1 μL
MS
Apparatus: Waters, Synapt G2
Ionization: ESI+
Measurement range: m/z 50 to 2000

[Physical property 2-8] % by mass of structural unit (A)

The % by mass of the structural unit (A) was calculated from a mass calculated from an area ratio as to a polyvalent hydroxy compound (except for a polyvalent hydroxy compound having an oxyalkylene structure) after hydrolysis using the following expression (vi):

% by mass of the structural unit (A) = {1 - Σ[(A8) × (60 + 14 × B8)/(C8 × Amount of the sample at the time of hydrolysis)] × 100 (vi)

A8: Mass (g) of the polyvalent hydroxy compound (except for a polyvalent hydroxy compound having an oxyalkylene structure)

B8: The number of carbon atoms in the polyvalent hydroxy compound (except for a polyvalent hydroxy compound having an oxyalkylene structure)

C8: Molecular weight of the polyvalent hydroxy compound (except for a polyvalent hydroxy compound having an oxyalkylene structure)

[Physical property 2-9] Mass proportion ((D)/(A)) of dihydroxy compound (D) to structural unit (A)

The mass proportion ((D)/(A)) of the dihydroxy compound (D) to the structural unit (A) was calculated from the values analyzed and calculated in [Physical property 2-7] and [Physical property 2-8] described above using the following expression (vii):

(D)/(A) = Content (% by mass) of the dihydroxy compound (D)/% by mass of the structural unit (A) × 100 (vii)

[Evaluation 2-1] Tensile test at ordinary temperature

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). A tensile test was conducted as to the prepared test specimen at a temperature of 23°C (relative humidity: 55%) at a distance between chucks of 20 mm and a pulling rate of 100 mm/min using a tensile tester (manufactured by Orientec Co., Ltd., product name "Tensilon, model RTE-1210"). Stress when the test specimen was stretched by 100% (100% modulus) was measured. A lower 100% modulus was evaluated as better flexibility at ordinary temperature.

[Evaluation 2-2] Tensile test at low temperature

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). The prepared test specimen was loaded at a distance between chucks of 20 mm in a tensile tester (manufactured by Orientec Co., Ltd., product name "Tensilon, model RTE-1210") with a thermostat bath (manufactured by Orientec Co., Ltd., "model TLF-R3T-E-W"). Subsequently, the test specimen was left standing at -20°C for 5 minutes. Then, the tensile test of the test specimen was conducted at a pulling rate of 100 mm/min. Stress when the test specimen was stretched by 100% (100% modulus) was measured. A lower 100% modulus was evaluated as better flexibility at low temperature.

[Evaluation 2-3] Evaluation of moist heat resistance (durability)

A strip of a sample having a width of 10 mm, a length of 100 mm, and a thickness of approximately 100 m was prepared from a polyurethane film obtained in each of Application Examples and Application Comparative Examples mentioned later. The prepared sample was heated under conditions involving a temperature of 85°C and a humidity of 85% for 10 days in a thermo-hygrostat manufactured by ESPEC Corp. under product name of "PL-1J". The breaking strength of the sample thus heated was measured in the same manner as in <Tensile test at ordinary temperature> described above, and the retention (%) of the breaking strength was determined by the following expression (vii).

Retention (%) = Breaking strength after heating/Breaking strength before heating × 100 (vii)

Higher retention (%) of breaking strength was evaluated as better durability.

[Evaluation 2-4] Acid resistance

A polyurethane film obtained in each of Application Examples and Application Comparative Examples mentioned later was placed on a glass plate, and 0.1 cc of a 0.1 mol/L aqueous sulfuric acid solution was added dropwise to the coating film. In order to prevent the volatilization of water, the liquid droplets were covered, and the plate was left standing at 50°C for 24 hours. After a lapse of a predetermined time, sulfuric acid attached to the coated plate was washed with water and dried on a horizontal table at 23°C in a 50% RH atmosphere. The appearance of the obtained coating film was visually observed.

[Evaluation criteria]

O: No change in the appearance of the coating film

△: The liquid droplets left remnants on the coating film, or the coating film was slightly cloudy.

×: The liquid droplet portion of the coating film swelled, or the coating film was cloudy.

[Evaluation 2-5] Prepolymer viscosity

50 g of the oxyalkylene structure-containing polycarbonate polyol composition obtained in each of Examples and Comparative Examples mentioned later was weighed and warmed in an oil bath of 60°C. Approximately 8 to 10 g of MDI (NCO/OH ratio = 1.5) dissolved at 60°C was added thereto, and the mixture was stirred at 200 rpm for 5 minutes with a screw blade and then sampled. The obtained prepolymer was subjected to viscosity measurement using an apparatus given below. The viscosity of the obtained prepolymer was evaluated according to criteria given below.
Apparatus: manufactured by Anton Paar
Modular Compact Rheometer MCR102

[Evaluation criteria]

○: The viscosity at 100°C after 80 minutes from the start of measurement was 100,000 mPa.s or less.

×: The viscosity at 100°C after 80 minutes from the start of measurement exceeded 100,000 mPa.s.

[Evaluation 2-6] Coatability of base fabric

For simulated evaluation toward synthetic leather production, the prepolymer prepared in [Evaluation 2-5] described above was applied with a thickness of 50 μm onto release paper having a striped pattern (manufactured by LINTEC Corp., R-8). The workability of coating and the appearance of the coating film were visually evaluated.

[Evaluation criteria]

O: The sample was able to be applied onto the release paper without problems, and the coating film surface was smooth.

×: The film had an uneven film thickness or grains and had no surface smoothness.

[Evaluation 2-7] Evaluation of quality stability of long-term storage

The oxyalkylene structure-containing polycarbonate polyol composition obtained in each of Examples and Comparative Examples mentioned later was left standing as a sample in a clear, colorless glass bottle at 50°C for 1 month and then left standing at 25°C for 3 months. Storage under the conditions described above was repeated twice, and the contents were evaluated according to the following criteria.

[Evaluation criteria]

O: Homogeneously liquid

△: Turbid

×: Cloudy or separated into two layer

[Synthesis Example 2-1] Production of polycarbonate polyol P-2-1

A 1 L glass flask (hereinafter, also referred to as a "reactor") equipped with a rectifying column packed with a regular packing material, and a stirring apparatus was charged with 230 g of 1,5-petanediol, 250 g of 1,6-hexanediol, and 400 g of ethylene carbonate. Then, 0.0468 g of titanium tetra-n-butoxide was placed therein as a catalyst. While the reactor was dipped in an oil bath of 165 to 175°C and a portion of the distillate was extracted, the mixture was reacted for 12 hours. Subsequently, the reactor was connected directly to a condenser. The temperature of the oil bath was raised to 180 to 190°C. Then, the pressure was gradually lowered, and the reaction was further performed for 3 hours to obtain polycarbonate polyol P-2-1 (466 g) which was liquid at ordinary temperature. The hydroxy value of the obtained polycarbonate polyol P-2-1 was 55.2 mg-KOH/g.

[Synthesis Example 2-2] Production of polycarbonate polyol P-2-2

A 2 L glass flask (reactor) equipped with a rectifying column packed with a regular packing material, and a stirring apparatus was charged with 832 g of 1,3-propanediol, 4 g of 2-methyl-1,3-propanediol, and 967 g of ethylene carbonate. Then, 0.100 g of titanium tetra-n-butoxide was placed therein as a catalyst. While a portion of the distillate was extracted, the mixture was reacted at a reaction temperature of 160 to 165°C for 24 hours. Subsequently, the reactor was connected directly to a condenser. The reaction temperature was set to 165 to 175. Then, the pressure was gradually lowered, and the reaction was further performed to obtain polycarbonate polyol P-2 (559 g). The hydroxy value of the obtained polycarbonate polyol P-2-2 was 56.2 mg-KOH/g.

[Synthesis Example 2-3] Production of polycarbonate polyol P-2-3

A 1 L glass flask (hereinafter, also referred to as a "reactor") equipped with a rectifying column packed with a regular packing material, and a stirring apparatus was charged with 270 g of 1,6-hexanediol, 250 g of 1,4-butanediol, and 445 g of ethylene carbonate. Then, 0.0960 g of titanium tetra-n-butoxide was placed therein as a catalyst. While the reactor was dipped in an oil bath of 140 to 160°C and a portion of the distillate was extracted, the mixture was reacted at a reaction temperature of 90 to 160°C for 20 hours. Subsequently, the reactor was connected directly to a condenser. The temperature of the oil bath was raised to 180°C. Then, the pressure was gradually lowered, and the reaction was further performed for 8 hours to obtain polycarbonate polyol P-2-3 (462 g) which was liquid at ordinary temperature. The hydroxy value of the obtained polycarbonate polyol P-2-3 was 56.1 mg-KOH/g.

[Synthesis Example 2-4] Production of polycarbonate polyol P-2-4

A 1 L glass flask (hereinafter, also referred to as a "reactor") equipped with a rectifying column packed with a regular packing material, and a stirring apparatus was charged with 142 g of 1,6-hexanediol, 330 g of 1,4-butanediol, and 429 g of ethylene carbonate. Then, 0.090 g of titanium tetra-n-butoxide was placed therein as a catalyst. While the reactor was dipped in an oil bath of 140 to 160°C and a portion of the distillate was extracted, the mixture was reacted at a reaction temperature of 90 to 160°C for 20 hours. Subsequently, the reactor was connected directly to a condenser. The temperature of the oil bath was raised to 180°C. Then, the pressure was gradually lowered, and the reaction was further performed for 8 hours to obtain polycarbonate polyol P-2-4 (405 g) which was liquid at ordinary temperature. The hydroxy value of the obtained polycarbonate polyol P-2-4 was 56.1 mg-KOH/g.

[Example 2-1] Production of oxyalkylene structure-containing polycarbonate polyol composition A-1

A 1 L glass flask (hereinafter, also referred to as a "reactor") equipped with a stirring apparatus was charged with 73.3 parts by mass (493 g) of the polycarbonate polyol P-2-1 obtained in Synthesis Example 2-1, and 13.4 parts by mass (90 g) of polyoxypropylene glycol (manufactured by Allessa GmbH, "Velvetol H250" (trade name), number-average

molecular weight: approximately 250) as starting materials. Subsequently, in the reactor, the pressure was reduced to 0.1 kPa.s or lower using a vacuum pump, and stirring was conducted at 120°C for 10 minutes. Thereafter, nitrogen substitution was conducted. While the nitrogen flow rate was maintained at 1 L/min, the mixture was heated and stirred at an inside temperature of the reactor of approximately 145°C for 8 hours. Then, 13.4 parts by mass (90 g) of polyoxypropylene glycol (Velvetol H250) was further added thereto, and the mixture was further heated and stirred at 145°C for 4 hours. The reaction solution was subjected to cloud point titration over time, and when it was confirmed that no change in the amount of cloud point titration had been observed. Then, the pressure was gradually lowered, and a hydroxy value was measured over time. After the hydroxy value reached the target value, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition A-1. The hydroxy value of the obtained oxyalkylene structure-containing polycarbonate polyol composition A-1 was 55.3 mg-KOH/g. The average number of functional groups was 2, and the number-average molecular weight was 1982.

Various physical properties of the oxyalkylene structure-containing polycarbonate polyol composition A-1 were measured by the methods described above. The measurement results are shown in Table 2-1.

[Example 2-2] Production of oxyalkylene structure-containing polycarbonate polyol composition A-2

The same apparatus as in Example 2-1 was used and charged with 73.3 parts by mass (494 g) of the polycarbonate polyol P-2-2 obtained in Synthesis Example 2-2, and 14.8 parts by mass (90 g) of polyoxypropylene glycol (manufactured by Allessa GmbH, "Velvetol H250" (trade name), number-average molecular weight: approximately 250) as starting materials. Subsequently, in the reactor, while the pressure was gradually reduced using a vacuum pump, the mixture was heated and stirred at an inside temperature of the reactor of approximately 145°C for 6 hours. Then, 14.8 parts by mass (90 g) of polyoxypropylene glycol (Velvetol H250) was further added thereto, and the mixture was further heated and stirred at 145°C for 4 hours. The hydroxy value of the reaction solution was measured over time. After the hydroxy value reached the target value, the reaction was further continued under an ordinary pressure condition. The reaction solution was subjected to cloud point titration over time, and when it was confirmed that no change in the amount of cloud point titration had been observed. Then, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition A-2. The average number of functional groups of the obtained oxyalkylene structure-containing polycarbonate polyol composition A-2 was 2, and various physical properties thereof were measured by the methods described above. The measurement results are shown in Table 2-1.

[Example 2-3] Production of oxyalkylene structure-containing polycarbonate polyol composition A-3

Oxyalkylene structure-containing polycarbonate polyol composition A-3 was obtained through the same reaction as in Example 2-1 using the same apparatus as in Example 2-1 except that the starting materials were changed to 70.3 parts by mass (431 g) of the polycarbonate polyol P-2-2 obtained in Synthesis Example 2-2, and 26.0 parts by mass (160 g) for initial addition and 3.3 parts by mass (20 g) for further addition of polyoxypropylene glycol (manufactured by Allessa GmbH, "Velvetol H1000" (trade name), number-average molecular weight: approximately 1000). The average number of functional groups of the obtained oxyalkylene structure-containing polycarbonate polyol composition A-3 was 2, and various physical properties thereof were measured by the methods described above. The measurement results are shown in Table 2-1.

[Example 2-4] Production of oxyalkylene structure-containing polycarbonate polyol composition A-4

Oxyalkylene structure-containing polycarbonate polyol composition A-4 was obtained through the same reaction as in Example 2-2 using the same apparatus as in Example 2-2 except that the starting materials were changed to 44.0 parts by mass (292 g) of the polycarbonate polyol P-2-4 obtained in Synthesis Example 2-4, and 50.0 parts by mass (332 g) for initial addition and 6.0 parts by mass (40 g) for further addition of polyoxypropylene glycol (manufactured by Allessa GmbH, "Velvetol H500" (trade name), number-average molecular weight: approximately 500). The average number of functional groups of the obtained oxyalkylene structure-containing polycarbonate polyol composition A-4 was 2, and various physical properties thereof were measured by the methods described above. The measurement results are shown in Table 2-1.

[Example 2-5] Production of oxyalkylene structure-containing polycarbonate polyol composition A-5

Oxyalkylene structure-containing polycarbonate polyol composition A-5 was obtained through the same reaction

as in Example 2-1 using the same apparatus as in Example 2-1 except that the starting materials were changed to 70.3 parts by mass (431 g) of the polycarbonate polyol P-2-2 obtained in Synthesis Example 2-2, and 26.0 parts by mass (160 g) for initial addition and 3.3 parts by mass (20 g) for further addition of polytetramethylene glycol (manufactured by Mitsubishi Chemical Corp., "PTMG1000" (trade name), number-average molecular weight: approximately 1000). The average number of functional groups of the obtained oxyalkylene structure-containing polycarbonate polyol composition A-5 was 2, and various physical properties thereof were measured by the methods described above. The measurement results are shown in Table 2-1.

[Example 2-6] Production of oxyalkylene structure-containing polycarbonate polyol composition A-6

The same apparatus as in Example 2-1 was used and charged with 70.0 parts by mass (420 g) of the polycarbonate polyol P-2-3 obtained in Synthesis Example 2-3, and 25.0 parts by mass (150 g) of polyoxyethylene polyoxypropylene glycol (manufactured by ADEKA Corp., "Pluronic L-61" (trade name), number-average molecular weight: approximately 2100) as starting materials. Subsequently, in the reactor, the pressure was reduced to 0.1 kPa.s or lower using a vacuum pump, and stirring was conducted at 120°C for 10 minutes. Thereafter, nitrogen substitution was conducted. While the nitrogen flow rate was maintained at 1 L/min, the mixture was heated and stirred at an inside temperature of the reactor of approximately 145°C for 8 hours. Then, 5.0 parts by mass (30 g) of polyoxyethylene polyoxypropylene glycol ("Pluronic L-61" (trade name)) was further added thereto, and the mixture was further heated and stirred at 145°C for 4 hours. The reaction solution was subjected to cloud point titration over time, and when it was confirmed that no change in the amount of cloud point titration had been observed. Then, dibutyl phosphate was added in an amount of 1.3 times the mass ratio of titanium tetra-n-butoxide, and the mixture was heat-treated at 110°C in terms of the inside temperature of the reactor for 3 hours to obtain oxyalkylene structure-containing polycarbonate polyol composition A-6. The average number of functional groups of the obtained oxyalkylene structure-containing polycarbonate polyol composition A-6 was 2, and various physical properties thereof were measured by the methods described above. The measurement results are shown in Table 2-1.

[Example 2-7] Production of oxyalkylene structure-containing polycarbonate polyol composition A-7

Oxyalkylene structure-containing polycarbonate polyol composition A-7 was obtained through the same reaction as in Example 2-6 using the same apparatus as in Example 2-1 except that the starting materials were changed to 60.0 parts by mass (360 g) of the polycarbonate polyol P-2-2 obtained in Synthesis Example 2-2, and 30.0 parts by mass (180 g) for initial addition and 10.0 parts by mass (60 g) for further addition of polyoxyethylene polyoxypropylene glycol (manufactured by ADEKA Corp., "Pluronic L-61" (trade name), number-average molecular weight: approximately 2100). The average number of functional groups of the obtained oxyalkylene structure-containing polycarbonate polyol composition A-7 was 2, and various physical properties thereof were measured by the methods described above. The measurement results are shown in Table 2-1.

[Example 2-8] Production of oxyalkylene structure-containing polycarbonate polyol composition A-8

Oxyalkylene structure-containing polycarbonate polyol composition A-8 was obtained through the same reaction as in Example 2-6 using the same apparatus as in Example 2-1 except that the starting materials were changed to 70.0 parts by mass (420 g) of the polycarbonate polyol P-2-1 obtained in Synthesis Example 2-1, and 25.0 parts by mass (150 g) for initial addition and 5.0 parts by mass (30 g) for further addition of polyoxypropylene glycol (manufactured by Allessa GmbH, "Velvetol H2000" (trade name), number-average molecular weight: approximately 2000). The average number of functional groups of the obtained oxyalkylene structure-containing polycarbonate polyol composition A-8 was 2, and various physical properties thereof were measured by the methods described above. The measurement results are shown in Table 2-1.

[Example 2-9] Production of oxyalkylene structure-containing polycarbonate polyol composition A-9

Oxyalkylene structure-containing polycarbonate polyol composition A-9 was obtained through the same reaction as in Example 2-6 using the same apparatus as in Example 2-1 except that the starting materials were changed to 50.0 parts by mass (300 g) of the polycarbonate polyol P-2-4 obtained in Synthesis Example 2-4, and 40.0 parts by mass (240 g) for initial addition and 10.0 parts by mass (60 g) for further addition of polyoxypropylene glycol (manufactured by Allessa GmbH, "Velvetol H2000" (trade name), number-average molecular weight: approximately 2000). The average number of functional groups of the obtained oxyalkylene structure-containing polycarbonate polyol composition A-9 was 2, and various physical properties thereof were measured by the methods described above. The measurement results are shown in Table 2-1.

[Comparative Example 2-1] Production of oxyalkylene structure-containing polycarbonate polyol composition B-1

Oxyalkylene structure-containing polycarbonate polyol composition B-1 was obtained through the same reaction as in Example 2-6 using the same apparatus as in Example 2-1 except that the starting materials were changed to 70.0 parts by mass (420 g) of the polycarbonate polyol P-2-1 obtained in Synthesis Example 2-1, and 20.0 parts by mass (120 g) for initial addition and 10.0 parts by mass (60 g) for further addition of polytetramethylene glycol (manufactured by Mitsubishi Chemical Corp., "PTMG2000" (trade name), number-average molecular weight: approximately 2000); and the reaction temperature was set to 130°C. The average number of functional groups of the obtained oxyalkylene structure-containing polycarbonate polyol composition B-1 was 2, and various physical properties thereof were measured by the methods described above. The measurement results are shown in Table 2-1.

[Comparative Example 2-2] Production of oxyalkylene structure-containing polycarbonate polyol composition B-2

Oxyalkylene structure-containing polycarbonate polyol composition B-2 was obtained through the same reaction as in Example 2-6 using the same apparatus as in Example 2-1 except that the starting materials were changed to 40.0 parts by mass (240 g) of the polycarbonate polyol P-2-4 obtained in Synthesis Example 2-4, and 20.0 parts by mass (120 g) for initial addition and 40.0 parts by mass (240 g) for further addition of polyoxypropylene glycol (manufactured by Allessa GmbH, "Velvetol H2000" (trade name), number-average molecular weight: approximately 2000). The average number of functional groups of the obtained oxyalkylene structure-containing polycarbonate polyol composition B-2 was 2, and various physical properties thereof were measured by the methods described above. The measurement results are shown in Table 2-1.

[Comparative Example 2-3] Production of oxyalkylene structure-containing polycarbonate polyol composition B-3

Oxyalkylene structure-containing polycarbonate polyol composition B-3 was obtained through the same reaction as in Comparative Example 2-1 using the same apparatus as in Example 2-1 except that the starting materials were changed to 70.0 parts by mass (420 g) of polycarbonate diol (manufactured by Asahi Kasei Corp., "DURANOL T6002" (trade name), number-average molecular weight: approximately 2000), and 10.0 parts by mass (60 g) for initial addition and 20.0 parts by mass (120 g) for further addition of polyoxypropylene glycol (manufactured by Allessa GmbH, "Velvetol H2000" (trade name), number-average molecular weight: approximately 2000). The average number of functional groups of the obtained oxyalkylene structure-containing polycarbonate polyol composition B-3 was 2, and various physical properties thereof were measured by the methods described above. The measurement results are shown in Table 2-1.

[Table 2-1]

| | Example 2-1 | Example 2-2 | Example 2-3 | Example 2-4 | Example 2-5 | Example 2-6 | Example 2-7 | Example 2-8 | Example 2-9 | Comparative Example 2-1 | Comparative Example 2-2 | Comparative Example 2-3 |
|---|---|---|---|---|---|---|---|---|---|---|---|---|
| The number of carbon atoms of Ra in (A) | 3 | 3 | 3 | 3 | 4 | 2, 3 | 2, 3 | 3 | 3 | 4 | 3 | 3 |
| The number of carbon atoms of Rb in (B) | 5 | 3 | 3 | 4 | 3 | 4 | 4 | 5 | 4 | 5 | 4 | 6 |
| The number of carbon atoms of Rc in (C) | 6 | 4 | 4 | 6 | 4 | 6 | 6 | 6 | 6 | 6 | 6 | - |
| Rb/Rc molar ratio | 50/50 | 98/2 | 99/1 | 68/32 | 99/1 | 50/50 | 50/50 | 50/50 | 70/30 | 50/50 | 70/30 | 100/0 |
| Number-average molecular weight of polyvalent hydroxy compound having oxyalkylene structure | 250 | 250 | 1000 | 500 | 1000 | 2100 | 2100 | 2000 | 2000 | 2000 | 2000 | 2000 |
| Compound (D) content | 0.3% | 0.5% | 3.0% | 9.0% | 5.0% | 2.4% | 2.2% | 2.1% | 6.0% | 6.2% | 12% | 16% |
| D/A | 1.0% | 1.7% | 10.0% | 15.0% | 16.7% | 8.0% | 5.5% | 7.0% | 12.0% | 20.7% | 20.0% | 53.3% |
| Hydroxy value | 55.3 | 55.7 | 54.6 | 55.1 | 53.9 | 55.2 | 55.8 | 56.3 | 52.7 | 55.3 | 54.9 | 52.6 |

(continued)

| | Example 2-1 | Example 2-2 | Example 2-3 | Example 2-4 | Example 2-5 | Example 2-6 | Example 2-7 | Example 2-8 | Example 2-9 | Comparative Example 2-1 | Comparative Example 2-2 | Comparative Example 2-3 |
|---|---|---|---|---|---|---|---|---|---|---|---|---|
| Number-average molecular weight (Mn) | 2029 | 2014 | 2055 | 2036 | 2082 | 2033 | 2011 | 1993 | 2129 | 2029 | 2044 | 2133 |
| Long-term quality stability | ○ | ○ | ○ | ○ | Δ | ○ | ○ | ○ | ○ | × | Δ | × |

[Application Example 2-1] Synthesis of polyurethane film PU-1

In a 500 mL separable flask in which a thermocouple and a condenser were installed, 38 g of the oxyalkylene structure-containing polycarbonate polyol composition A-1 produced in Example 2-1, 224 g of dimethylformamide (hereinafter, also abbreviated to "DMF"), and 0.26 g of a 1% solution of dibutyltin dilaurate in toluene (50 ppm based on the total mass of MDI and the oxyalkylene structure-containing polycarbonate polyol composition) were placed, and warmed in an oil bath of 40°C. While the solution in the flask was stirred at 100 rpm under a nitrogen atmosphere in the flask, 14.8 g of MDI (3.09 times [mol] based on OH [mol] of the polycarbonate polyol composition) was added dropwise thereto. The solution in the flask was further stirred for approximately 1.5 hours. The consumption of a theoretical amount was confirmed by the analysis of an isocyanate group concentration to obtain a prepolymer. Subsequently, a necessary amount (3.2 g) of 1,4-butanediol (1,4-BD) calculated from residual isocyanate was added in divided portions into the flask. The solution in the flask was stirred for approximately 1 hour. Then, approximately 1 g of ethanol was added thereto, and the solution in the flask was further stirred for 30 minutes to obtain a solution of polyurethane having a number-average molecular weight of 74000.

The obtained polyurethane was added dropwise to the upper part of a glass plate (JIS R3202, 2 mm × 100 mm × 150 mm), which was then coated using a 0.8 mm thick applicator such that a dry film thickness was 50 to 150 μm. The coating was dried for 2 hours on a hot plate having a surface temperature of 60°C and subsequently for 12 hours in an oven of 80°C. The coating was further left standing under constant temperature and humidity conditions of 23°C and 55% RH for 12 hours or longer to obtain polyurethane film PU-1. The obtained polyurethane film PU-1 was subjected to the evaluation of each physical property by the method described above. The evaluation results are shown in Table 2-2.

[Application Examples 2-2 to 2-9]

Polyurethane films PU-2 to PU-9 were obtained through reaction under the same conditions as in Application Example 2-1 except that in the production of the polyurethane film of Application Example 2-1, the oxyalkylene structure-containing polycarbonate polyol composition used was changed to the polycarbonate polyol compositions A-2 to A-9 produced in Examples 2-2 to 2-9. The obtained polyurethane films PU-2 to PU-9 were subjected to the evaluation of each physical property by the method described above. The evaluation results are shown in Table 2-2.

[Application Comparative Examples 2-1 to 2-5]

Polyurethane films PU-B1 to PU-B3 were obtained through reaction under the same conditions as in Application Example 1 except that in the production of the polyurethane film of Application Example 2-1, the oxyalkylene structure-containing polycarbonate polyol composition used was changed to the oxyalkylene structure-containing polycarbonate polyol compositions B-1 to B-3 produced in Comparative Examples 2-1 to 2-3. The obtained polyurethane films PU-B1 to PU-B3 were subjected to the evaluation of each physical property by the method described above. The evaluation results are shown in Table 2-2.

[Table 2-2]

| | Application Example 2-1 | Application Example 2-2 | Application Example 2-3 | Application Example 2-4 | Application Example 2-5 | Application Example 2-6 | Application Example 2-7 | Application Example 2-8 | Application Example 2-9 | Application Comparative Example 2-1 | Application Comparative Example 2-2 | Application Comparative Example 2-3 |
|---|---|---|---|---|---|---|---|---|---|---|---|---|
| Type of oxyalkylene structure-containing polycarbonate polyol composition | A-5 | A-6 | A-7 | A-8 | A-9 | A-1 | A-2 | A-3 | A-4 | B-1 | B-2 | B-3 |
| 100% stress (MPa)/23°C | 4.9 | 4.5 | 4.2 | 3.8 | 4.7 | 4.1 | 3.5 | 4.3 | 4.1 | 4.6 | 4.1 | 4.4 |
| 100% stress (MPa)/- 20°C | 16.2 | 22.1 | 15.2 | 9.2 | 18.1 | 13.7 | 10.1 | 12.5 | 12.7 | 15.1 | 9.1 | 19.2 |
| Moist heat resistance test - retention | 78% | 78% | 81% | 60% | 72% | 83% | 72% | 88% | 68% | 83% | 50% | 72% |
| Prepolymer viscosity | ○ | ○ | ○ | ○ | ○ | ○ | ○ | ○ | ○ | ○ | ○ | × |
| Acid resistance | ○ | ○ | ○ | ○ | ○ | ○ | ○ | ○ | ○ | ○ | Δ | Δ |
| Coatability | ○ | ○ | ○ | ○ | ○ | ○ | ○ | ○ | ○ | × | ○ | × |

The present application is based on Japanese Patent Application No. 2022-211751 filed on December 28, 2022, the contents of which are incorporated herein by reference.

## Industrial Applicability

The oxyalkylene structure-containing polycarbonate polyol composition of the present invention is capable of producing, for example, high-solid coating materials or polyurethane, and is useful as a starting material of coating materials or polycarbonate-based polyurethane. Polyurethane produced using the oxyalkylene structure-containing polycarbonate polyol composition of the present invention tends to have stability of color tone, has characteristics excellent in low-temperature flexibility and durability, and can be suitably used in a wide range of fields such as elastic fibers, synthetic or artificial leather, coating materials, and high-performance elastomers.

## Claims

1. An oxyalkylene structure-containing polycarbonate polyol composition comprising a structural unit represented by the following formula (A), a structural unit represented by the following formula (B), and a structural unit represented by the following formula (C), wherein

   the oxyalkylene structure-containing polycarbonate polyol composition comprises 0.01 to 10% by mass of a compound represented by the following formula (D), and
   a mass proportion ((D)/(A)) of the compound represented by the following formula (D) to the structural unit represented by the following formula (A) is 0.01 to 20%:

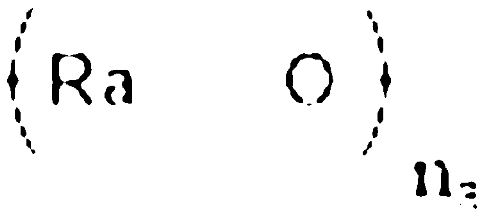

• • • (A)

wherein $R_a$ represents a divalent hydrocarbon group having 2 to 20 carbon atoms, the hydrocarbon group optionally having a hetero atom, $n_a$ is an integer of 2 to 40, and $R_a$ in plural are the same as or different from each other,

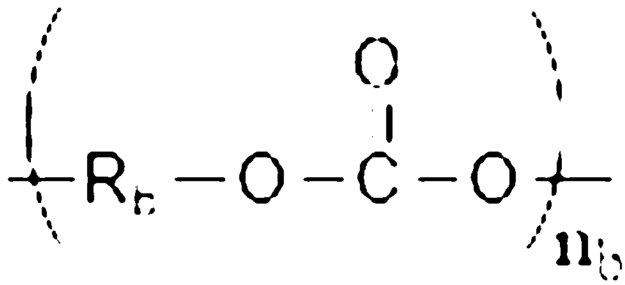

• • • (B)

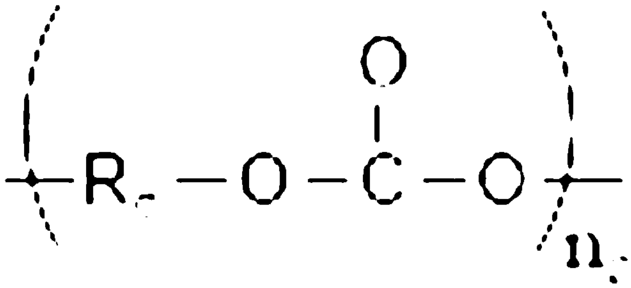

• • • (C)

wherein in the formula (B), $R_b$ represents a divalent hydrocarbon group having 2 to 20 carbon atoms, $n_b$ is any integer, and $R_b$ in plural are the same as or different from each other; and in the formula (C), $R_c$ is different from $R_b$ and represents a divalent hydrocarbon group having 3 to 20 carbon atoms or represents a divalent hydrocarbon group having 3 to 20 carbon atoms and having an alicyclic structure or a heterocyclic structure, the hydrocarbon group optionally having a hetero atom, $n_c$ is an integer of 0 to 50, and $R_c$ in plural are the same as or different from each other,

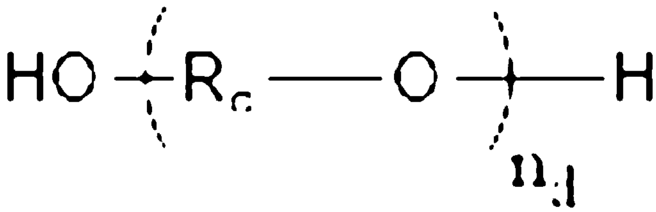

• • • (D)

wherein $R_d$ represents a divalent hydrocarbon group having 2 to 20 carbon atoms, the hydrocarbon group optionally having a hetero atom, $n_d$ is an integer of 2 to 40, and $R_d$ in plural are the same as or different from each other.

**2.** The oxyalkylene structure-containing polycarbonate polyol composition according to claim 1, wherein the structural unit represented by the formula (A) comprises a structural unit comprising at least a divalent hydrocarbon group having 3 carbon atoms.

**3.** The oxyalkylene structure-containing polycarbonate polyol composition according to claim 1, wherein a molar ratio of $R_b/R_c$ is 1/99 to 99/1.

**4.** The oxyalkylene structure-containing polycarbonate polyol composition according to claim 1 or 2, wherein a number-average molecular weight of a polyvalent hydroxy compound having an oxyalkylene structure obtained by hydrolysis of the oxyalkylene structure-containing polycarbonate polyol composition is 200 to 2,500.

**5.** The oxyalkylene structure-containing polycarbonate polyol composition according to claim 1 or 2, wherein $R_a$ is a divalent linear aliphatic hydrocarbon group having 3 carbon atoms.

**6.** The oxyalkylene structure-containing polycarbonate polyol composition according to claim 1 or 2, wherein a number-average molecular weight of the oxyalkylene structure-containing polycarbonate polyol composition is 200 to 5,000.

**7.** An oxyalkylene structure-containing polycarbonate polyol composition comprising an oxyalkylene structure-containing polycarbonate polyol comprising a structural unit represented by the following formula (1) and a structural unit represented by the following formula (2), wherein the oxyalkylene structure-containing polycarbonate polyol composition has a molecular weight distribution (Mw/Mn) of 1.60 to 2.70 and a number-average molecular weight of 850 to 10,000:

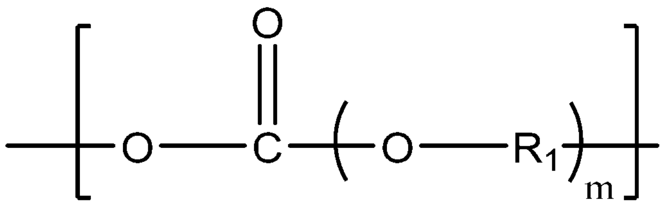

・・・(1)

wherein $R_1$ is a divalent linear, branched or cyclic aliphatic hydrocarbon group, or aromatic hydrocarbon group having 2 or more and 20 or less carbon atoms, $R_1$ in plural are the same as or different from each other, and m is any integer,

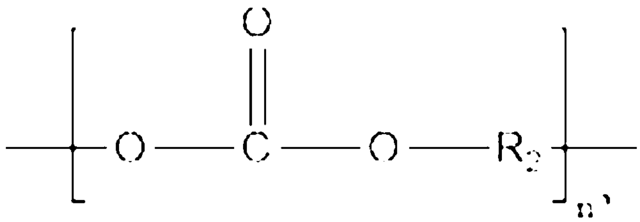

・・・(2)

wherein $R_2$ is a divalent linear, branched or cyclic aliphatic hydrocarbon group, or aromatic hydrocarbon group having 2 or more and 20 or less carbon atoms, the hydrocarbon group optionally having a hetero atom, $R_2$ in plural are the same as or different from each other, and n2 is an integer of 0 to 50.

**8.** The oxyalkylene structure-containing polycarbonate polyol composition according to claim 7, wherein a mass proportion of a structural unit represented by the following formula (3) in the oxyalkylene structure-containing polycarbonate polyol composition is 0.01% by mass or more and 5.0% by mass or less:

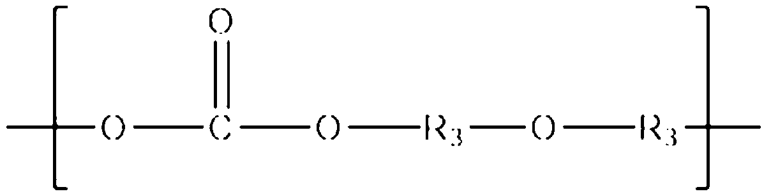

・・・(3)

wherein $R_3$ is a divalent linear hydrocarbon group having 2 carbon atoms.

**9.** The oxyalkylene structure-containing polycarbonate polyol composition according to claim 7 or 8, wherein a number-average molecular weight of a polyvalent hydroxy compound having an oxyalkylene structure obtained by hydrolysis of the oxyalkylene structure-containing polycarbonate polyol composition is 200 to 2000.

**10.** The oxyalkylene structure-containing polycarbonate polyol composition according to claim 7 or 8, wherein a mass proportion of the structural unit represented by the formula (2) in the oxyalkylene structure-containing polycarbonate polyol composition is 44% by mass or more and 90% by mass or less.

**11.** The oxyalkylene structure-containing polycarbonate polyol composition according to claim 7 or 8, wherein a ratio (Mn1/Mn0) of number-average molecular weight Mn1 of a polyvalent hydroxy compound having an oxyalkylene structure obtained by hydrolysis of the oxyalkylene structure-containing polycarbonate polyol composition to number-average molecular weight Mn0 of the oxyalkylene structure-containing polycarbonate polyol composition is 0.03 to 1.0.

**12.** The oxyalkylene structure-containing polycarbonate polyol composition according to claim 7 or 8, wherein a polyvalent hydroxy compound (except for a polyvalent hydroxy compound having an oxyalkylene structure) obtained by hydrolysis of the oxyalkylene structure-containing polycarbonate polyol comprises at least two or more polyvalent hydroxy compounds selected from the group consisting of divalent linear and branched aliphatic hydrocarbon groups having 2 or more and 15 or less carbon atoms.

**13.** The oxyalkylene structure-containing polycarbonate polyol composition according to claim 7 or 8, wherein $R_1$ is a linear aliphatic hydrocarbon group having 3 or more and 6 or less carbon atoms.

**14.** The oxyalkylene structure-containing polycarbonate polyol composition according to claim 7 or 8, wherein an average number of carbon atoms in a polyvalent hydroxy compound (except for a polyvalent hydroxy compound having an oxyalkylene structure) obtained by hydrolysis of the oxyalkylene structure-containing polycarbonate polyol composition is 2.0 or more and 15.0 or less.

**15.** The oxyalkylene structure-containing polycarbonate polyol composition according to claim 7 or 8, wherein starting materials of the structural unit represented by the formula (1) and the structural unit represented by the formula (2) are bio-based materials.

**16.** The oxyalkylene structure-containing polycarbonate polyol composition according to claim 7 or 8, wherein the oxyalkylene structure-containing polycarbonate polyol composition comprises a polyvalent hydroxy compound having an oxyalkylene structure obtained by hydrolysis, and/or a polycarbonate polyol composed of the structural unit represented by the formula (2).

**17.** The oxyalkylene structure-containing polycarbonate polyol composition according to claim 7 or 8, wherein a ratio of an integral value (B) of signals at 3.3 to 3.6 ppm to an integral value (A) of signals at 3.90 to 4.45 ppm (integral value (B)/integral value (A)) in $^1$H-NMR measured using deuterated chloroform as a solvent and tetramethylsilane as a reference substance is 0.3 to 2.2, and the oxyalkylene structure-containing polycarbonate polyol composition is liquid at ordinary temperature.

**18.** A polyurethane obtained using the oxyalkylene structure-containing polycarbonate polyol composition according to claim 1 or 7.

**19.** An aqueous polyurethane obtained using the oxyalkylene structure-containing polycarbonate polyol composition according to claim 1 or 7.

**20.** A synthetic leather comprising the polyurethane according to claim 18.

**21.** An artificial leather comprising the polyurethane according to claim 18.

**22.** A synthetic leather comprising the aqueous polyurethane according to claim 19.

**23.** An artificial leather comprising the aqueous polyurethane according to claim 19.

**INTERNATIONAL SEARCH REPORT**

International application No.
**PCT/JP2023/047292**

**A. CLASSIFICATION OF SUBJECT MATTER**

***C08G 64/02***(2006.01)i; ***C08G 18/00***(2006.01)i; ***C08G 18/44***(2006.01)i; ***D06N 3/14***(2006.01)i
FI: C08G64/02; C08G18/00 C; C08G18/44; D06N3/14 101

According to International Patent Classification (IPC) or to both national classification and IPC

**B. FIELDS SEARCHED**

Minimum documentation searched (classification system followed by classification symbols)

C08G64/02; C08G18/00; C08G18/44; D06N3/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2021/045196 A1 (ASAHI KASEI KABUSHIKI KAISHA) 11 March 2021 (2021-03-11) claims, polymerization examples | 1-6, 18-23 |
| X | JP 2022-166839 A (ASAHI KASEI KABUSHIKI KAISHA) 02 November 2022 (2022-11-02) claims, examples | 1-6, 18-23 |
| X | JP 2022-166840 A (ASAHI KASEI KABUSHIKI KAISHA) 02 November 2022 (2022-11-02) claims, examples, comparative examples | 1-6, 18-23 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/047292**

**Box No. III Observations where unity of invention is lacking (Continuation of item 3 of first sheet)**

This International Searching Authority found multiple inventions in this international application, as follows:

The claims are classified into the following two inventions.

(Invention 1) Claims 1-6 and 18-23 (provided that claims 18-23 are the parts referring to claim 1)

Document 1 (the claims and polymerization examples) indicates, for instance in polymerization example 19, that 423 g (4.8 mol) of ethylene carbonate, 250 g (2.4 mol) of 1,5-pentanediol and 284 g (2.4 mol) of 1,6-hexanediol were used to obtain a polycarbonate diol (PC1), 300 g of PC1 and 100 g of polyoxypropylene glycol (number average molecular weight: approximately 2,000) were reacted at 145°C for 10 hours to produce a polycarbonate polyol.

In the above example of document 1, the mixing ratio of the polyoxypropylene glycol relative to PC1 is not excessive and the reaction temperature and reaction time are equivalent to those of example 2 of the present application, and thus it is highly likely that the polyoxypropylene glycol is sufficiently reacted and the residual amount of the polyoxypropylene glycol in the product polycarbonate polyol is within the numerical range specified in claim 1 of the present application.

Similarly, it is also highly likely that the composition of example 1 of document 2 and the composition of comparative example 1 of document 3 satisfy the definition in claim 1 of the present application.

Accordingly, claims 1-2 lack novelty in light of documents 1-3 and thus do not have a special technical feature. The inventions in claims 1-2 are therefore classified as invention 1.

Claims 3-6 are dependent on claim 1 and are inventively related to claim 1, and thus are classified as invention 1.

Further, the parts of claims 18-23 referring to claim 1 are also classified as invention 1.

(Invention 2) Claims 7-23 (provided that claims 18-23 are the parts referring to claim 7)

Claims 7-17 and claim 1 share the technical feature of an invention pertaining to a polycarbonate polyol composition (note that m in formula (1) may be 1 and n2 in formula (2) may be 0). However, the feature is disclosed in documents 1-3 and thus is not considered to be a special technical feature.

In addition, claims 7-17 are not substantially identical to or similarly closely related to any of the claims classified as invention 1.

Accordingly, claims 7-17 cannot be classified as invention 1, and thus are classified as invention 2.

Further, the parts of claims 18-23 referring to claim 7 are classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-6,18-23**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2023/047292**

| Patent document cited in search report | Publication date (day/month/year) | Patent family member(s) | Publication date (day/month/year) |
|---|---|---|---|
| WO 2021/045196 A1 | 11 March 2021 | US 2022/0332883 A1<br>claims, polymerization examples<br>EP 4026863 A1<br>CN 114286830 A | |
| JP 2022-166839 A | 02 November 2022 | EP 4079782 A1<br>claims, examples<br>CN 115215985 A | |
| JP 2022-166840 A | 02 November 2022 | EP 4079779 A1<br>claims, examples, comparative examples<br>CN 115215984 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002256069 A
- JP 2022120570 A
- JP 3874664 B
- JP 2017071685 A
- JP 2022211751 A


### Non-patent literature cited in the description


- Case Studies of Polyurethane Material Selection, Structure Control and Modification. Technical Information Institute Co., Ltd, December 2014, 51-62